(19) **Europäisches Patentamt / European Patent Office / Office européen des brevets**

(11) **EP 1 931 148 B1**

(12) **EUROPEAN PATENT SPECIFICATION**

(45) Date of publication and mention
of the grant of the patent:
**30.11.2011  Bulletin 2011/48**

(51) Int Cl.:
**H04N 7/26** (2006.01)

(21) Application number: **06025343.2**

(22) Date of filing: **07.12.2006**

(54) **Transcoding node and method for multiple description transcoding**

Transcodierungsknoten und Verfahren zur Mehrfachbeschreibungstranscodierung

Noeud de transcodage et procédé de transcodage par description multiple

(84) Designated Contracting States:
**DE GB**

(43) Date of publication of application:
**11.06.2008  Bulletin 2008/24**

(73) Proprietor: **NTT DoCoMo, Inc.**
**Chiyoda-Ku**
**Tokyo 100-6150 (JP)**

(72) Inventors:
• **Steinbach, Eckehard**
**82140 Olching (DE)**
• **El Essaili, Ali**
**80937 Munich (DE)**
• **Kellerer, Wolfgang**
**82256 Fuerstenfeldbruck (DE)**
• **Khan, Shoaib**
**80937 Munich (DE)**

(74) Representative: **Zinkler, Franz et al**
**Schoppe, Zimmermann, Stöckeler & Zinkler**
**Patentanwälte**
**Postfach 246**
**82043 Pullach bei München (DE)**

(56) References cited:
**US-A1- 2005 210 356**

• CHOU PHILIP ET AL.: "Layered Multiple Description Coding" PACKET VIDEO WORKSHOP, [Online] April 2003 (2003-04), XP002433338 Nantes, France Retrieved from the Internet: URL:research.microsoft.com/~padmanab/paper s/pv2003.pdf> [retrieved on 2007-05-11]

• MOHR A E ET AL: "Approximately optimal assignment for unequal loss protection" IMAGE PROCESSING, 2000. PROCEEDINGS. 2000 INTERNATIONAL CONFERENCE ON SEPTEMBER 10-13, 2000, PISCATAWAY, NJ, USA,IEEE, vol. 1, 10 September 2000 (2000-09-10), pages 367-370, XP010530627 ISBN: 0-7803-6297-7

• HUO ET AL: "Robust real-time transmission of scalable multimedia for heterogeneous client bandwidths" REAL-TIME IMAGING, ACADEMIC PRESS LIMITED, GB, vol. 11, no. 4, August 2005 (2005-08), pages 300-309, XP005002725 ISSN: 1077-2014

• LONGSHE HUO ET AL: "FEC-Based Multiple Description Coding for Heterogeneous Client Bandwidths" IMAGE AND GRAPHICS, 2004. PROCEEDINGS. THIRD INTERNATIONAL CONFERENCE ON HONG KONG, CHINA 18-20 DEC. 2004, PISCATAWAY, NJ, USA,IEEE, 18 December 2004 (2004-12-18), pages 329-332, XP010779057 ISBN: 0-7695-2244-0

• ROHIT PURI ET AL: "An Integrated Source Transcoding and Congestion Control Paradigm for Video Streaming in the Internet" IEEE TRANSACTIONS ON MULTIMEDIA, IEEE SERVICE CENTER, PISCATAWAY, NJ, US, vol. 3, no. 1, March 2001 (2001-03), XP011036233 ISSN: 1520-9210

• ZHAO D Y ET AL: "Multiple-description vector quantization using translated lattices with local optimization" GLOBAL TELECOMMUNICATIONS CONFERENCE, 2004. GLOBECOM '04. IEEE DALLAS, TX, USA 29 NOV.-3 DEC., 2004, PISCATAWAY, NJ, USA,IEEE, 29 November 2004 (2004-11-29), pages 41-45, XP010758850 ISBN: 0-7803-8794-5

• **KOULGI P ET AL: "Multiple description quantization by deterministic annealing" IEEE TRANSACTIONS ON INFORMATION THEORY, IEEE SERVICE CENTER, PISCATAWAY, NJ, US, vol. 49, no. 8, August 2003 (2003-08), pages 2067-2075, XP011098672 ISSN: 0018-9448**

**Description**

The present invention relates to the field of communication networks, and in particular to media streaming to wireless devices.

Video transcoding, the process of converting a video from a format to another, has been thoroughly addressed to cope with the heterogeneity of the links between a transmitter and receiver. To match the different channel requirements, transcoding is needed at some intermediate nodes. Standard transcoding (MPEG2 to H.264, H.263 to H.264...), resolution scaling (spatial transcoding), bit rate conversion (quality transcoding), and frame rate conversion (temporal transcoding) are some examples of video transcoding mechanisms, as described by Yun Xin et al., "Digital Video Transcoding," Proceedings of the IEEE, vol. 93, no.1, Jan. 2005 in the following referred to as [1].

On the other hand, Multiple Description (MD) video coding can provide error resilience when combined with path diversity, as described by J.G Apostolopoulos, " Reliable Video Communication over Lossy Packet Networks using Multiple State Encoding and Path diversity, " Proc. Visual Communications and Image Processing, pp. 392-409, Jan. 2001, in the following referred to as [2]. The video source is decomposed into multiple descriptions, which are transmitted over independent paths. Each description can be decoded independently at the receiver side. The reception quality is determined by the number of received descriptions. MD video coding can be achieved in different ways as described by V. K Goyal, "Multiple Description Coding: Compression meets the network", IEEE Signal Processing Mag., vol. 18, no.5 pp. 74-93, Sept. 2001, in the following referred to as [3]. Temporal downsampling (e.g., even/odd separation of frames [2], S. Wenger, "Video Redundancy Coding in H.263+," presented at the Audio-Visual Services over Packet Networks Conf., Aberdeen, U.K., 1997, further referred to as [4]) partitions the source into different sets and then encodes each set independently. Spatial downsampling as described by W. Jiang, A. Ortega, "Multiple Description Coding via Polyphase Transform and Selective Quantization," Proc. of VCIP '99, San Jose, USA, Jan. 1999, in the following referred to as [5], decomposes the source in the pixel or frequency domain into different sets as well. Some redundancy or correlation, e.g., Y. Wang *et al.*, "Multiple Description Coding using Pairwise Correlating Transforms," IEEE Trans. Image Proc., vol. 10, pp. 351-366, March 2001, further referred to as [6], and K. Matty and L. Kondi, "Balanced Multiple Description Video Coding Using Optimal Partitioning of the DCT Coefficients," IEEE ICASSP 2004,further referred to as [7], is then introduced among the different streams. Channel coding as described by R. Puri and K. Ramchandran, "Multiple Description Source Coding through Forward Error Correction Codes," in Proc. 33rd Asilomar Conf. Signals, System Comp., vol. 1, 1999, pp. 342-346, in the following as [8], can be also used to provide unequal error protection among the different descriptions.

Meanwhile, there is no relevant work on Multiple Description Video Transcoding (MDVT). By MD video transcoding it is meant the converting of a single description (SD) encoded video into MD video streams without going through a decoder-encoder implementation.

US 2005/0210356 A1 describes a layered multiple description coding (LMDC) where a LMDC encoder is to transmit a source data to a first LMDC decoder and a second LMDC decoder over an unreliable communication network. The path between the LMDC encoder and the first LMDC decoder is of lower bandwidth, whereas the path between LMDC encoder and the second LMDC decoder is of higher bandwidth. Accordingly, the LMDC encoder sends only a base layer to the first LMDC decoder and the base layer together with an enhancement layer to the second LMDC decoder. The first LMDC decoder recovers the source data based on the base layer received over the lower bandwidth communication path and the second LMDC decoder recovers the source data based on the base layer and the enhancement layer, both received over the higher bandwidth communication path. The layered multiple description decoders may reside on a same computer, particularly, for example, if separate communication paths over the network still exist.

The publication "Multi-Description Vector Quantization using Translated Lattices with Local Optimization" by Zhao et. al. describes a multiple-description source encoding based on vector quantization using translated lattices as single-description code books and local optimization of combined-description code books, assuming that channel statistics are available at the encoder.

The publication "Multiple Description Quantization by Deterministic Annealing" by Koulgi et al. describes a multiple description source encoding based on vector quantization using deterministic annealing to be independent of an initialization.

Chih-Ming Chen et al. "Channel-Aware Robust Video Streaming over Wireless LANs Using Multiple-Description FGS Coding", 2005-06-13, XP010888120, describes a 3-tier video streaming with two diverse wireless LAN links between a media gateway and a mobile terminal, wherein a multiple description scalar quantization for fine granularity scalability (MDSQ-FGS) based on multiple description coding (MDC) is used to transcode a video stream into two streams sent over the two diverse wireless LAN links.

Joohee Kim, et al. "Network-Adaptive Video Streaming Using Multiple Description Coding and Path Diversity", 2003-07-06, XP010650640, describes a TCP-friendly rate allocation algorithm for multiple description coding combined with past diversity. A 3-D SPIHT-based multiple description coding is used to generate two independent groups or substreams, wherein each substream is independently encoded using the 3-D SPIHT algorithm, and afterwards is independently protected with an FEC-based unequal error protection algorithm. Each substream is sent via a different sender, wherein each sender independently runs a rate allocation algorithm to get its optimal number of packets to transmit for a GOP period. The rate allocation algorithm comprises trying all possible combinations of packet numbers to be sent via the two different substreams that satisfy certain constraints including a certain number of packets to be transmitted via both senders and the available bandwidths of the two senders.

It is the object of the present invention to provide a transcoding node and a method for multiple description transcoding more efficiently.

It is a further object of the present invention to provide an efficient in-network multiple description media transcoding solution.

The present invention is based on the finding that a better transmission quality, for example, for user's may be obtained, when exploiting the path diversity when media streams are sent to a terminal, e.g. to a detranscoding node, over different transmission paths at the same time, and furthermore, when the path characteristics, like transmission rate and packet loss of the different transmission paths are taken into consideration when determining the multiple descriptions.

In embodiments of the present invention, the transcoding is done, for example, at a network node such as a radio network controller or a wired-wireless interface and the resulting bit streams are transmitted over different paths, e.g. over a first path using an UMTS interface (Universal Mobile Telecommunication System) and over a second path using a WLAN interface (Wireless Local Area Network). Such an unbalanced scheme provides the flexibility of supporting clients with different bit rates or error probabilities. At the receiver terminal, if both descriptions are received they are combined, otherwise the one received description can be directly decoded.

Embodiments of the present invention perform multiple description video transcoding (MDVT) based on forward error correction (FEC) combined with path diversity.

At the transcoding node, each received Group of Pictures (GOP) is processed independently to generate two descriptions which are transmitted over two separate paths. Given the paths' (Packet Loss, Bit Rate) profiles; the overall distortion is minimized by searching for the optimal number of packets to be transmitted within one description across each path as well as the contribution of each frame from the GOP to each of these packets.

FEC has already been studied for MD video coding, e.g. as described by [8] and by G. Wang et al., "FEC-based Scalable Multiple Description Coding for Overlay Network Streaming," CCNC 2005, further referred to as [9]). In [8], a progressive video stream is partitioned into different sections and then error protection is distributed across the different sections to produce N balanced descriptions. To determine the optimal FEC allocation, the rate boundaries of different sections are being altered during the optimization to maximize the rate-distortion performance. If the rate boundaries are fixed by the source the same approach of generating multiple descriptions can still be applied but will result in a suboptimal solution. In addition, the generated descriptions are not specifically optimized for a two-path transmission. In [9], the source applies FEC and determines the optimal number of descriptions for each connected node. Intermediate nodes are deployed to truncate the encoded scalable stream so that it matches with the end users' rate and loss characteristics. After truncation the intermediate node repacketizes the remaining source bitstream and an appropriate portion of the FEC information. While performing this operation at an intermediate node reduces performance compared to traditional FEC-based MDC at the sender it allows us to serve a large number of heterogeneous receivers without opening separate unicast connections from the sender to every receiver.

To overcome these limitations, embodiments of the invention provide a solution, which is completely independent of the video source and can be applied to a hybrid, scalable or any other dependent, i.e. prioritized video stream. The transcoding node, for example, an intermediate node, determines the optimal amount of FEC and number of packets to be transmitted, depending on the available loss and rate characteristics. Furthermore, path diversity is exploited by sending two descriptions and searching for the number of packets to be transmitted within each description. By constraining over the packet length, the packetization problem is solved and the fixed packet length over the whole video stream is guaranteed.

The multiple description coding and transcoding described in the following, provides a means for the transmission of media streams over multiple paths to a user terminal as it provides error resilience. Usually, multiple description media coding is done at the media source, i.e. the media server. Embodiments of the present invention provide a method and a system to perform multiple description media transcoding from single description decoded streams, e.g. in the network.

This is advantageous when the server does not support multiple description coding or simply if the media server belongs to another domain, which is not controlled by the operator delivering the media stream to the user.

Furthermore the present invention targets multi path transmission, for which multiple description coding provides an error resilient means to send the media stream over multiple paths. Such a situation is expected for future network environments where operators offer several different transmission paths to the user such as WLAN, UMTS, WIMAX. The advantage is that the operator can make use of this path diversity to better use its resources and to provide a better quality of service to the user.

Preferred embodiments of the present invention are described in detail with respect to the following Figures.

Fig. 1A shows a schematic description of a complete path between a source encoder and a source decoder including an embodiment of a transcoding node and a detranscoding node;

Fig. 1B shows block diagram of an embodiment of a transcoding node;

Fig. 1C shows a block diagram of an example of a detranscoding node;

Fig. 1D shows a flow chart depicting a first embodiment of a method for determining the transcoding parameters;

Fig. 1E shows a flow chart depicting a second embodiment of a method for determining the transcoding parameters;

Fig 1F shows a flow chart depicting an embodiment of a method for determining the transcoding parameters for a multi-user scenario;

Fig. 2 shows an embodiment of the partitioning of each frame of a Group of Pictures into sections of length 1 and protection with Reed Solomon codes;

Fig. 3 shows an exemplary distortion of a rate plot determined based on the iterative Lagrange method.

Fig. 4 shows a peak signal to noise ratio for a Group of Pictures for different packet loss rates and redundancy values for an embodiment of the multiple description video transcoding;

Fig. 5 shows a diagram plotting the optimality of the iterative Lagrange method for a packet length of 512 bytes in dependence of the packet loss and the redundancy for an embodiment of the multiple description video transcoding;

Fig. 6 shows an exemplary distortion of a rate curve for a P-frame;

Fig. 7 shows a diagram of a distortion of a packet length plot for a Greedy algorithm;

Fig. 8 shows a peak signal to noise ratio for a Group of Pictures for different redundancy values and for different packet loss ratios using a Lagrange and a Greedy algorithm;

Fig. 9 shows a diagram plotting the peak signal to noise ratio for a Group of Pictures for high packet loss ratios using a Lagrange and a Greedy algorithm;

Fig. 10 shows a diagram plotting the peak signal to noise ratio for a Group of Pictures for an IPP... frame sequence;

Fig. 11A shows a diagram depicting the frame dropping gain for a multiple description video transcoding Greedy allocation algorithm with a IPP... frame sequence;

Fig. 11B shows a diagram plotting the peak signal to noise ratio of an embodiment of a multiple description video transcoding for a varying sample space and for different packet loss rates;

Fig. 12A shows a diagram plotting a peak signal to noise ratio for a Group of Pictures comparing the original Greedy approach and the dynamic approach with frame dropping;

Fig. 12B shows a diagram comparing the peak signal to noise ratio of the original Greedy approach and the dynamic approach with frame dropping for a Group of Pictures of 16 frames of IPP structure;

Fig. 12C shows a diagram comparing the peak signal to noise ratio of the original Greedy approach and the dynamic approach with frame dropping for a Group of Pictures of 8 frames of IPP structure;

Fig. 13 shows a diagram of the peak signal to noise ratio for a Group of Pictures for equal and unequal error protection for the multiple description video transcoding;

Figs. 14A - 14D show different scenarios for multiple description video transcoding optimization: Fig. 14A for a joint optimization, Fig. 14B for a separate optimization, Fig. 14C for a scenario where two paths are available and Fig 14D, for a scenario where one path is available;

Fig. 15A shows an exemplary peak signal to noise ratio for a Group of Pictures, where only one path is available, comparing the results for joint and separate optimization;

Fig. 15B shows a comparison of the peak signal to noise ratio for a Group of Pictures, where both paths are available (central distortion), for joint and separate optimization;

Fig. 16A shows the peak signal to noise ratio for a Group of Pictures for a trade-off solution between central and side reconstruction, when one path is available;

Fig. 16B shows the peak signal to noise ratio for a Group of Pictures for a trade-off solution, when both paths are available;

Fig. 17 shows a schematic for a conventional approach for transmitting data over two unbalances paths using odd/even frame splitting followed by a separate single description video transcoding;

Fig. 18 shows a schematic of an embodiment, where both descriptions are optimized over a common virtual channel;

Fig. 19 shows a diagram plotting the peak signal to noise ratio for a Group of Pictures of unbalanced paths using a Container test sequence;

Fig. 20 shows a diagram plotting the peak signal to noise ratio of a Group of Pictures for unbalanced paths using a Foreman test sequence;

Fig. 21 shows the plot for the peak signal to noise ratio of a Group of Pictures for unbalanced paths using a Foreman test sequence with IPP structure;

Fig. 22 shows a plot for a peak signal to noise ratio of a Group of Pictures for unbalanced paths with a IPP Foreman test sequence, where both paths have the same packet loss rate;

Figs. 23A to 23C show different reception scenarios for a detranscoding node: Fig. 23A shows a scenario where both paths are available, Fig. 23B shows a scenario where only the first path is available, and Fig. 23C shoes a scenario where only the second path is available;

Fig. 24 shows a diagram plotting the peak signal to noise ratio for a Group of Pictures, where only one description is received, for different operational points at the transcoding node;

Fig. 25 shows a diagram plotting the peak signal to noise ratio for a Group of Pictures where two paths are available, for different operational points at the transcoding node;

Fig. 26 shows a diagram plotting the variation of average peak signal to noise ratios as a function of the probability of outage on paths 1 and 2 for different optimization criteria;

Fig. 27 shows different functional points as a function of the probability of outage on paths 1 and 2;

Fig. 28 shows a diagram plotting the average peak signal to noise ratio as a function of the probability of outages on paths 1 and 2, where path 1, the low bandwidth path experiences high outages while path 2, the high bandwidth, is always available;

Fig. 29 shows a diagram plotting the average peak signal to noise ratio as a function of the probability of outages on path 1 and path 2, where path 1, the low bandwidth path, is always available, while path 2, the high bandwidth path, experiences high outages;

Fig. 30 shows a diagram plotting the rate-distortion curve for the Foreman test sequence;

Fig. 31 shows a diagram plotting the reconstruction quality at the receiver as a function of the transmission rate for the different source rates and a packet loss rate of 5%;

Fig. 32 shows a diagram plotting the reconstruction quality at the receiver as a function of the transmission rate for the different source rates and a packet loss rate of 15%;

Fig. 33A shows an embodiment of a two-user multiple description video transcoding scenario;

Fig. 33B shows an embodiment of the multiple description video transcoding for a multi-user scenario, where description1 is transmitted to the low bandwidth user;

Fig. 34 shows a diagram plotting the peak signal to noise ratio for user1 receiving only the description1 for the Foreman test sequence;

Fig. 35 shows a diagram plotting the peak signal to noise ratio for user 2 for the Foreman test sequence;

Fig. 36 shows a diagram of the peak signal to noise ratio for user1 comparing optimal and 2-user multiple description video transcoding as a function of the rate on path 2, for the Container test sequence at a packet loss rate of 10%;

Fig. 37 shows a diagram of the peak signal to noise ratio of user 2 comparing optimal and 2-user multiple description video transcoding as a function of the rate on path 2, using the Container test sequence at a packet loss rate of 30%;

Fig. 38 shows a diagram of the peak signal to noise ratio of user1 comparing optimal and 2-user multiple description video transcoding as a function of the rate on path 2, using the Container test sequence at a packet loss rate of 15%;

Fig. 39 shows a diagram comparing the peak signal to noise ratio of user 2, comparing optimal and 2-user multiple description video transcoding as a function of the rate on path 2, using the Container test sequence at a packet loss rate of 10%;

Fig. 40 shows a diagram comparing the peak signal to noise ratio when the distortion profile is transmitted for the first Group of Pictures of the sequence only with the optimal peak signal to noise ratio for a Foreman sequence of 20 groups of pictures;

Fig. 41A shows an embodiment of the transcoding of a 3-layer video stream into two descriptions;

Fig. 41B shows a schematic of an embodiment of a transcoding of a 3-layer video stream into packets based on sections of fixed length.

In the following embodiments of the present invention for multiple description video transcoding, i.e. for transcoding single description video streams into multiple description video streams, will be described in detail. The embodiments described, will focus on Groups of Pictures (GOP) or layered video structures. It should nevertheless be noted that embodiments of the multiple description transcoding can be applied to unprioritized but in particular to any prioritized or hierarchical data structure, and can not only be applied to video streams but also, for example, to audio streams, and in particular to prioritized audio streams.

In the following embodiments of the transcoding node will also be referred shortly to as transcoding nodes for simplicity reasons, as well as examples of the detranscoding node will also be referred to as terminal.

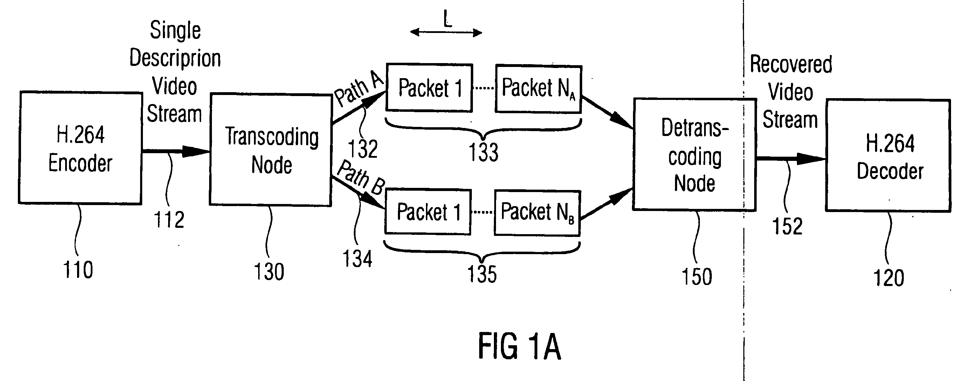

Fig. 1A shows the complete path between a source encoder 110, here a H.264 encoder and the respective source decoder 120, here a H.264 decoder. As shown in Fig. 1A, the H.264 encoder generates a single description video stream 112 which it transmits to a transcoding node 130. The transcoding node 130 can, for example, be a network node like a radio network controller (RNC) or a wired-wireless interface. Embodiments of the transcoding node FEC (Forward Error Correction) encode the video stream and split the single description into two descriptions wherein one description is transmitted over path A 132 and the second description is transmitted over path B 134. As can be seen, the transcoding node 130 transmits the first description 133 comprising $N_A$ packets of length L over a first path 132 and the second description 135 comprising $N_B$ packets over the second path 134.

Path A 132 will also be referred to as path1 or first path and path B 134 will also be referred to as path2 or second path.

Details of how the transcoding parameters are determined and how the packet handling is performed based on these transcoding parameters, will be described later.

At the detranscoding node 150 the first description 133 received over path A and the second description 135 received over path B will be FEC decoded and merged to generate a recovered video stream 152, which is passed onto the H.264 decoder 120.

An embodiment of the multiple description transcoding is described in the following for a Group of Pictures (GOP) of 15 frames (I, $P_1$, $B_1$.... $P_7$, $B_7$). The same concept holds for a layered stream (Layer$_1$,..., Layer$_M$).

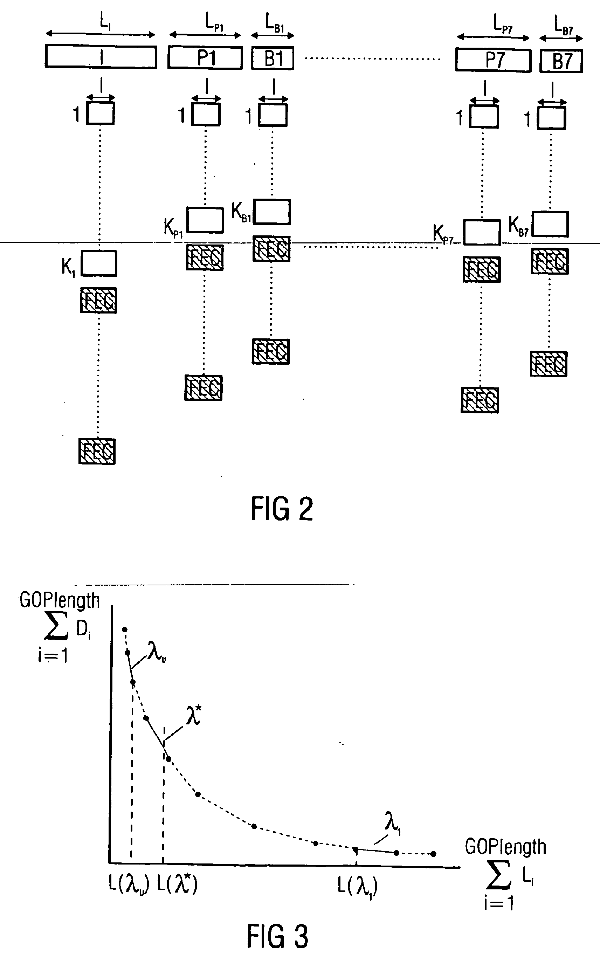

At an intermediate node, each GOP is processed independently. Within one GOP, the frames are processed in their order of reception. Each frame is partitioned into small sections of predefined size *1*. This will result in $K_I$ sections for frame I where the last section is zero-padded if the length of frame I ($L_I$) is not a multiple of *1*. For small *1*, this padding is negligible. In the same way, frames $P_1$...$B_7$ are partitioned into small sections of same size 1 resulting in $K_{p1}$...$K_{B7}$ sections respectively. The above sections are further protected by some channel coding, e.g. Reed Solomon codes. RS($N_i$, $K_i$) is applied column-wise for each frame resulting in $N_I$,$N_{p1}$,...,$N_{B7}$ sections. The amount of FEC to be transmitted is determined in the next steps of the algorithm depending on the channel conditions. This procedure is explained in Fig. 2.

Fig. 2 shows the partitioning of each frame I, P1, B1,..., P7, B7 with their respective frame length $L_I$, $L_{P1}$,$L_{B1}$....,$L_{P7}$, $L_{B7}$ into $K_I$, $K_{P1}$, $K_{B1}$,...$K_{P7}$, $K_{B7}$, sections of length 1 and the protection of each frame with a forward error correction code, for example, the Reed Solomon code. The FEC sections have the same length 1 as the data sections. The number of FEC sections is generated and the FEC code to be used is determined by an optimization algorithm.

The intermediate node is assumed to be connected to the receiver terminal through two paths, e.g. through two networks or two communication protocols, so that one can combine path diversity with a MD transcoding scheme. Thus, each transcoded GOP will be packed into two descriptions which are transmitted over paths A and B. Each description is formed of a number of packets of predefined size L as shown in Fig. 1A.

The packet size L is defined to be an integer multiple of the small segment size 1, (i.e $L = Kx1$, $K \in N^+$). The goal is to minimize the expected distortion in the received stream by searching for:

Firstly, $N_A$ and $N_B$, the number of packets to be transmitted over paths A and B respectively, subject to the rate and loss constraints of each path.

Secondly, the number of sections (of size *1)* which represent the contribution of each frame to each packet (of length L). In other words, each packet contains K sections of length *1*, and $K = k(I) + k(P_1) + ...+ k(B_7)$ where k (i) is the number of sections of frame i that are included in each packet.

For resolving the abovementioned goal the following is defined.

The stream to be transcoded is a prioritized stream. If frame I is lost, then all subsequent frames cannot be reconstructed. If frame $P_i$ is lost, then frames $P_{i+1}$... and the corresponding $B_i$... frames cannot be recovered. The loss of a B frame, however, does not have an impact on the subsequent P or B frames. As a result, the following priorities can be distinguished:

$$\text{Priority(I)} > \text{Priority(P}_i\text{)} > \text{Priority(P}_{i+1}\text{)}... > \text{Priority (B}_i\text{)}$$
$$= \text{Priority (B}_{i+1}\text{)}...$$

Out of $N_A + N_B$ transmitted packets, it is defined that:

$N_0$ is the number of packets that should be received in order to recover frame I.
$N_1$ is the number of packets that should be received in order to recover frame $P_1$.
$N_2$ is the number of packets that should be received in order to recover frame $P_2$.
...

$N_7$ is the number of packets that should be received in order to recover frame $P_7$.
$M_1$ is the number of packets that should be received in order to recover frame $B_1$.
...

$M_7$ is the number of packets that should be received in order to recover frame $B_7$, where, furthermore deducted form the above priorities the following is defined:

$$N_7 \geq N_6 \geq ... N_1 \geq N_0,$$

$$M_1 \geq N_1, M_2 \geq N_2, \ldots, M_7 \geq N_7.$$

The first inequality means that frame I should be first reconstructed, then followed by frames $P_i$, $P_{i+1}$ etc. The second inequality means that to recover frame $B_i$, its reference frames $P_i$ and $P_{i-1}$ should be first received. The reception of frame $B_i$, however, does not depend on the subsequent transmitted frames.

If any $N_0$ received packets can recover frame I, then each packet should include ($1/N_0$) of the information of frame I. For example, if 2 packets are required to recover frame I, then ½ of the information of frame I should be included in every transmitted packet. As a result, $\left\lceil \dfrac{K_I}{N_0} \right\rceil$ Sections (of size $l$) have to be inserted in each packet.

The packet length was already defined as $L = K \times l$, $K \in N^+$. If $\left\lceil \dfrac{K_I}{N_0} \right\rceil$ sections of frame I, $\left\lceil \dfrac{K_{Pi}}{N_i} \right\rceil$ sections of each frame $P_i$...and $\left\lceil \dfrac{K_{Bi}}{M_i} \right\rceil$ sections of each $B_i$ frame are inserted into each packet, it can be concluded that:

$$\left\lceil \frac{K_I}{N_0} \right\rceil + \left\lceil \frac{K_{P1}}{N_1} \right\rceil + \left\lceil \frac{K_{P2}}{N_2} \right\rceil + \left\lceil \frac{K_{P3}}{N_3} \right\rceil + \ldots + \left\lceil \frac{K_{P7}}{N_7} \right\rceil + \left\lceil \frac{K_{B1}}{M_1} \right\rceil + \ldots + \left\lceil \frac{K_{B7}}{M_7} \right\rceil = \frac{L}{l} = K$$

In general, if the summation is less than or equal $L/l$, it still holds. The packet should be zero padded in such a case.

As a consequence, once the numbers $N_0$...$M_7$ are determined, the packetization problem is also solved and a constant packet length is guaranteed.

Instead of the expected distortion as described in detail in the present application other expected distortion definitions or other metrics can be used for optimizing the transcoding parameters, either minimizing or maximizing an objective function, depending on the type of metric, e.g. optimizing a quality metric similar to a user perceived mean opinion score (MOS) known for speech quality measurements.

Each path is defined by a (Bit rate, Loss) profile, i.e. each path can support different bit rates with different loss probabilities. This can correspond to different modulation schemes with different (Bit Error Rate, Signal to Noise ratio) characteristics. Without loss of generality, in the following a path is represented by its path characteristics packet loss and bit rate budget. When the packet length L is known, the bit rate R corresponds to the number of packets N = R/L. As a part of the optimization, a search for the optimal bit-rate selection that can minimize the expected distortion at the receiver is performed.

It is defined:

$$\text{It is defined: } \left( \vec{N}_A, \vec{P}_A \right) = \begin{pmatrix} N_{A1} & P_{A1} \\ N_{A2} & P_{A2} \\ . & . \\ . & . \\ N_{Ai} & P_{Ai} \end{pmatrix} \quad \& \quad \left( \vec{N}_B, \vec{P}_B \right) = \begin{pmatrix} N_{B1} & P_{B1} \\ N_{B2} & P_{B2} \\ . & . \\ . & . \\ N_{Bj} & P_{Bj} \end{pmatrix},$$

where each entry ($N_{Ai}$, $P_{Ai}$) and ($N_{Bj}$, $P_{Bj}$) represents a possible ($N_A$, $P_A$) and ($N_B$, $P_B$) pair, i.e. packet budget and loss probability selection. For the number of packets the following equation applies:

$$N = N_A + N_B.$$

The aforementioned objective to minimize the expected distortion (ED) can also be described as follows:

$$\{N_A, N_B, N_0, N_1, \dots, N_7, M_1, \dots, M_7\} = \arg\min ED(N_A, N_B, N_0, N_1, \dots, N_7, M_1, \dots, M_7) \quad ,$$

such that:

$$\left\lceil \frac{K_1}{N_0} \right\rceil + \left\lceil \frac{K_{P1}}{N_1} \right\rceil + \left\lceil \frac{K_{P2}}{N_2} \right\rceil + \left\lceil \frac{K_{P3}}{N_3} \right\rceil + \dots + \left\lceil \frac{K_{P7}}{N_7} \right\rceil + \left\lceil \frac{K_{B1}}{M_1} \right\rceil + \dots + \left\lceil \frac{K_{B7}}{M_7} \right\rceil \leq \frac{L}{l}$$

$$N_A \in \bar{N}_A, N_B \in \bar{N}_B$$

$$N_7 \geq N_6 \geq \dots \geq N_1 \geq N_0 \ \& \ M_1 \geq N_1, M_2 \geq N_2, \dots, M_7 \geq N_7$$

$$N_A + N_B \geq M_i, \quad i = 1 \dots 7$$

In order to minimize the expected distortion at the receiver, the best bit-rate selection is looked for across the two paths which results in the total number of packets to be transmitted in each description. For a given rate-loss profile, the best allocation process of the frames sections (of size 1) in each of the packets is also searched for which results in determining the number of packets required to recover each frame.

The first above constraint solves the packet allocation process. Once $N_0 \dots M_7$ values are determined, the sections of each frame and the amount of required FEC can be allocated to different packets. This constraint also guarantees a fixed packet size across the GOP.

In the second above constraint, the number of packets $N_A, N_B$ are searched for on paths A and B that satisfy the rate budget of each path for a given loss probability.

The third above constraint is a direct consequence of the dependency between the different frames of the GOP.

The fourth above constraint should be satisfied to be able to recover the complete GOP from both descriptions i.e. if $M_i$ packets are required to recover each $B_i$ frame then the total number of packets should be at least equal to $M_i$.

$$ED = \sum_{i=N_A+N_B-N_0+1}^{N_A+N_B} P_r(N_A + N_B, i) \times D(I) + \sum_{i=N_A+N_B-N_1+1}^{N_A+N_B-N_0} P_r(N_A + N_B, i) \times D(P_1)$$

$$\sum_{i=N_A+N_B-M_1+1}^{N_A+N_B-N_1} P_r(N_A + N_B, i) \times D(B_1) + \dots + \sum_{i=N_A+N_B-N_7+1}^{N_A+N_B-N_6} P_r(N_A + N_B, i) \times D(P_7)$$

$$+ \sum_{i=N_A+N_B-M_7+1}^{N_A+N_B-N_7} P_r(N_A + N_B, i) \times D(B_7) + Enc\_D(I, P_1, B_1 \dots P_7, B_7)$$

Where, $P_r(N_A + N_B, i) = \binom{N_A + N_B}{i} \times P^i \times (1 - P)^{N_A + N_B - i}$ is the probability that i out of $N_A$+$N_B$ packet are lost, with

$$P_r(P_{Loss}) = P = P_r(P_{Loss} \cap Path_A) + P_r(P_{Loss} \cap Path_B)$$
$$= P_r(Path_A) \times P_r\left(P_{Loss}/Path_A\right) + P_r(Path_B) \times P_r\left(P_{Loss}/Path_B\right)$$
$$= \frac{N_A}{N_A + N_B} \times P_A + \frac{N_B}{N_A + N_B} \times P_B$$

where, furthermore,

$Enc\_D(I,P_1,B_1,...P_7,B_7)=$ is the encoding distortion for a GOP due to quantization

$D(I)$ is the additional distortion when frame I is lost.

$D(P_i)$ is the additional distortion when frame $P_i$ is lost.

...

$D(B_i)$ is the additional distortion when frame $B_i$ is lost.

A certain number of packets ($N_0...M_7$) should be received to recover frames ($I...B_7$) respectively. Each term in the expected distortion function determines the loss when the number of received packets is less than the required number of packets for each frame.

The values of $Enc\_D(I,P_1,B_1,...B_7,P_7)$, $D(I)$, $D(P_i)$ and $D(B_i)$ are known during the optimization stage. To compute these values, the technique described by W. Tu, W. Kellerer, E. Steinbach, "Rate-Distortion Optimized Video Frame Dropping on Active Network Nodes," in Packet Video Workshop 2004, Irvine, California, Dec. 2004, in the following referred to as [10], is adopted. A distortion matrix describing the reconstruction distortion observed for a GOP given a certain frame loss pattern is calculated and sent along the video bit-streams. The matrix includes the distortion at the receiver for each possible frame loss. In case of a frame loss, the last decoded frame is displayed instead of the lost frame and the corresponding distortion is calculated.

The two path profiles defined by a packet budget and packet loss probability are assumed to be known to the intermediate node. These paths are further considered as virtual paths between the transcoder and the receiver to have path diversity gain. Therefore, the total packet budget on both paths is optimized with the average packet loss probability. The resulting packets are then sent in two descriptions on different paths to the receiver. A detailed analysis of path diversity is given later.

For a given path profile, the above optimization problem can be formulated as a constrained rate-distortion problem. The expected distortion function is a sum of individual distortions of the different frames of the GOP. On the other hand, the sum of contributions of all GOP frames to each packet should not exceed the packet length.

By defining $L_1 = \left\lceil \dfrac{K_I}{N_0} \right\rceil$, $L_i = \left\lceil \dfrac{K_{Pi}}{N_i} \right\rceil$ and $L_i = \left\lceil \dfrac{K_{Bi}}{M_i} \right\rceil$ as the contributions of frames I, $P_i$, and $B_i$ respectively.

The above allocation problem can be rewritten as:

$$\min_{(N_i, M_i)} \sum_{i=1}^{GOPlength} D_i \quad \text{subject to,} \quad \sum_{i=1}^{GOPlength} L_i \leq L/l \qquad (1)$$

An efficient allocation algorithm is obtained by introducing the Lagrange relaxation, as described by Y. Shoham and A. Gersho, "Efficient bit allocation for an arbitrary set of quantizers," IEEE Trans. Acoust., Speech, Signal Processing, vol. 36, pp. 1445-1453, Sept. 1988, in the following referred to as [11]. The above-constrained problem is thus transformed into the unconstrained problem:

$$\min_{(N_i, M_i)} \left\{ \sum_{i=1}^{GOPlength} D_i + \lambda * \sum_{i=1}^{GOPlen} L_i \right\}$$

$\lambda$= Lagrange multiplier.

By sweeping $\lambda$ from zero to infinity, different $(N_1, M_i)$ sets are obtained which result in different distortions

$\left( \displaystyle\sum_{i=1}^{GOPlength} D_i \right)$ and rates $\left( \displaystyle\sum_{i=1}^{GOPlength} L_i \right)$ as shown in Fig. 3.

Besides the basic iterative Lagrange method also a fast approach for the iterative Lagrange method can be applied, by further simplifying the unconstrained optimization by minimizing each term separately, i.e.:

$$\min_{(N_i / M_i)} \{D_i + \lambda L_i\}, \quad i = 1 ... GOPlen \qquad (3)$$

Meanwhile, (3) requires that each term can be minimized independently. As a result, it has to be ensured the independence of the different terms, which correspond to different frames so that the fast solution can be applied.

The expected distortion at the receiver due to a loss of a particular frame is known at the transcoding point. As explained before, a distortion matrix is sent as side information beside the video stream. The probability of loss of a particular frame, however, may depend on the reception of other frames of the GOP. For instance, for a B frame to be received correctly, this B frame and its reference frames should be received as well.

To resolve this dependence problem, the GOP frames are processed in chronological order of priority. The I frame term is minimized first and its corresponding number of sections $N_0$ is determined. The expected distortion at the receiver due to the loss of $P_1$ frame depends on frames P1 and I only. Knowing $N_0$, the $P_1$ term is minimized and its corresponding number of sections $N_1$ is determined. By proceeding in the same way one can determine the rest of $(N_i, M_i)$ values.

The total distortion and total rate are determined by summing up individual distortions and rates respectively.

To solve the above problem, the value of $\lambda=\lambda^*$ that gives the largest rate less than or equal to a packet budget $L/l$ is searched for.

By defining $L(\lambda^{\bullet}) = \displaystyle\sum_{i=1}^{GOPlength} L_i$ and $D(\lambda^{\bullet}) = \displaystyle\sum_{i=1}^{GOPlength} D_i$ as the total rate and total distortion at $\lambda^*$ respectively.

If $L(\lambda^*)=L/l$, then the solution to the unconstrained problem is identical to that of the constrained problem [11].

In the following the conditions to achieve optimality are discussed.

Each $(N_i, M_i)$ value produces a $(D_i, L_i)$ set for a particular frame. For high $(N_i/M_i)$ values, more packets are required to recover frames. This results in higher distortions $(D_i)$ and lower rates $(L_i)$. The opposite holds for low $(N_i / M_i)$ values. As a result, a rate-distortion set for each frame is reached. This is analogous to the typical rate distortion minimization problems studied in literature. When it turns into an unconstrained problem, a requirement for the optimality is the convexity of the rate-distortion function of each frame.

To solve the unconstrained optimization problem, an iterative Lagrange method to search for the optimal $\lambda$ is used. A similar technique to that mentioned in [11] is used to find initial values $\lambda_1$ and $\lambda_3$ such that $L(\lambda_1) < L(\lambda_3)$. The bisection search algorithm is then used to determine.

Some experiments are performed to test the algorithm using the H.264/AVC hybrid codec, obtained on http://iphome.hhi.de/suehring/tml/download/, in the following referred to as [12]. A group of pictures of 16 frames being processed. In the simulations that follow, the average results for 20 GOP of the Foreman test sequence are plotted. The total packet budget is equally divided over two symmetric paths. The average reconstruction quality at a receiver connected to both paths are measured. An independent Bernoulli packet loss network is used with packet loss rates (PLR) of 5%, 15% and 30%. The packet length L fixed to 512 bytes and the section size $l$ is fixed to 1 byte during the simulations. The redundancy was the additional overhead dedicated to protect the original video stream.

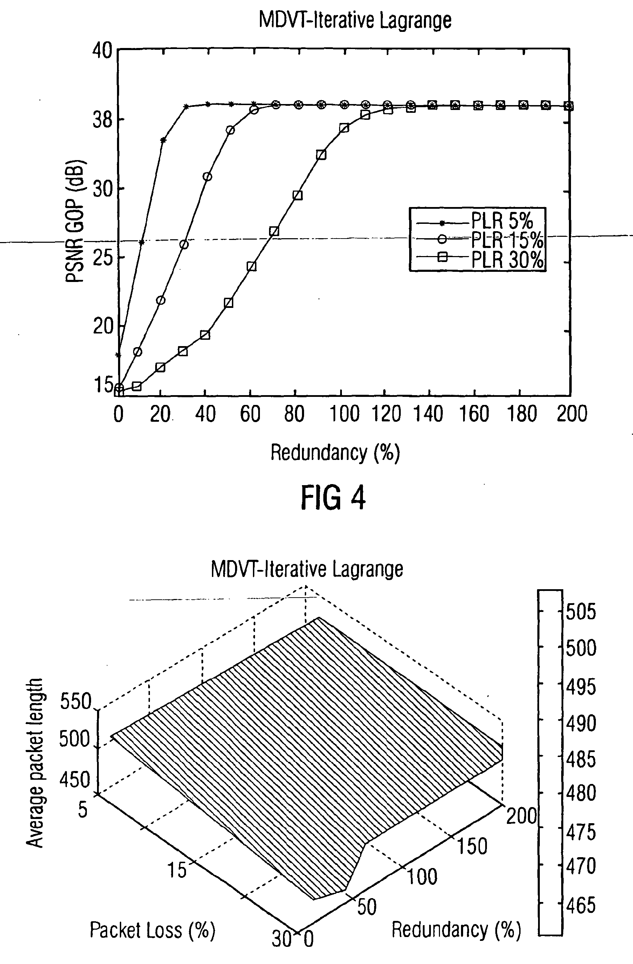

Fig. 4 shows the result obtained by using the iterative Lagrange method (MDVT algorithm, GOP of 16 IBPBP...frames). For a redundancy of 0%, no error protection is used; therefore, the loss of one packet results in the loss of the complete GOP. At higher redundancies, the expected distortion at the receiver reduces to the source distortion of the video stream.

As explained before, if L $(\lambda^*)=L/1,$ then the solution to both constrained and unconstrained problems is identical and thus the optimal solution by the iterative Lagrange method is reached.

Fig. 5 shows the average packet length L in a range from 450 bytes to 550 bytes independent of a packet loss and the redundancy.

A small gap between the unconstrained solution and the optimal solution exists. This gap further increases at low redundancies and high packet losses.

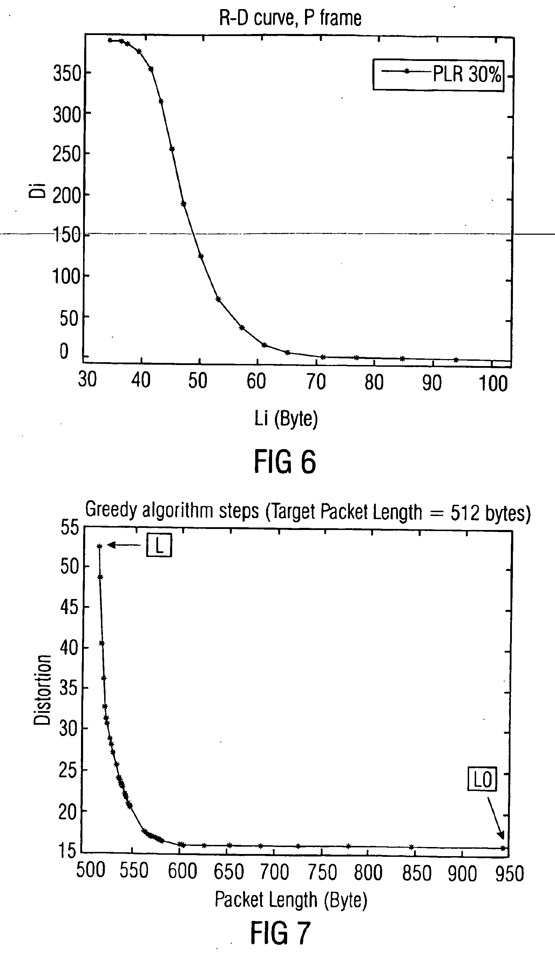

The gap between the solution and optimality is due to the non-convexity of the rate-distortion functions in general. Fig. 6, for instance, shows the rate-distortion function of a P frame at a PLR of 30%. As the number of sections $N_i$ increases, then $L_i = \left\lceil \dfrac{K_{Pi}}{N_i} \right\rceil$ decreases, and the distortion ($D_i$) increases. At high PLR and high $N_i$ values, the distortion saturates and the R-D curve loses its convexity.

The unconstrained iterative Lagrange method does not converge to the optimal solution due to the non-convexity of R-D functions. The optimal solution to this allocation problem could be obtained by dynamic programming methods as described by A. V. Trushkin, "Bit number distribution upon quantization of a multivariate random variable", Problems of Information Transmission, vol. 16, pp. 76-79, 1980, in the following referred to as [13]. However, complexity is a major limitation of any transcoding approach. The high complexity of dynamic programming methods makes them unsuitable to the application. In the following, a fast greedy allocation technique to solve the above optimization problem is described. First a basic approach is described.

To assign different ($N_i/M_i$) values in a way to minimize the expected distortion at the receiver while satisfying the rate constraint:

$$\left\lceil \frac{K_1}{N_0} \right\rceil + \left\lceil \frac{K_{P1}}{N_1} \right\rceil + \left\lceil \frac{K_{P2}}{N_2} \right\rceil + \left\lceil \frac{K_{P3}}{N_3} \right\rceil + \ldots + \left\lceil \frac{K_{P7}}{N_7} \right\rceil + \left\lceil \frac{K_{B1}}{M_1} \right\rceil + \ldots + \left\lceil \frac{K_{B7}}{M_7} \right\rceil \leq \frac{L}{l}$$

A greedy allocation technique is followed to determine the optimal($N_i,M_i$) values.
Incrementing any ($N_i/M_i$) value while keeping the rest of ($N_i,M_i$) values constant, will decrease the total rate and increase the total distortion. By defining:

$$slope(i) = \frac{D(iteration(j)) - D(iteration(j-1))}{L(iteration(j-1)) - L(iteration(j))} \qquad i = 1\ldots GOPlen$$

D and L being the total distortion and total rate respectively.

The algorithm can be summarized as follows:

Step 1: As a starting point, determine the minimum $(N_i/M_i)$ value for each frame, which corresponds to the best possible solution for that individual frame, assuming the worst-case scenario for the rest of the frames of the GOP. This is done, for instance, by saying that one wants to receive frame I only. Determine the minimum $N_0$ value that satisfies the rate constraint. As a result, by having an initial $(N_i/M_i)$ set with packet length $L_0 > \dfrac{L}{l}$ .

Step 2: Determine the slope that results from every possible $(N_i/M_i)$ increment. Each $(N_i/M_i)$ is incremented a variable integer step size that allows a valid slope.

Step 3: Determine the $(N_i/M_i)$ value that minimizes the slope. Increment this $(N_i/M_i)$ value by its corresponding step size.

Step 4: Repeat step 2 and 3, stop when $L$ (iteration)=L/l.

Fig. 7 shows an example of how the Greedy allocation algorithm converges to the optimal packet length when the target packet length is 512 bytes. Each '\*' corresponds to an iteration transition. Longer transitions usually correspond to I or P frames while shorter transitions correspond to B frames.

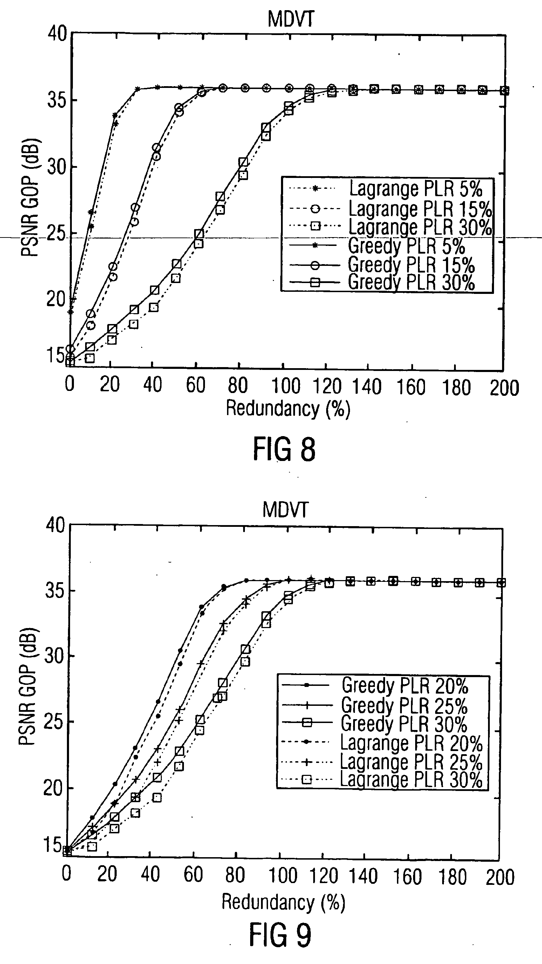

By running the same simulations as described for the iterative Lagrange algorithm, to test the greedy allocation algorithm. In Fig. 8 MDVT greedy allocation algorithm, IBPBP... frame sequence, a comparison of the output of the greedy allocation technique to that of iterative Lagrange at different PLR (packet loss rate). At low PLR and high redundancies the small gap to the optimality is fixed. The gain at high PLR and low redundancies is higher as shown in Fig. 9 (MDVT greedy allocation algorithm, IBPBP... frame sequence, high PLR).

The optimality of the greedy algorithm is determined by the steps taken to reach the optimal solution. By comparing to the Lagrange method, it can be seen that the optimal solution is pretty close.

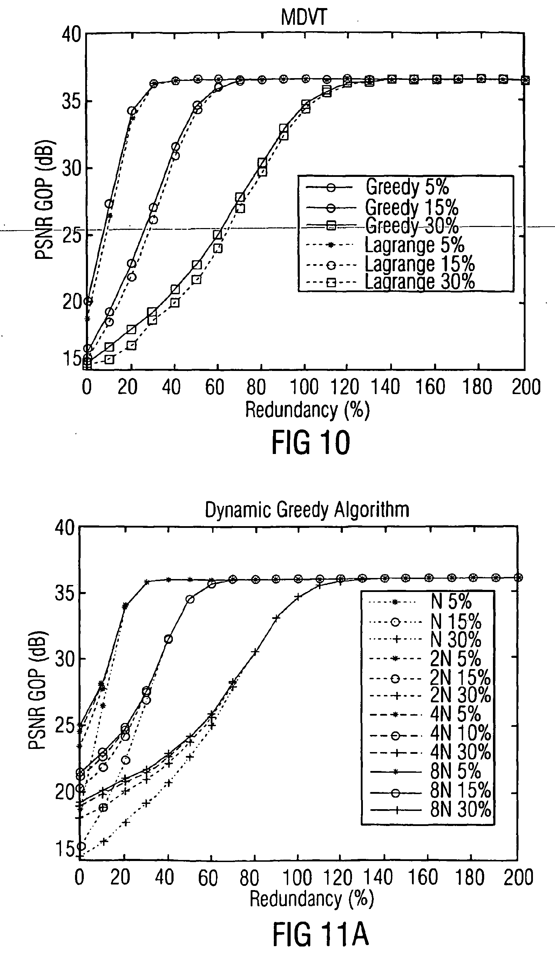

By further considering the case of an IPP... frame sequence which is similar to a scalable stream in order of priorities, see Fig. 10 (MDVT greedy allocation algorithm, IPP... frame sequence). It can be seen that by the greedy allocation method the same gain is still achievable. As shown before, even the P frames could loose convexity at high PLR.

The main advantage of this method is its low complexity; a major requirement in the transcoding approach is a very fast method.

It can be observed from Figs. 8, 9, and 10 that the average , GOP psnr (peak signal to noise ratio) is low at low redundancies. Meanwhile, for a redundancy of 0%, dropping less important frames while protecting higher priority ones could improve the average reconstruction quality. By modifying the greedy algorithm described above so that it can dynamically drop less important frames at low rates.

The sample space of $(N_i/M_i)$ has been bounded by a minimum value of 1 and a maximum value of N, N being the total packet budget. This means that by receiving all packets, all frames can be recovered.

$$\left\lceil \frac{K_1}{N_0} \right\rceil + \left\lceil \frac{K_{P1}}{N_1} \right\rceil + \left\lceil \frac{K_{P2}}{N_2} \right\rceil + \left\lceil \frac{K_{P3}}{N_3} \right\rceil + ... + \left\lceil \frac{K_{P7}}{N_7} \right\rceil + \left\lceil \frac{K_{B1}}{M_1} \right\rceil + ... + \left\lceil \frac{K_{B7}}{M_7} \right\rceil \leq \frac{L}{l} \ (*)$$

From equation (\*), it is noticed that by incrementing a $(N_i/M_i)$ value, its rate contribution decreases and at the same time the probability to recover this frame decreases. For example:if $M_7 \to \infty \Rightarrow \left\lceil \frac{K_{B7}}{M_7} \right\rceil \to 0$ & Frame $B_7$ is dropped. The basic idea is to increase the sample space of $(N_i, M_i)$ to N, 2N, 4N...

Fig. 11A shows the gain that can be achieved by providing this frame dropping flexibility. The larger the sample space, the bigger the improvement. Meanwhile, at some point, 4N and 8N for example, no further important gain can be held. This allows the limiting of the sample space to some multiple of N.

By comparing the outcome of different sample spaces in Fig. 8, it can be observed that the algorithm converges to the same point when no further frame dropping is required. This dynamicity requires no modification of the original greedy algorithm. By increasing the set of allowable values of $(N_i, M_i)$, the algorithm can determine the optimal $(N_i, M_i)$ values to minimize the expected distortion at the receiver.

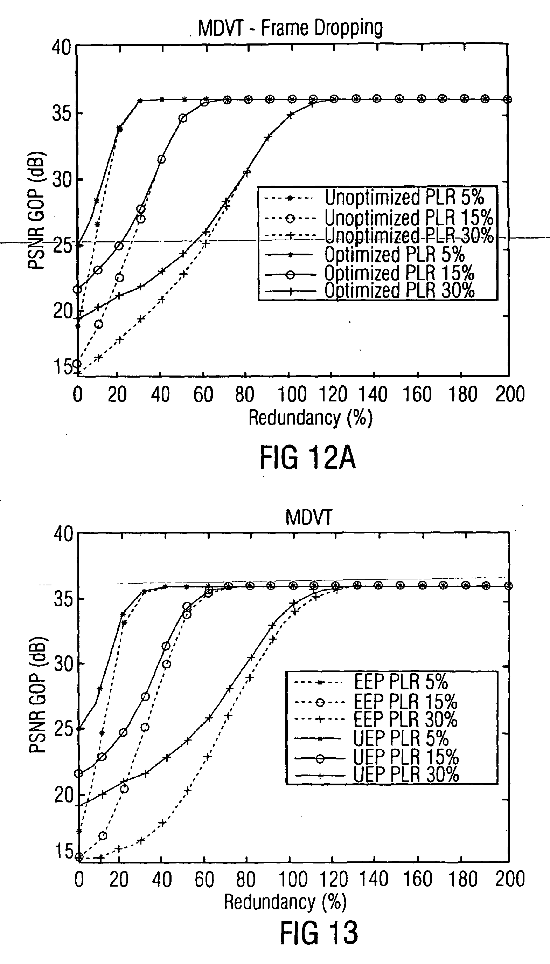

Fig. 12A compares, in general, the original and dynamic algorithms.

Before discussing path diversity, an embodiment for optimizing the multiple description transcoding for layered video streams with priority Priority(i)>Priority(i+1), i=1,...,M, is introduced, to show the similarity of embodiments, for example, for handling GOP and these kind of layered video streams.

The layered video stream is a prioritized stream where layers are organized in descending order of importance. A layered video stream with M layers as an input to an embodiment of the transcoding node is considered.

$Layer_1$ could correspond to the base layer and $Layer_2$ to $Layer_M$ to the enhancement layers of a scalable video stream. At the intermediate node, each group of pictures (GOP) is again processed independently. The layer boundaries are already specified by the source; $Layer_i$ has a fixed length equal to $R_i$, I = 1,2,...M. By partitioning each layer into small sections of predefined size 1, results in $K_1$ sections for $Layer_1$ where the last section is zero-padded if $R_1$ is not a multiple of 1. For small 1, this padding is negligible. In the same way, $Layer_2$ to $Layer_M$ are partitioned into small sections of same size 1 resulting in $K_2$ to $K_M$ sections respectively. The above sections of each layer are further protected by some channel coding, e.g. Reed Solomon (RS) codes. The amount of FEC to be transmitted is determined in the next steps of the algorithm depending on the channel conditions.

Thus, a length $R_i$ of a $Layer_i$ corresponds to the number of sections $K_i$ when reducing the section length 1 to 1-bit. Thus, the relation between the layer specific number of sections $K_i$ and the layer specific length $R_i$ can also be expressed as follows:

$K_i = R_i/l$ and in case of $1 = 1$bit as $K_i = R_i/1$bit. The aforementioned algorithms may be performed based on the length $R_i$, in this case, for example, the packet size constraint would be written as follows:

$$\left\lceil \frac{R_1}{N_1} \right\rceil + \left\lceil \frac{R_2}{N_2} \right\rceil + \dots + \left\lceil \frac{R_M}{N_M} \right\rceil \le L \, ,$$

or may be performed based on first splitting the datablock parts into sections of equal section size 1, and thus performing the algorithms based on the number of sections $K_i$, representing an equivalent to the above datablock length $L_i$, in this case the packet size constraint would be written, as already done, as follows:

$$\left\lceil \frac{K_1}{N_1} \right\rceil + \left\lceil \frac{K_2}{N_2} \right\rceil + \dots + \left\lceil \frac{K_M}{N_M} \right\rceil \le \frac{L}{l} \, .$$

Thus, it is obvious for a person skilled in the art that the described algorithms can also be used for embodiments which do not split the datablock parts in sections of size 1.

Thus, comparing the layered embodiment with the GOP embodiment, $Layer_1$ could stand for an $I$ frame and $Layer_2$ for a subsequent P and B frames of a GOP or any other hybrid codec video stream. Thus, with regard to Fig. 2 for the GOP embodiment, for the abovementioned layered example, $K_I$, $K_{P1}$, $K_{B1}$, ..., $K_{P7}$ of the frames $I_{P1, B1,..., P7, B7}$ correspond to length $R_1$, $R_2$, ..., $R_M$ of the layers $Layer_1$, $Layer_2$, ..., $Layer_M$. Similar definitions and constraints as described for the GOP example are applied.

The layered video stream to be transcoded is a prioritized stream where the layers are organized in descending order of importance.

The video stream to be transcoded is a prioritized stream where the layers are organized in descending order of importance. For instance, if $Layer_1$ is lost, then all subsequent layers cannot be reconstructed. As a result, the following priorities can be distinguished:

Priority ($Layer_i$) > Priority ($Layer_j$), $i < j$, $M$ $j$ $i = 1,2,...M$ Out of $N_A+N_B$ transmitted packets, $N_i$ as the number of packets that should be received in order to recover $Layer_i$, with $N_1 \le N_2 \le ... \le N_M$ can be defined.

The inequality means that $Layer_1$ should be first reconstructed, and then followed by $Layer_2$ to $Layer_M$.

If any $N_1$ received packets can recover $Layer_1$, then each packet should include ($1/N_1$) of the information of $Layer_1$. For example, if 2 packets are required to recover $Layer_1$, then ½ of the information of $Layer_1$ should be included in every transmitted packet. Therefore, $N_1$ defines the number of partitions of

$Layer_1$ and $\left\lceil \dfrac{K_1}{N_1} \right\rceil$ sections of *(length l)* have to be inserted in each packet.

The packet length has already been defined as $L = K \times l$, $K \in N^+$.

If $\left\lceil \dfrac{K_1}{N_1} \right\rceil$ sections of $Layer_1$, $\left\lceil \dfrac{K_2}{N_2} \right\rceil$ sections of $Layer_2$... and $\left\lceil \dfrac{K_M}{N_M} \right\rceil$ sections of $Layer_M$ are inserted into each packet, it can be concluded that:

$$\left\lceil \frac{K_1}{N_1} \right\rceil + \left\lceil \frac{K_2}{N_2} \right\rceil + \dots + \left\lceil \frac{K_M}{N_M} \right\rceil = \frac{L}{l} = K$$

In general, if the summation is less than or equal $L/l$, this requirement still holds. The packet should be zero padded in such a case. As a consequence, once the number of partitions ($N_1$, $N_2$, ... $N_M$) is determined, the packetization problem is also solved and a constant packet length is guaranteed.

Each path is defined by a (Bit rate, Loss) profile, i.e. each path can support different bit rates with different loss probabilities. This can correspond to different modulation schemes with different (Bit Error Rate, Signal to Noise ratio) characteristics. Without loss of generality, a path by a packet loss probability and bit rate budget will be represented. When the packet length is known, the bit rate corresponds to the number of packets, i.e. N = R/L. As part of the optimization, the optimal bit rate selection that minimizes the expected distortion at the receiver is searched for.

$$\text{By defining} \quad (\vec{N}_A, \vec{P}_A) = \begin{pmatrix} N_{A1}P_{A1} \\ N_{A2}P_{A2} \\ \cdot \\ \cdot \\ N_{Ai}P_{Ai} \end{pmatrix} \quad \text{and} \quad (\vec{N}_B, \vec{P}_B) = \begin{pmatrix} N_{B1}P_{B1} \\ N_{B2}P_{B2} \\ \cdot \\ \cdot \\ N_{Bi}P_{Bi} \end{pmatrix}$$

Each entry represents a possible (Packet Budget, Loss probability) selection.

With regard to the expected distorted function, again the two available paths A and B are considered as one virtual path during the optimization and the expected distortion at the receiver is minimized for the average composite channel of both paths. The expected distortion is the summation of source distortion of the video sequence and the additional distortion when some layers of the video stream are lost.

The expected distortion (ED) function is defined by:

$$ED = \sum_{i=N_A+N_B-N_1+1}^{N_A+N_B} P_r(N_A+N_B,i) \times D(Layer_1) + \sum_{i=N_A+N_B-N_2+1}^{N_A+N_B-1} P_r(N_A+N_B,i) \times D(Layer_2)$$

$$+ \sum_{i=N_A+N_B-N_1+1}^{N_A+N_B-N_2} P_r(N_A+N_B,i) \times D(Layer_3) + ... + \sum_{i=N_A+N_B-N_M+1}^{N_A+N_B-N_M-1} P_r(N_A+N_B,i) \times D(Layer_M)$$

$$+ Source\_Distortion(Layer_1, Layer_2, Layer_3, ..., Layer_M)$$

Where, $Source\ Distortion\ (Layer_1, Layer_2, Layer_3, ..., Layer_M)$ is the source distortion of the GOP due to quantization errors, where $D(Layer_i)$ is the additional distortion when $Layer_i$ is lost, l = 1,2,...M, where the probability that one packet is lost on either paths is defined by:

$$P_r(P_{LOSS}) = P = P_r(P_{LOSS} \cap Path_A) + P_r(P_{LOSS} \cap Path_B)$$

$$= P_r(Path_A) \times P_r\left(P_{LOSS}/Path_A\right) + P_r(Path_B) \times P_r\left(P_{LOSS}/Path_B\right)$$

$$= \frac{N_A}{N_A+N_B} \times P_A + \frac{N_B}{N_A+N_B} \times P_B$$

where, the probability that i out of $N_A+N_B$ packets are lost is:

$$P_r(N_A + N_B, i) = \binom{N_A + N_B}{i} x P^i x (1 - P)^{N_A + N_B - i},$$

and, where the $(N_1, N_2, ..., N_M)$ values determine the partitioning of each layer and thus stand for the number of packets that should be received to recover $(Layer_1, Layer_2, ..., Layer_M)$, respectively. Each term in the expected distortion function determines the expected additional distortion when the number of received packets is less than the required number of packets for each layer.

The values of Source_Distortion $(Layer_1, Layer_2, Layer_3, ... Layer_M)$, and $D(Layer_i)$, i = 1,2,...M are needed at the optimization stage. These values can be computed at the source and sent along the video bit-streams.

The objective function can again be written as:

$$\{N_A, N_B, N_1, N_2, ...N_M\} = \arg\min ED(N_A, N_B, P_A, P_B, N_1, N_2, ...N_M)$$

Again optimized such that the following constraints are fulfilled:

$$\left\lceil \frac{K_1}{N_1} \right\rceil + \left\lceil \frac{K_2}{N_2} \right\rceil + ... + \left\lceil \frac{K_M}{N_M} \right\rceil \leq \frac{L}{l} \qquad (1)$$

$$N_A \in \bar{N}_A, N_B \in \bar{N}_B \qquad (2)$$

$$N_1 \leq N_2 \leq ... \leq N_M \qquad (3)$$

$$N_M \leq N_A + N_B \qquad (4)$$

In order to minimize the expected distortion at the receiver, the best bit rate selection across the two paths is looked for which results in the total number of packets to be transmitted in each description. For a given selection, also the best allocation process of the layers' sections to each of the packets are searched for which results in determining the number of packets required to recover each layer. The first constraint stands for the packet budget constraint. The sum of contributions of the different layers to each of the transmitted packets should not exceed the packet length. This constraint also solves the packet-filling problem. Once the $(N_i, N_2, ...N_M)$ values are determined, the data sections of each layer and the amount of required FEC can be allocated to different packets. This constraint also guarantees a fixed packet size across the layered video stream.

In the second constraint, the number of packets on paths A and B that satisfy the rate budget of each path for a given loss probability is searched for. The third constraint is a direct consequence of the dependency between the different layers of the video stream. The 4th constraint should be satisfied to be able to recover the complete video from both descriptions, i.e. if $N_M$ packets are required to recover $Layer_M$ then the total number of transmitted packets should be at least equal to $N_M$.

Referring back to the dynamic Greedy allocation method, one can observe from Figs. 8, 9 and 19, that the average GOP psnr is low for low redundancies.

Meanwhile, at low rates, dropping lower priority layers would allow more important layers to enjoy more protection. This can be achieved by allowing the algorithm to truncate the layered stream at some $Layer_j$, j ≤ M.. For a hybrid video codec stream of I, B, and P frames, this is equivalent to dropping less important frames (e.g. B frames (as previously shown)). Therefore, the greedy algorithm described in before is modified so that it can dynamically drop less important layers at low rates.

So far, the sample space of $(N_1, N_2, ..., N_M)$ has been bounded by a minimum value of 1 and a maximum value of *N*, *N* being the total packet budget. This means that by correctly receiving all packets, all layers can be recovered.

$$\left\lceil \frac{K_1}{N_1} \right\rceil + \left\lceil \frac{K_2}{N_2} \right\rceil + ... + \left\lceil \frac{K_M}{N_M} \right\rceil \leq \frac{L}{l} \qquad (*)$$

From equation (*), by incrementing any *Ni* value, it is noticed that the rate contribution of *Layer$_j$* decreases. At the same time, this means that more packets are required to recover *Layer$_j$* and thus the probability to recover this layer decreases.

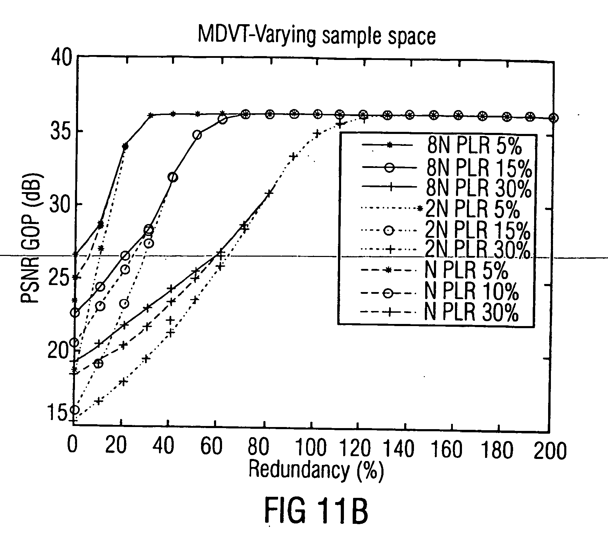

The same simulations described in before for different sample spaces is repeated. A GOP of 16 frames of *IBP* structure is considered. In Fig. 11B, it is observed that the gain that could be achieved by increasing the sample space of $(N_1, N_2, ..., N_M)$ .

Sample spaces equal to *N*, 2*N* and 8*N* are considered. By increasing the sample space, less important frames can be allocated fewer bytes in each packet. This allows more important frames to be in favor of higher protection.

In other words, Fig. 11B shows that increasing the simple space provides the Greedy algorithm with the flexibility to assign higher protection for more important layers. For the simulation, a Group of Pictures of 16 frames of IBP was considered.

The above concept to drop layers of lower priority is extended now for layered video structures. Analytically, this is equivalent to incrementing the sample space to infinity. From a video coding perspective, this means truncating the video stream at *Layer$_j$, j$\leq$ M*.

The modified algorithm is summarized below.

1) Set the sample space of $(N_1, N_2, ..., N_M)$ to a number *N'>N,* e.g. *N' = 8N.*
2) Determine the truncating point: Apply the basic algorithm. Truncate the stream at *Layer$_j$* if $N_{j+1} > N$. Due to the dependency between layers, all *Layer$_k$,* j+1$\leq$k$\leq$ M will be dropped.
3) Apply the basic algorithm to determine the $(N_1, N_2, ...,N_j)$ values.

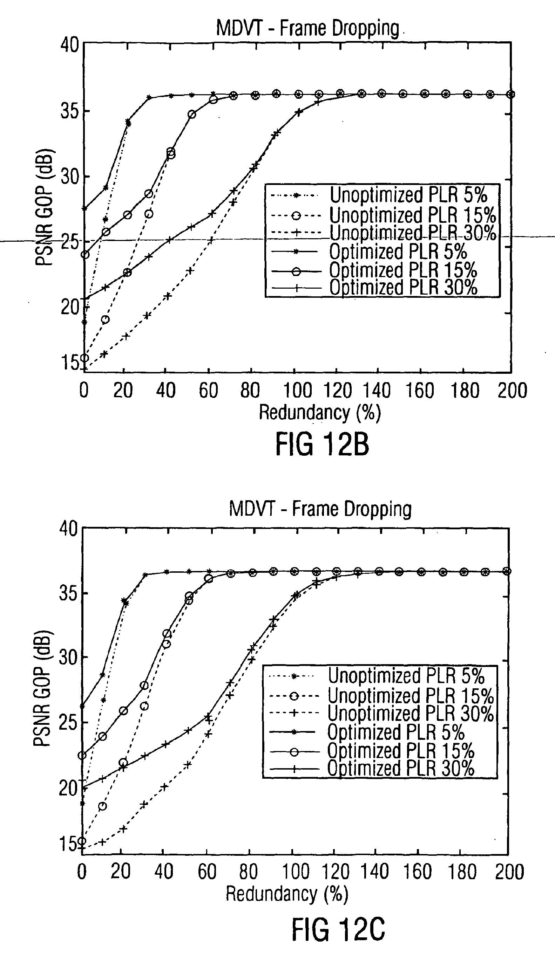

The same simulations are executed to test the modified algorithm. A GOP of 16 frames of *IBP* structure and of 8 frames of *IPP* structure is considered in Figs. 12B and 12C, respectively. In both cases, the gain achieved by providing this frame dropping flexibility is quite observable.

Moreover, the dynamic algorithm converges to the same point as the original algorithm when no further frame dropping is required, can be observed.

In the following embodiments of the multiple description video transcoding (MVDT) approach with unequal error protection (UEP) are compared with the same approach with equal error protection (EEP).

In the former, the dynamic greedy algorithm determines the optimal amount of error protection. In the latter, all frames are decomposed into the same number of sections.

Fig. 13 shows the UEP gain at different redundancies and PLR. This illustrates the reasons behind using MDC with FEC. Unequal forward error protection can help exploit the properties of a prioritized video stream while transmitting over un-prioritized networks through multiple independent packets, and the following path diversity will be discussed in detail.

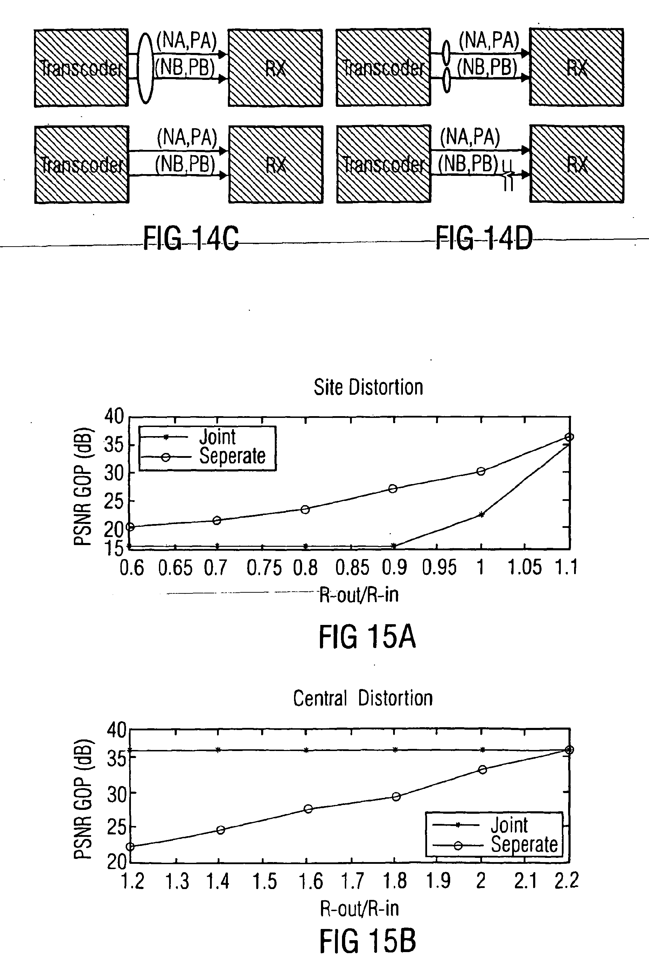

Before a proposed transcoding approach in which an optimization jointly over the two available paths (Fig. 14A). Given the total packet budget N = $N_A + N_B$ and an average loss probability P, the optimal distribution of error protection among different frames is determined. The packets were transmitted in two descriptions of $N_A$ and $N_B$ packets. A user connected to both paths (Fig. 14C), could combine both descriptions and the resulting distortion is equal to central distortion $D_c$.

In some scenario's, however, the user may be connected to one path only. The receiver's bandwidth, delay on a path, or even an outage for a complete GOP may render one path unavailable (Fig. 14D). In such a case, the average distortion at the receiver is equal to side distortion $D_s$ greater than $D_c$.

The question arises here whether one should optimize both paths jointly (Fig. 14A) or separately (Fig.14B). In the separate optimization the source channel-coding scheme is applied to both paths; the input video stream is error protected and transmitted separately on each path.

In Figs. 15A and 15B, a comparison between joint optimization and separate optimization by measuring the average side (Fig. 15A) and central psnr (Fig. 15B) at the receiver is made. Both links are assumed to be symmetric in this simulation. When measuring the side distortion, one link is available with rate R-out. When measuring the central distortion, the output rate is doubled, as both links are available. R-out, the output rate is plotted as a function of R-in, the input rate of the original video stream, on the x-axis. On the y-axis, the average psnr for a GOP is plotted.

When optimizing jointly, the central reconstruction quality is strong while the side reconstruction is weak. In this case, the reception quality stands for the average network behavior. As long as the composite virtual channel is good enough, to ensure a good reception.

On the other hand, when optimizing separately, one can have a better side reconstruction. However, the presence of both links does not guarantee an optimal reconstruction; as a separate optimization, the packet budget is reduced to the link's budget. Some frames are dropped on each link to guarantee a good side reconstruction and thus combining both links does not allow recovering all frames. Fig. 15B shows the gain achieved by the joint optimization over both paths compared to traditional approaches where each path is optimized separately.

To make the picture complete, the problem where one of these paths is unavailable is addressed. With varying network conditions, the possibility of a link break at some time intervals exists. Therefore, a solution that trades off between side reconstruction and central reconstruction is suggested. For this purpose, a scaling factor $\mu$ at the transcoding point is introduced so that the expected distortion, e.g. at the receiver is equal to:

$$\text{Expected Distortion} = D_c + \mu * D_s.$$

High values of $\mu$ correspond to the separate optimization case while setting $\mu$ to zero corresponds to the joint optimization case. The choice of $\mu$ can be decided offline by the operator depending on the network conditions.

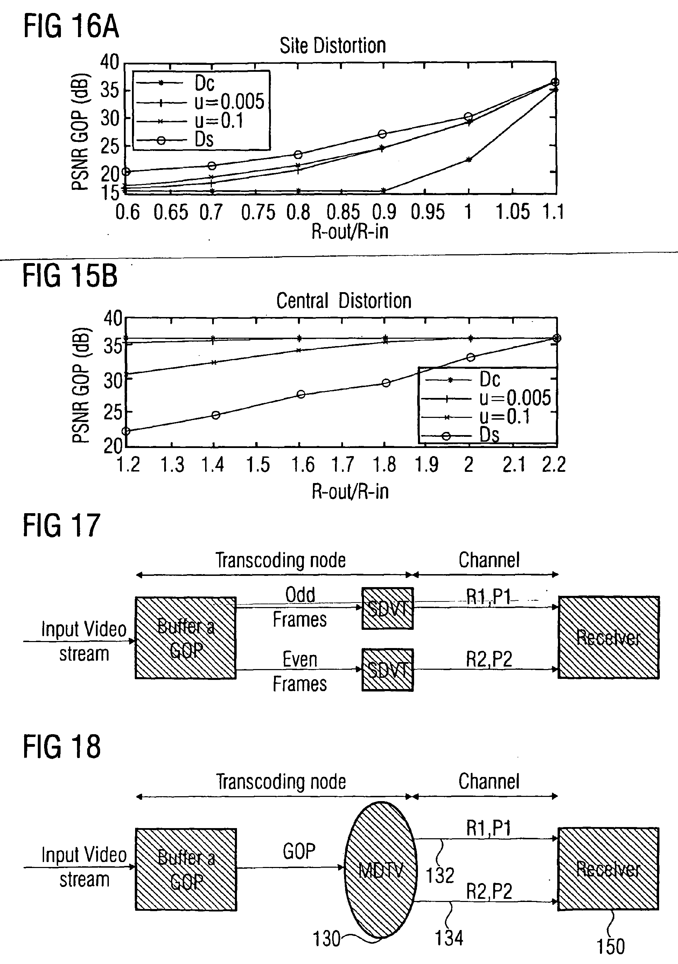

In Fig. 16A and 16B, the side (Fig. 16A) and central reconstruction qualities (Fig. 16B) at the receiver for different values of $\mu$ is plotted. This figure shows that it is possible to arrive at some point where the gain in side distortion is bigger than the loss in central distortion.

The scaling factor $\mu$ is also referred to as relaxation factor.

In practical scenarios, a receiver is more likely to be connected to the transcoding node through two unbalanced paths with different rates and loss characteristics. In this section, the performance of the MDVT approach for unbalanced paths is demonstrated.

One method of transmitting data over two unbalanced paths is to split the GOP frames into two subsets of frames, apply single description video transcoding (SDVT) to each subset and transmit over a separate path (Fig. 17). On the other hand, in the MDVT approach, the two paths act as one virtual path and optimization jointly over both paths is considered. Afterwards, the resulting packet stream is split onto the two paths (Fig. 18).

In other words, Fig. 17 shows an approach, where the video stream is split into odd and even frames, i.e. both descriptions will carry the same number of frames, and where the resulting stream of odd frames and resulting stream of even frames are separately transcoded, based on a single description video transcoding (SDVT). Whereas as shown in Fig. 18, embodiments of the multiple description video approach optimize both descriptions over a common virtual channel.

Fig. 18 shows an embodiment of a transcoding node 130 (MDVT). In particular in an in-network implementation, where a transcoding node receives an input video stream from another node, the embodiments of the transcoding node will also comprise a buffer for buffering the incoming video stream and, to thus, build Groups of Pictures (GOP), which are then multiple description transcoded. The multiple description transcoding is optimized with regard to the path characteristics of the first path 132, described by the rate R1 and the packet loss rate P1, and based on the characteristics of the second path 134, characterized by the bit rate R2 and the packet loss rate P2. Based on the determined transcoding parameters, a first description is generated and transmitted over the first path 132 and a second description generated and transmitted over a second path to the receiver 150.

In Fig. 17 odd frames are protected and transmitted over path 1, even frames are protected and transmitted over path 2. This results in two unbalanced descriptions of rates $R1 = (1 + \rho)R_{(oddframes)}$ & $R2 = (1 + \rho)R_{(evenframes)}$, where p is the redundancy factor. The resulting paths' profiles (R1, P1) and (R2, P2) are used in the MDVT approach for comparison.

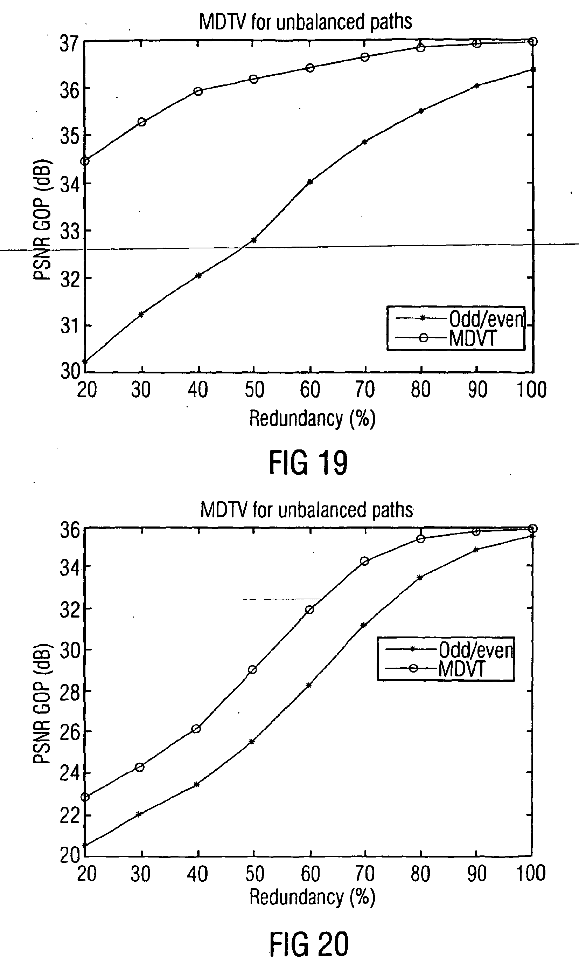

A GOP of 16 frames of IBP... structure is considered. The odd frames' subset includes $(I, P_1...P_7)$ frames and the even subset includes $(B_1...B_8)$ frames. Two paths are considered with a PLR of 25% (path1) and 10% (path2), respectively. A further variation of the redundancy factor is performed. In Figs. 19 and 20, both methods for two test sequences, Fig. 19, Foreman (399 frames) and Fig. 20, Container (279 frames) is compared. The overall redundancy varies from 20% to 100%. A gain up to 4.2 dB and 3.65 dB is observed for the MDVT approach in figs. 19 and 20, respectively. The improvement is observable for different redundancies and even at high redundancies, where the source distortion is reached, there is still a gain for using the MDVT approach over the conventional odd/even splitting approach.

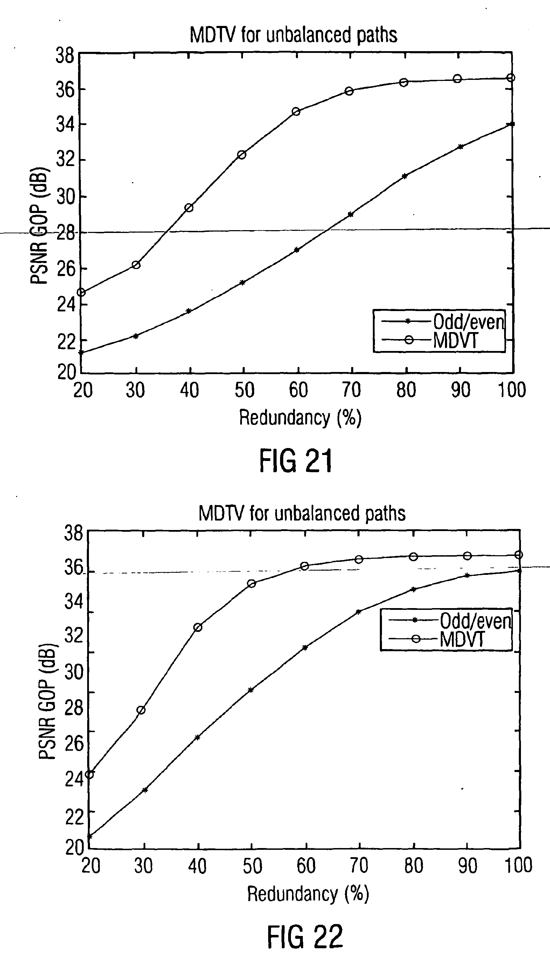

In other words, Fig. 21 shows a multiple description video transcoding for unbalanced paths with an IPP Foreman test sequence with a packet loss rate of 25% for path1, and a packet loss rate of 10% for path2, and Fig. 22 a multiple description video transcoding for unbalanced paths with an IPP Foreman test sequenc and a packet loss rate of 15% for both paths. In both cases, Fig. 21 and Fig. 22, the Foremen test sequence (399 frames) is used. In both figures, the MDVT approach the gain is still evident over the odd/even splitting approach.

In the following the problem of temporary path outage that was already introduced before in a broader range is discussed in more detail. A mobile terminal connected to the transcoding node (e.g. radio network controller) through two paths (e.g. a UMTS Link and WLAN link) is considered. The transcoding node maximizes the reconstruction quality over both links. Therefore, when both links are available, the receiver can decode both descriptions and a high reception quality is achieved. If one of the links is down, however, one description is decoded and the reception quality is poor.

One reason for temporary path outage is handover. During handover, a link could break down for a couple of seconds. If the transcoder has already started processing a GOP before the link outage, it will minimize the expected distortion at the receiver for a two-path operation. The distortion at the receiver, however, would not be as expected.

To overcome this limitation, a relaxation parameter that can trade off between one and two path reception in case of outages is introduced. A transcoding node could estimate the outage probability and tune the relaxation parameter accordingly. Whether the outage probability estimates at the transcoding node are accurate or not, this could result in improved or deteriorated performance.

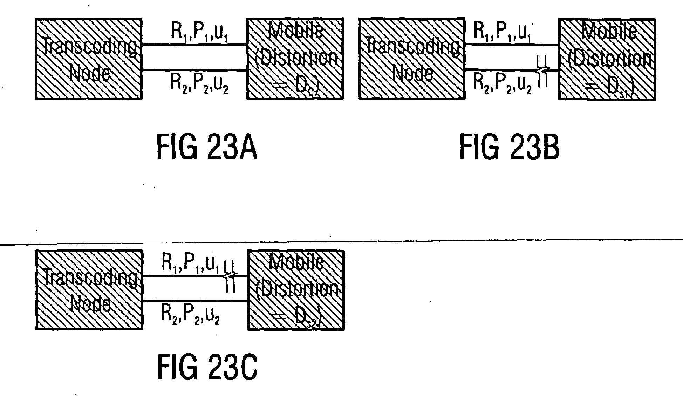

Besides the rate and packet loss probability, a third parameter in introduced that characterizes the outage performance of each link (Fig. 23).

Figs. 23A to 23C show different reception scenarios for a mobile terminal. Fig. 23A shows a scenario where both paths are available and the expected distortion equals $D_c$. Fig. 23B shows a scenario where only path1 is available and the expected distortion equals $Ds_1$, and Fig.23C shows a scenario, where only path2 is available and the expected distortion equals $Ds_2$.

The transcoding node minimizes the overall distortion at the receiver, which is defined by:

$$\text{Expected Distortion} = D_c + \mu_1 * Ds_1 + \mu_2 * Ds_2,$$

Where $D_c$= Expected Distortion when both paths are available, and $Ds_i$= Expected Distortion when only path i is available.

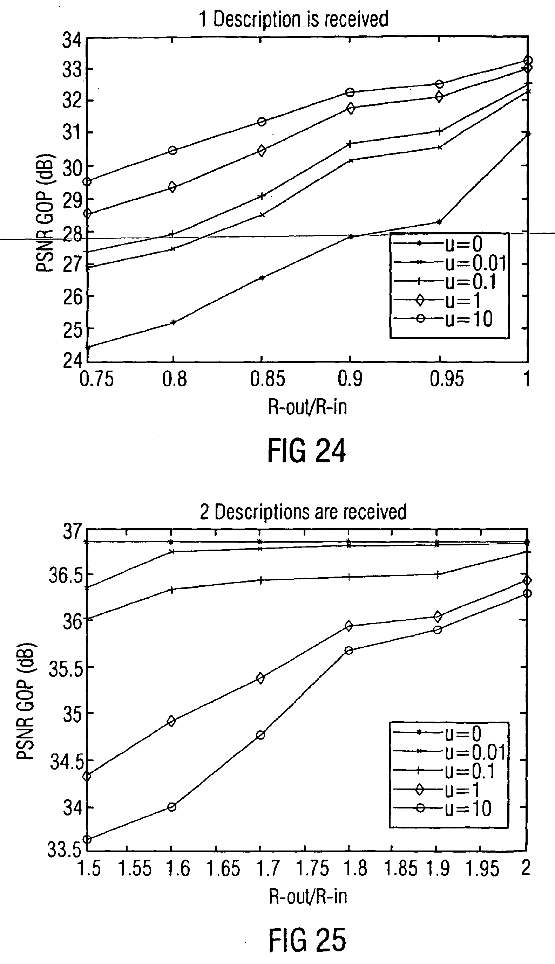

The average PSNR at the receiver, when one and two descriptions are received, is shown in Figs. 24 and 25, respectively. A balanced case is considered with $\mu=\mu_1=\mu_2$ and P1=P2=0.05. The output rate (R-out) is varied along the x-axis as a function of the input GOP rate (R-in). The Container test sequence (279 frames) is considered.

Fig. 24 shows the one path quality, i.e. peak signal to noise ratio for a packet loss rate of 5%. The different values of $\mu$ stand for different operational points at the transcoding node to side reception (one description is received). Fig. 25 shows the two paths quality, i.e. the peak signal to noise ratio when two descriptions have been received for packet loss rates of 5%. Different values of $\mu$ stand now for different operational points at the transcoding node for central reception.

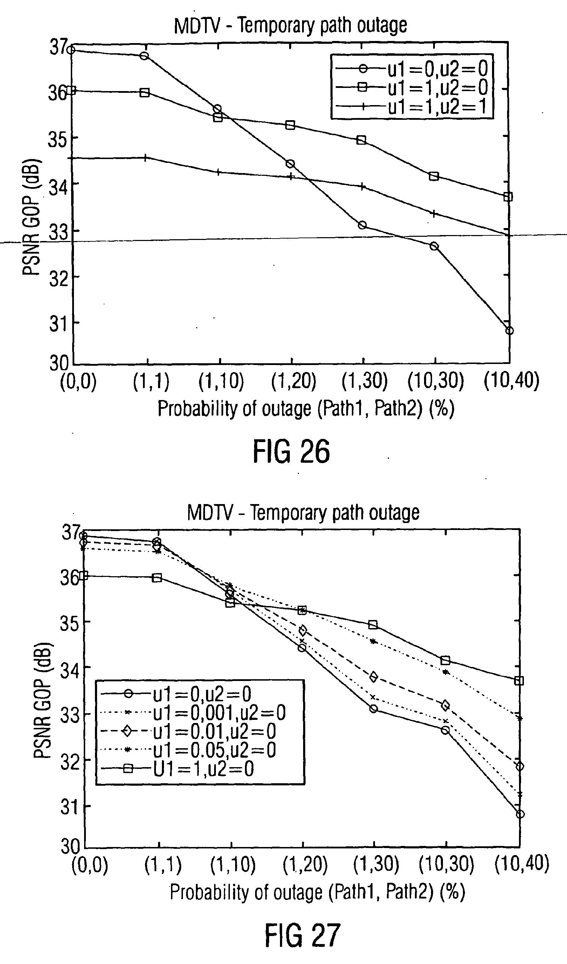

The transcoder chooses the operational($\mu_1,\mu_2$) based on the channel feedback about path outage probabilities. For best reception performance, the transcoding node should switch from ($\mu_1=0$, $\mu_2=0$) to ($\mu_1=1$, $\mu_2=0$) for high outage probabilities on path2. Alternatively, when the feedback information is inaccurate or comes with delay, the transcoder can operate at other ($\mu_1,\mu_2$) points that lie between the two extremes. Some of these functional points are shown in Fig. 27.

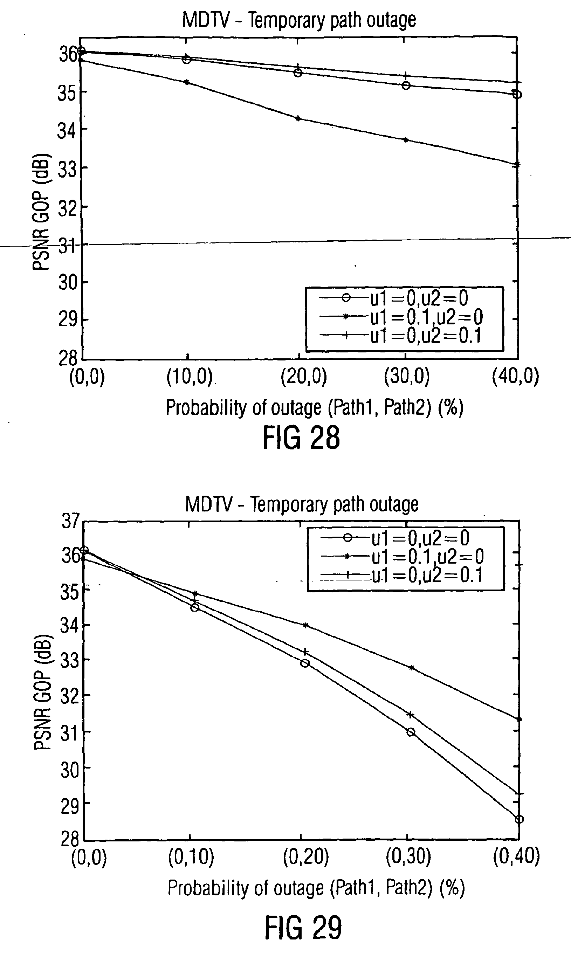

The proposed approach is further evaluated with a concatenated Foreman sequence of 360 GOP. Each GOP corresponds to an IBP sequence of 16 frames. Two unbalanced paths; path1 with rate R1=R-in and path2 with rate R2=1.2*R-in are considered, where R-in is the rate of the input video stream. Both paths experience a PLR of 5%. The average PSNR of the GOP sequence is plotted in Figs. 28 and 29 as a function of the outage probabilities on path1 and path2.

In both figures, the (0, 0) point on the x-axis corresponds to the case where no outage occurs on either path. In this case, both descriptions are correctly received and decoded. The curves which correspond to different ($\mu_1,\mu_2$) combinations reveal similar performance in the absence of outages. This indicates that there is enough redundancy in the signal when both descriptions are received and the optimal quality is quite achieved regardless of the ($\mu_1$, $\mu_2$) couple.

Nevertheless, this is not the case in the presence of outages. Fig. 28 depicts the situation where path2 is always available while the outage probability on path1 is varied. In this case, the reception quality for the $\mu_1=0$ and $\mu_2=0$ combination is slightly affected by the outages on path1 as the high bandwidth path (i.e. path2) is always available. Optimizing for side reception on path2 by setting $\mu_1=0$ and $\mu_2=0.1$ will further increase the average PSNR. Meanwhile, optimizing for path1, i.e. $\mu_1=0.1$ and $\mu_2=0$ will lead to a degradation in quality as the outages on path1 increase.

In other words, Fig. 28 shows the average peak signal to noise ratio as a function of the probability of outages on path1 and path2, where path1, the low bandwidth path, experiences high outages (high outage probability) while path2, the high bandwidth path is always available (outage probability of 0). The average quality can be sustained as long as the high bandwidth path is available.

In Fig. 29 the opposite situation is considered; path1 is always available while path2, the high bandwidth path, undergoes outages. In this case, optimizing for central distortion, i.e. $\mu_1$=0 and $\mu_2$=0 or optimizing for path2 operation i.e. $\mu_1$=0 and $\mu_2$=0.1 will result in a drop in the average PSNR. As the outage probability on path2 increases, the side reconstruction quality on path1 should be maximized to improve the average PSNR. This is accomplished by tuning to $\mu_1$=0.1 and $\mu_2$=0 which results in an observable PSNR gain.

In other words, Fig. 29 shows the average peak signal to ratio as a function of the probability of outages on path1 and path2, where path1, the low bandwidth path, is always available (outage probability of 0%), while path2, the high bandwidth path, experiences high outages (high outage probability). To improve the average peak signal to noise ratio, the side reconstruction quality on path1 has to be maximized.

This experiment shows that a correct choice of the relaxation parameters can lead to an improvement in average performance. The actual performance depends on the variability of network conditions and the accuracy of the channel outage estimates.

In this section the case where two direct paths exist between the transmitter and the receiver are considered. A study of the flexibility that results from the application of MDVT directly at the video source is performed.

The aggregate rate of the transmitted video over both paths is equal to sum of the source coding rate, *Rsrc,* and channel coding rate, *Rch.* At the same time, the total distortion at the receiver is equal to the source distortion, *Dsrc,* due to quantization errors and channel distortion, *Dch,* due to packet erasures. Increasing the source rate minimizes the quantizing distortion and increasing the channel rate minimizes the probability of packet losses.

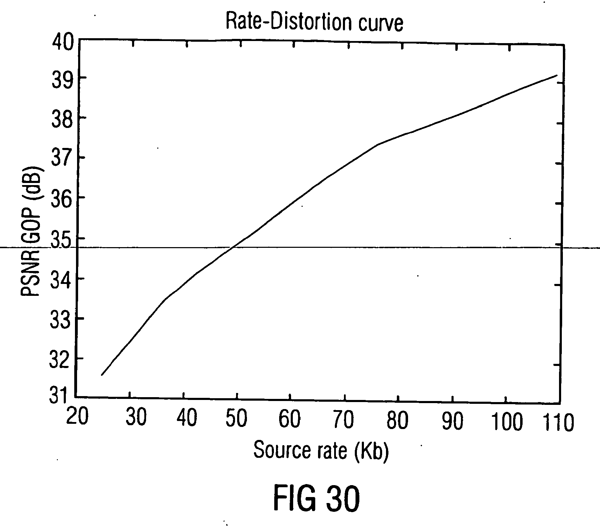

In MDVT an encoded video stream is transcoded into two descriptions at an intermediate network node. In this case, *Rsrc* and *Dsrc* are already fixed by the video source. The algorithm uses the additional redundancy to protect the descriptions and minimize *Dch.* On the other hand, when the two descriptions are generated at the transmitter, the source can trade off between *Rsrc* and Rch to minimize the total distortion at the receiver, i.e *Dch + Dsrc.* In Fig. 30, a video stream is generated at different resolutions by varying the quantization parameter. Each resolution corresponds to a target source rate.

Fig. 30 shows the rate distortion curve for the Foreman test sequence.

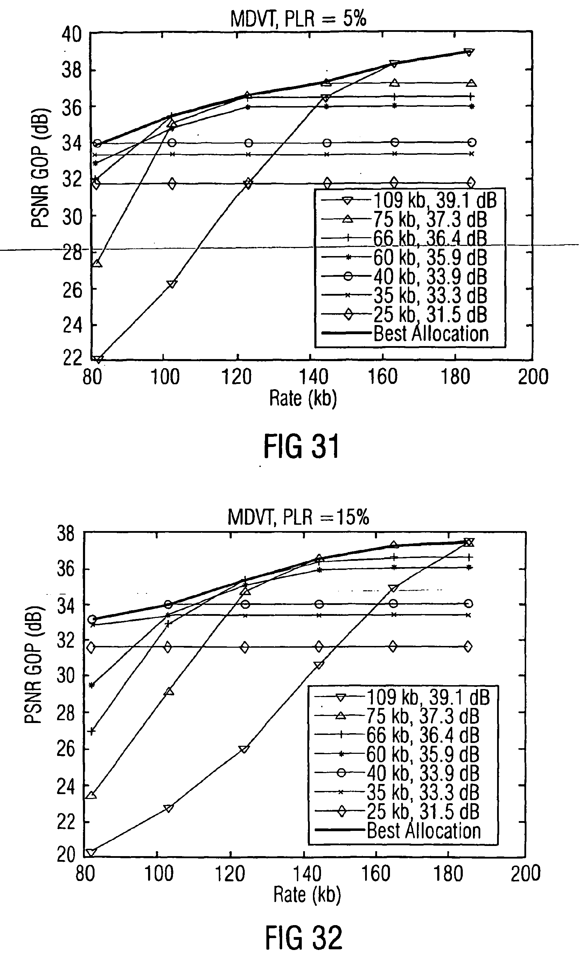

In Figs. 31 and 32, the average peak signal to noise ratio (PSNR) at the receiver is plotted as a function of the transmission rate. Fig. 31 shows the reconstruction quality (PSNR) at the receiver as a function of the transmission rate for different source rates and a packet loss rate of 5%. Fig. 32 shows the reconstruction quality (PSNR) at the receiver as a function of the transmission rate for different source rates and a packet loss rate of 15%.

The transmission rate is the total rate on both paths, i.e *Rsrc + Rch.* Each curve corresponds to the MDVT algorithm applied for a given source rate *Rsrc.* For a certain transmission rate, each curve represents a different source and channel rate combination. By having the flexibility to choose between different source rates, the optimal trade off between source and channel coding can be determined for a given rate budget. This eventually leads to a gain at the receiver compared to one fixed source rate operation. This flexibility gain shows the importance of rate adaptation between the transmitter and the transcoding node to minimize the video distortion at the receiver. This is usually the case in streaming applications where a feedback channel is used to maximize the reception quality and provide continuous play-out at the receiver.

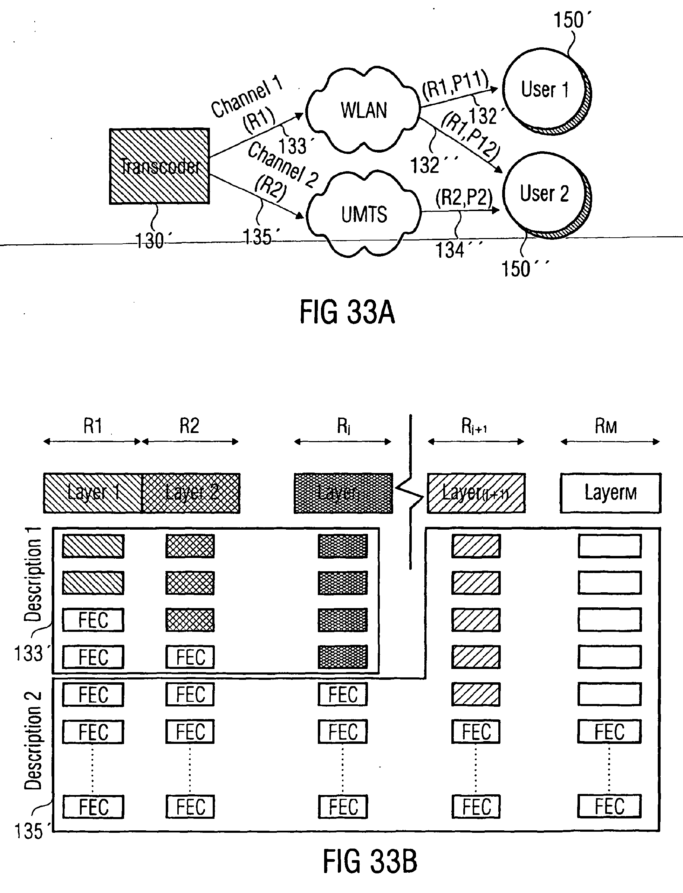

In the following the MDVT concept is extended to a multi-user MDVT scenario. Rather than individually serving each end user, users will typically subscribe for different multicast groups, which are served by the transcoding node. In this scenario two types of clients are considered; low bandwidth clients with one path connectivity to the transcoding node and high bandwidth clients with two-path connectivity. Instead of transmitting separate descriptions for low and high bandwidth users, description one is transmitted to all users over common multicast channel 1 while description two is transmitted to high bandwidth users only over multicast channel 2. This eventually results in bandwidth savings. A 2-user MDVT scheme is illustrated in Fig. 33A.

Fig. 33A shows a multiple description transcoder 130', which transmits a first description 133' over Channel 1, and a second description 135' over channel 2. Channel 1 is a WLAN communication channel with a bit rate R1 and channel 2 is a UMTS communication channel with a rate R2.

As user1 150', or detranscoding node 150', may be for example, located at a different position than user2 150'', or detranscoding node 150", both users may experience different packet loss probabilities P. Therefore, with regard to user1, the communication channel 1 133' can be described by rate R1 and packet loss rate P11 and with regard to user 2 as channel 1 132" described by the path or channel characteristics rateR1 and packet loss probability P12. Similar, channel 2 134" can be described by the path or channel characteristics R2 and packet loss probability P2.

Layered multiple description coding has already been used to serve heterogeneous clients in packet loss environments, see e.g. in P. Chou, H. Wang, V. Padmanabhan, Layered Multiple Description Coding, In Proc. Packet Video Workshop, Apr. 2003, V. Stankovic, R. Hamzaoui, Z. Xiong, Robust Layered Multiple Description Coding of Scalable Media Data for Multicast, IEEE Signal Processing Letters, vol. 12, pp. 154-157, Feb. 2005. The server encodes a layered video stream into multiple descriptions, which are transmitted over a bottleneck link to all users. Low bandwidth clients will receive the base layer representations while high bandwidth clients receive both base and enhancement layer representations. As with MDC, the rate boundaries of the layered video stream are being altered during the optimization to minimize the expected distortion at the receiver side. This scheme is no further optimal at a transcoding node where the layer boundaries are already fixed.

Embodiments of the present invention provide a framework, which can, for example, be applied also at an intermediate network node.

At the transcoding node a layered video stream {$Layer_1... Layer_M$} is processed. Some layers of this stream will be protected and transmitted to the low bandwidth users in the first description. A second description will provide more protection to the transmitted layers in the first description and can include other layers as well depending on the available budget and packet loss rates. The second description is transmitted to the high bandwidth users only. The 2-user MDVT scenario is considered and as shown above in Fig. 33A, in the subsequent analysis. Nevertheless, the approach could be extended to serve multiple low and high bandwidth users subscribing to different multicast groups. In that case, the main extension to the approach would be to optimize description1 for multiple users in multicast group 1 and description2 for multiple users in multicast group 2 when users experience different packet loss patterns.

Embodiments of methods for multi-user multiple description transcoding can be summarized in two steps.

Firstly, find the optimal performance for user1. One path is available for user1 and one description is transmitted. The MDVT algorithm is used while optimizing for one path transmission only; the video stream is truncated at $Layer_j$, $j \leq M$ and $Layer_1$ to $Layer_j$ are transmitted and protected in description1.

Secondly, for user2, an extension to the above algorithm to determine the additional amount of protection needed for $Layer1$ to $Layer_j$ as well the data and FEC contribution of $Layer_{j+1}$ to $Layer_M$ to description2 is used. This will result in a loss in performance compared to the case where the two descriptions are optimized for user2.

For the low bandwidth user, the MDVT algorithm is used to truncate the video stream at $Layer_j$ and determine the contribution of $Layer_1$ to $Layer_j$ to each packet. As mentioned above, the contribution of $Layer_i$ to each packet is

equal to $\left\lceil \dfrac{K_i}{N_i} \right\rceil$. Fig. 33B shows a special case where $N_1=2$, $N_2=3...N_j=4$ and $K_i=R_i$, where $R_i$ is the length of $Layer_i$.

Once the partitioning of the layers is done, data and FEC parts can be appropriately allocated across the packets of description1.

Fig. 33B shows the parts of $Layer_1$ to $Layer_j$ that are transmitted in the first description 133'.

For the high bandwidth user, the rest of the FEC parts of $Layer1$ to $Layer_j$ and the data and FEC parts of $Layer_{j+1}$ to $Layer_M$ can be transmitted in description2, as shown by reference 135' in Fig. 33B.

In the following the approach to allocate these parts such that the overall expected distortion at the receiver is minimized, will be explained

For the multi-user optimization, the following definitions are applied.

$N_A$ and $N_B$ are defined as the packet budgets of description1 and description2 respectively.

It is referred to each $\left\lceil \dfrac{K_i}{N_i} \right\rceil$ as a segment of $Layer_i$ and $segment\_length$ ($i$) $= \left\lceil \dfrac{K_i}{N_i} \right\rceil$.

The segment partitioning of $Layer_1$ to $Layer_j$ was determined while optimizing for description1. However, the number of FEC segments that are allocated to description2 has to be determined.

For $Layer_{j+1}$ to $LayerM$, no segment partitioning was specified as these layers were dropped in description1.

It is defined that $segment\_length(m)$ of $Layer_m$ is be equal to $\left\lceil \dfrac{K_m}{N_B} \right\rceil$, $j+1 < m < M$.. This means that by receiving $N_B$ segments, $Layer_m$ can be recovered. It is to be noted here that this initial decomposition could be even done on a byte level but would decrease the speed of convergence. The allocation of the segments to description2 determines the expected distortion at the receiver. The results for different initial decompositions were similar.

In the following the rate function is introduced.

Within each description, all packets are independent and of equal importance. When additional segments are added to description2, they are uniformly distributed across the different packets. If one segment of $Layer_i$, $1 < i < M$ is added to description2, this means that $\left\lceil \dfrac{segment\_length(i)}{N_B} \right\rceil$ bytes are added to each of the $N_B$ packets of description2.

In general $\left\lceil \dfrac{t \cdot segment\_length(i)}{N_B} \right\rceil$ bytes are allocated to each packet if t segments of $Layer_i$ are added to description2. If t(i) is the number of segments of $Layer_i$ allocated to description2, then the packet length constraint can be defined by:

$$\sum_{i=1}^{M} L(i,t(i)) \le \frac{L}{l}, \; L(i,t) = \left\lceil \frac{t \cdot segment\_length(i)}{N_B} \right\rceil$$

And finally, the respective distortion function is defined.

For each layer, the number of correctly received segments on path2 can be computed as a function of the number of transmitted segments and the number of received packets. An offline matrix is constructed and used to determine the number of received segments for different packet losses.

$$n\_segment(i,k,t) = \left\lfloor \frac{(N_B - k) \cdot L(i,t)}{segment\_length(i)} \right\rfloor$$

*i = layer index.*
*k = number of lost packets on path2.*
*t = number of transmitted segments on path2.*
*n_segment=number of correctly received segments on path2.*

To keep trace of the overall expected distortion at the receiver, the different packet loss combinations on both paths as well as the dependencies between the different layers should be considered. To deal with this complexity, the expected distortion on path1 as a reference will be considered and the allocation of the segments on path2 in order to minimize this distortion. The necessary steps that are required to determine the expected distortion are described below:

First, to recover any $Layer_l$, $1 \le l \le j$ , i.e. the layers which have been transmitted in description1, were already defined $N_i$ as the number of packets that should be correctly received out of $N_A$ transmitted packets on path1. Meanwhile, if x additional segments are correctly received on path2, this means that by receiving $N_i$ - x packets on path1 $Layer_i$ could be recovered as long as its reference layers can be recovered as well. The expected distortion at the receiver can be thus determined by considering all packet loss possibilities on path2 and determining the corresponding remaining distortion on path1. The expected distortion function at the receiver for a $Layer_i$, $1 \le l \le j$ when t segments of $Layer_i$ are transmitted in description2 is defined by:

$$ED(i,t) = \sum_{k=0}^{N_B} \left[ P_r(N_B, k) * \sum_{a=N_A - N(Layer_i)+1}^{N_A - N(Layer_{i-1})} P_r(N_A, a) * D(Layer_i) \right]$$

Where N ($Layer_i$) = maximum ($N_i$ - n_segment (l, t, k), N($Layer_{i-1}$))

Second, to recover any $Layer_i$, $j + 1 < i < M$, i.e. the layers which are transmitted in description2 only, the number of received segments on path2 should be enough to recover all the data parts. As each layer has been decomposed into $N_B$ segments, if the number of correctly received segments is equal to or exceeds $N_B$, $Layer_i$ could be recovered. In this case, $Layer_i$ could be correctly decoded once $Layer_{i-1}$ is recovered and therefore there is no additional distortion caused by $Layer_i$. On the other hand, if the number of received segments is not enough to recover $Layer_i$, there is no reduction in the overall distortion and the expected distortion resulting from losing $Layer_i$ can be calculated. The expected distortion function at the receiver for $Layer_i$, $j + 1 < i < M$ when t segments of $Layer_i$ are transmitted in description2 is defined by:

$$ED(i,t) = \sum_{k=0}^{N_B} \left[ P_r(N_B,k) * ED(k) \right]$$

Where ED(k)=0 ,n_segement(i,k,t)$\geq N_B$

$$ED(k) = 0 \hspace{4cm} ,$$

$$ED(k) = \sum_{a=0}^{N_A - N(Layer_{i-1})} P_r(N_A,a) * D(Layer_i),$$

otherwise

The optimal number of segments of each layer that are allocated to description2 is determined in a greedy approach similar to that described for the single-user scenario. This approach can be summarized as follows:

　　1) Initialization: The number of transmitted segments of all layers is equal to zero, i.e.

$$t(i) = 0, 1 \leq i \leq M \text{ and } \sum_{i=1}^{M} L(i,t(i)) = 0$$

　　2) For each layer, determine the cost of adding a segment to description2, where

$$\text{cost}(i) = \frac{ED(i,t-1) - ED(i,t)}{L(i,t) - (L(i,t-1)}$$

　　3) Add a segment to description2 for the layer that maximizes the cost function.

　　4) Repeat steps 2 and 3. Stop when $\sum_{i=1}^{M} L(i,t(i)) = \dfrac{L}{l}$

In the following simulation results obtained by the abovementioned optimization and allocation method are described.
In the two-user scenario, the optimal PSNR of user1 is achieved when description1 is optimized for user1's loss and rate characteristics. Similarly, the optimal PSNR of user2 can be achieved when both descriptions are optimized for user2's loss and rate characteristics. If the rates on path1 and path2 are equal to R1 and R2 respectively, then the optimal allocation requires a total rate budget of 2*R1+R2. In the 2-user MDVT approach, however, as description1 is transmitted over a multicast path to both users, a total rate budget of R1+R2 is used. The performance of the 2-user MDVT approach was tested by comparing with the optimal reception quality of each user. The optimal solution is found with the MDVT algorithm; for user1 one description is optimized for one path operation and for user2 the two descriptions are jointly optimized for two-path operation. A GOP of 8 frames of IPP structure is considered. The path profiles of the low and high bandwidth users are defined by: User1 (R1=$(1+\rho_1)$*R-in, and P11) and User2 (R1=$(1+\rho_1)$*R-in,P12, R2, and P2), where R-in is the rate of the encoded video stream before transcoding, and $\rho_1$ determines the redundancy on path1. The rate on path2, R2, is varied as a function of R-in.

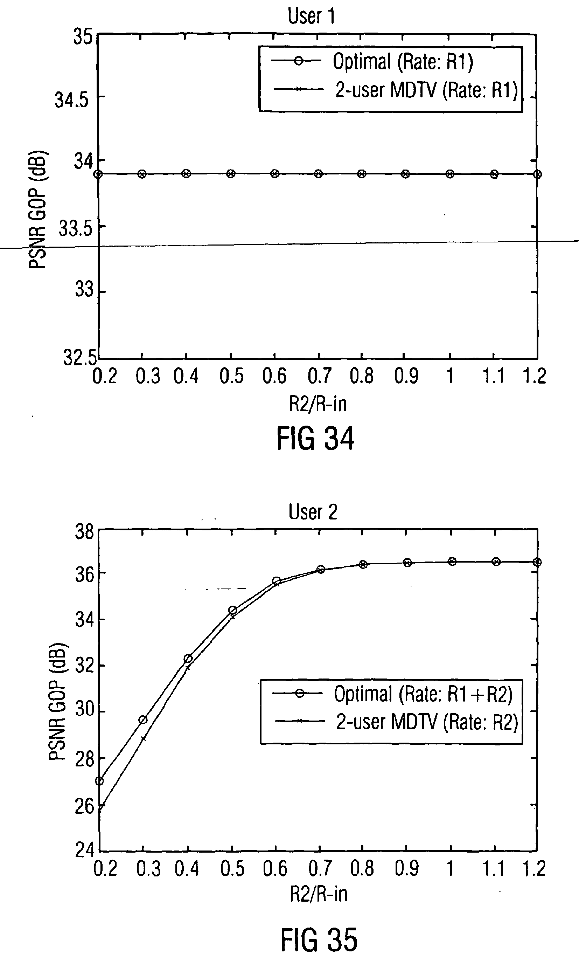

In Figs. 34 and 35, a *Foreman* test sequence is considered. The results are averaged over 20 GOP. The end users' profiles are defined by $\rho_1$ =0.2, P11=5%, P12=20% and P2=30%.
In other words, Fig. 34 shows a comparison of the quality (PSNR) of user1 for optimal and two user MDVT as the function of the rate on path2 using a Foreman test sequence and based on the path characteristics R1 = 1.2 x R-in and packet loss probability P11 = 5%.
The 2-user MDVT approach starts by computing the optimal protection for user1. As a result, the reception quality for user1 is identical for both approaches. This is shown in Fig. 34 where the average PSNR is plotted as a function of the rate on path2. As the expected distortion is minimized for the low bandwidth user only in description1, the average PSNR is optimal and independent of the rate on path2. In the 2-user MDVT approach, the high bandwidth user will receive description1, which was transmitted over multicast path1 for both users, on path1 and descrpition2 on path2. Description2 is intended to improve the reception quality for the high bandwidth user. Fig. 35 compares between the described approach and the optimal approach. A performance loss of less than 1 dB is observed for user2 compared to a rate gain of $=(1+\rho_1)*$R-in. The benefit would be even higher in multi-user MDVT scenarios where multiple users are served over multicast paths by the transcoding node.

In other words Fig. 35 shows a comparison of the PSNR for user2 for optimal and two-user MVDT as a function on the rate of path2, using a Foreman test sequence. The path characteristics for path1 are defined by rate R1 = 1.2 x R1-in and packet loss probability P11 = 5% for user1 and packet loss probability P12 = 20% for user2 and for path2 by the packet loss probability P2 = 30%. The benefit would be even higher in multi-user MDVT scenarios where multiple users are served over multicast paths by the transcoding node.

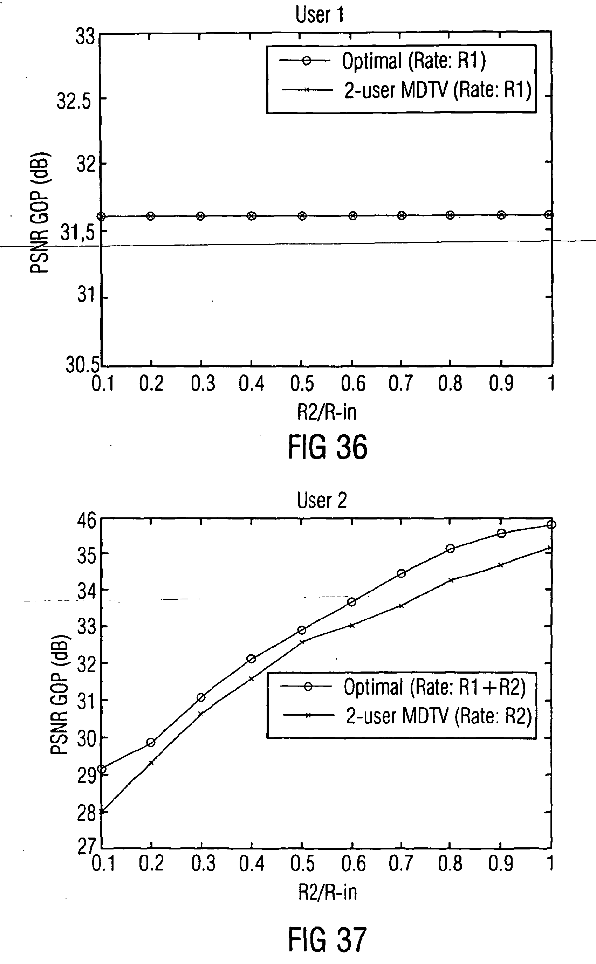

In Figs. 36 to 40, a Container test sequence of 16 GOP is considered.

In Figs. 36 and 37, the end-user's profiles are defined by: $\rho_1$ =0, P11=10%, P12=30% and P2=30%. In other words, Fig. 36 compares the quality (PSNR) for user1 for optimal and two-user MDVT as a function on the rate on path2 using the Container test sequence. The path characteristics for path1 with regard to user1 are rate R1 = R-in and packet loss probability P11 = 10%, and Fig. 37 compares the quality of (PSNR) for user2 for optimal and two-user MDVT as a function of rate on path2 using the Container test sequence. Path1 is described by rate R1 = R-in and with regard to user1 by the packet loss probability P11 = 10% and with regard to user2 by the packet loss probability P12 = 30%. Path2 is described by the packet loss probability of P2 = 30%.

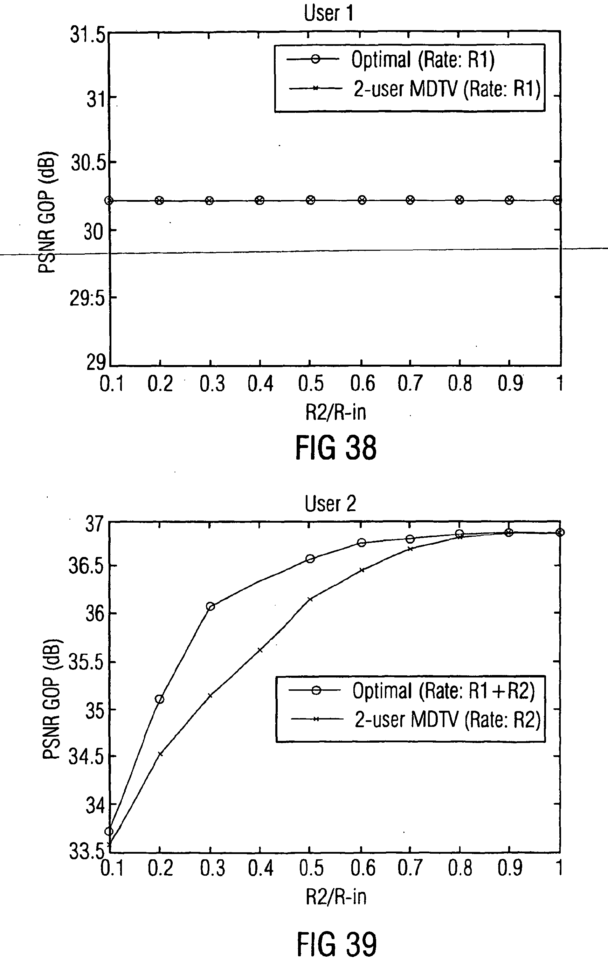

Similar results to those described above for the *Foreman* sequence are observed. Moreover, in Figs. 38 and 39,the end users' profiles are defined by $\rho_1$ =0, P11=15%, P12=10% and P2=10%.

In other words, Fig. 38 compares the quality (PSNR) for user1 for optimal and two-user PDVT as a function of the rate on path2, using the Container test sequence. Path1 is described by the path characteristics rate R1 = R-in and packet loss probability P11 = 15%.

Fig. 39 shows the quality (PSNR) for user2 for optimal and two-user MDVT as a function of the rate on path2, using the Container test sequence. Path1 is described by the rate R1 = R-in and with regard to user1 by the packet loss probability P11 = 15% and with regard to user2 by the packet loss probability P12 = 10%. Path2 is described by the packet loss probability P2 = 10%.

In this case, the high bandwidth user experiences a lower packet loss rate than the low bandwidth user. Description1, optimized for user1 with a higher packet loss rate, will thus contain more protection for the lower layers at the expense of transmitting higher layers. In this situation, it is also noticed that the performance of the 2-user MDVT approach for the high bandwidth user is still at most at 1 dB from the optimal solution.

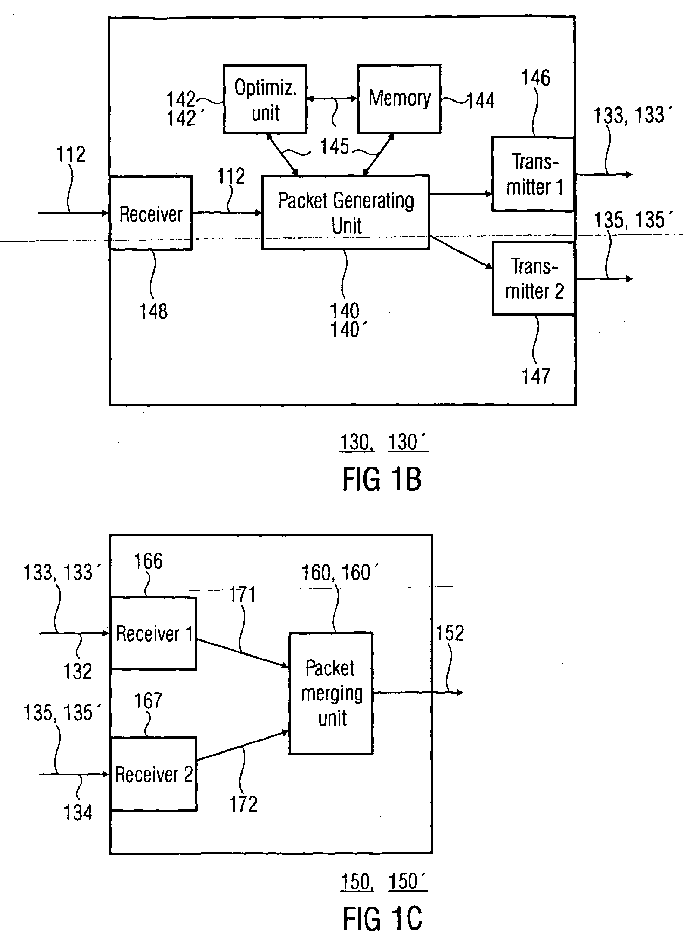

In the following embodiments of the transcoding node and examples of the detranscoding node will be described in more detail, based on Figs. 1B and 1C.

Fig. 1B shows an embodiment of a multiple description transcoding node comprising a packet generating unit 140, 140', an optimizing unit 142, 142', a memory 144, a first transmitter 146, a second transmitter 147 and a receiver 148. The reference signs with "'", e.g 130' refer to the multi-user embodiments. As the design and the basic functionality of the single-user embodiments 130 and the multi-user embodiments 130' are the same, for the following general discussion of the embodiments only the reference signs for the single-user embodiments will be used for better readability, although the description may also apply to the multi-user embodiments. Specific aspects of the multi-user embodiments will be described separately.

The packet generating unit 140, receives via receiver 148 a datablock of streams of, in other words, sequences of datablocks 112. The datablock 112 comprises a given number of datablock parts, wherein in embodiments for prioritized datablocks, each datablock part has a priority associated to it, and at least two data segments of the prioritized datablock have a different priority. With regard to the previously described embodiments using GOP video streams or layered video streams, the whole group of pictures for the M layers can be regarded as forming a datablock wherein the different frames I, P1, B1, ... , P7, B7 and the different layers $L_1$, ...$L_M$, can be considered as the respective datablock parts, each having a priority associated to it.

With regard to the layered structure, each of the layers $L_1$ to $L_M$, has a different priority compared to the other layers, as described when introducing the layered model. With regard to the Group of Pictures, the frames I, P1, ...P7 have a different priority, whereas the frames B1, ... B7 have the same priority, the lowest priority of all frames, as was explained when introducing the GOP structure. Other priority types or structures are possible.

The packet-generating unit 140 is operative to receive datablocks 112 and to generate packets of fixed length L based on the multiple description transcoding parameters provided by the optimizing unit 142. Multiple description transcoding parameters include the previously discussed parameters like the packet budgets for both paths $N_A$, $N_B$, the allocation parameters No, $N_{P1}$, ...$N_{B7}$ and the specific FEC coding applied to each frame or layer.

In case two or more datablock parts are associated with the same priority, for example in case the datablock is a group of pictures, where all B-frames have the same priority, an order, which may also be seen as an "artifial" priority, can be introduced to perform certain embodiments of the methods, for example, the fast iterative Lagrange method optimizing the datablock part specific number individually of each datablock part according to a given sequence or priority, even for datablock parts like the B-frames having originally (with regard to their importance for the reconstruction of the video) the same priority, or for embodiments capable of truncating datablock parts of lower priority, where a truncating datablock part may also be one of the datablock parts having the same priority, for example, the $B_2$-frame, an order or priority among the datablock parts of having the same priority has to be introduced to distinguish between the selected (e.g. $B_1$-and $B_2$-frame) and the truncated datablock parts of a datablock (e.g. $B_3$- to $B_7$-frame).

The communication protocol the transcoding node is operative to receive the streams may be a fixed network or a wireless network protocol or any other protocol.

The packet generating unit 140 is operative to divide each datablock part into a given datablock part specific number of data segments of datablock part specific equal size, as was, for example, described for the layered structure, where $Layer_1$ was divided into $N_1$ parts, or, where for the GOP, for example, frame I was divided into $N_0$ equal sized parts.

Fig. 2 shows an alternative embodiment, where each layer or frame is divided into small sections of fixed length 1, which are equally distributed over the parts each datablock part is divided into. Staying with Fig. 2, frame I is split into $K_i$ sections, which are evenly distributed over the $N_0$ data segments. The packet generating unit is further operative to divide each datablock part to a given datablock part specific number of data segments, such that a first datablock part specific number associated to a first datablock part having a first priority is lower than or at least equal to a second datablock part specific number associated to a second datablock part having a second priority, when said first priority is higher than said second priority, for example, frame I has the highest priority of all frames in an GOP structure, therefore, the datablock part specific number $N_0$ of Frame I has to be lower or at least equal to, for example the datablock part specific number $N_{P1}$ of frame P1.

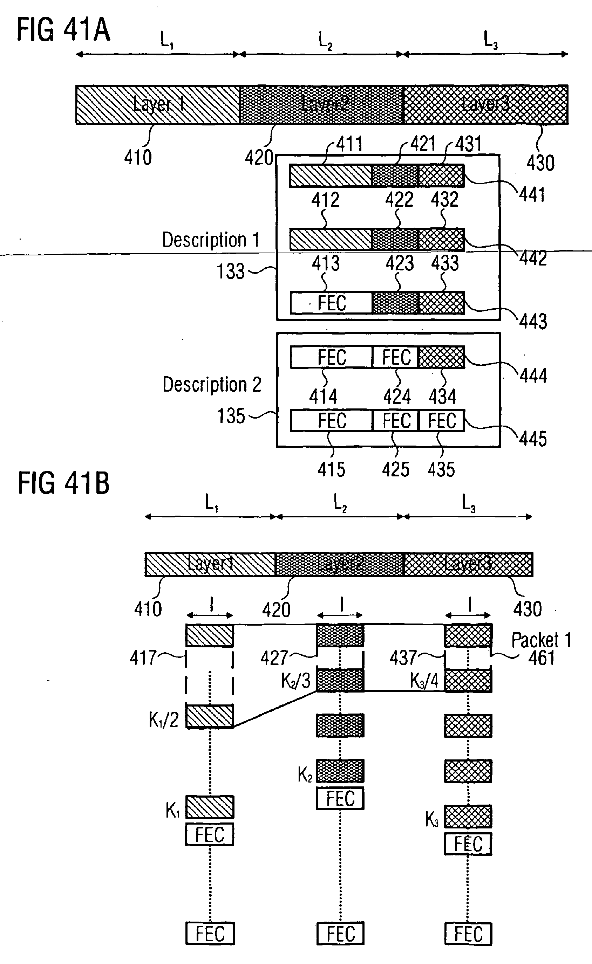

The packet generating unit 140 is, then, operative to generate for each of said datablock parts, a given datablock part specific number of forward error correction code segements or code sections based on said respective block parts and a given datablock part specific forward error correction code. The forward error correction code segments and sections, have the same size as the respective datablock part specific data segments or data sections, as can be seen from Fig. 41A.

Embodiments of the packet generating unit are further operative to divide all or only selected data block parts into the datablock part specific number ($N_1$ to $N_M$, or $N_1$ to $N_j$) of the respective data segments, and to generate a first sequence of packets of equal packet length associated to the first description (133,133'), such that each packet of the first sequence of packets contains from each of the plurality of datablock parts one of the data segments or code segments belonging to the respective datablock part, the number of packets forming the sequence being equal to said first number of packets ($N_A$), and a second sequence of packets of equal packet length (L) associated to the second description (135,135'), the number of packets forming the first sequence being equal to the second number of packets

Selected datablock parts or layers are those datablock parts, which are selected for transmission based on the truncating point or truncating datablock part ($Layer_j$). The truncating point is the datablock part having the "lowest" priority of the datablock parts being transmitted, whereas the truncated datablock parts ($Layer_{j+1}$ to $Layer_M$) are those datablock parts which are not transmitted (see single-user embodiments).

Data segments and code segments are also be referred to as segments, and data sections and code sections are also be referred to as sections.

The first transmitting unit 146 is then operative to transmit the first sequence of packets according to the first communication protocol, and the second transmitting unit is operative to transmit the second sequence of packets according to the second communication protocol.

Further embodiments of the packet generating unit 140, 140' can be operative to add to each packet of the first and second description 133, 133', 135, 135' a header, which includes a unique datablock identifier for identifying the datablock, each packet is associated with. Thus, the detranscoding node can easily check to which datablock each packet belongs to. Further embodiments of the transcoding node can be operative to also include to the header the allocation scheme of each packet, for example in case the optimized transcoding parameters are adapted for each datablock. Thus, examples of the detranscoding node can easily identify where segments of different datablock parts begin and end.

Further embodiments of the packet generating unit 140, 140' or the detranscoding node 150, 150' are operative to further add or check for a data packet identifier to distinguish the packets belonging to one data block among each other, for example, in case the detranscoding node requires to know which packet it has received for the FEC decoding or to detect duplicates of packets.

In embodiments where the method of optimizing the transcoding parameters includes the possibility to truncate layers of lower importance or priority, the packet generating unit 140' can be operative to also include the truncating point in the header to inform the detranscoding node which datablock parts have been selected for transmission.

The terms first and second description and the terms first and second sequence of packets may be used as equivalent terms when talking about the transmission of the first sequence of packets and second second sequence of packets.

Embodiments of the packet generating unit can be operative to arrange the segments (data segment and code segments) according to their priority, i.e. each packet would first contain the segment of the datablock part having the highest priority followed by a segment of the datablock part having the second highest priority, etc. Furthermore the header might comprise the information about what kind of datablock structure or datablock type is used, for example, GOP or layer structure, it may also, in case the data segments are not ordered according to their priority, indicate the sequence or priority of the segments or respective packet allocations.

For multi-cast embodiments, where the first description comprises the layers with the higher priorities, the header can contain the truncating point and further information about the allocation of the second path, for example, the segment_length number of those segments added to description2 with regard to the more important layers comprised in description 1, or any other relevant information.

The optimizing unit 142 is operative to determine the multiple description transcoding parameters based on the aforementioned optimization algorithms. In other words, the optimization unit 142 is operative to perform the aforementioned algorithms to minimize the expected distortion at the detranscoding node 150.

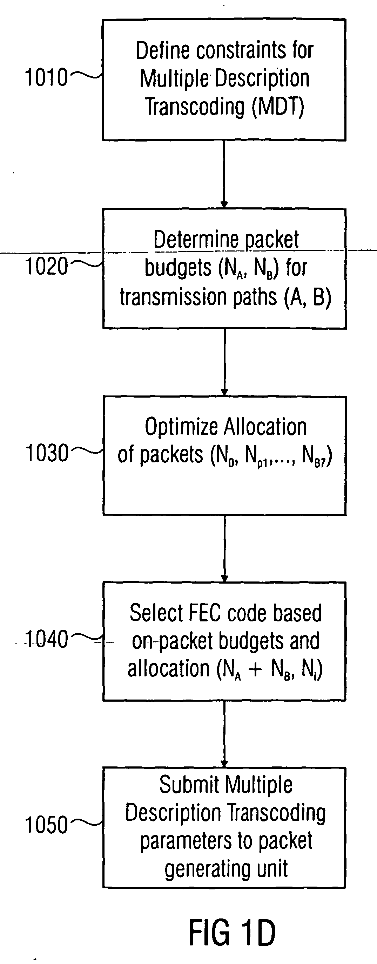

Embodiments of the optimization are described in the following based on Fig. 1D to 1F.

The embodiment of the optimization method shown in Fig. 1D comprises the steps 1010 to 1050.

In step 1010 the optimizing unit defines the constraints for the multiple description transcoding (MDT) performed in the consecutive steps. The constraints to be defined include, e.g. the packet size L of packets to be generated, and in case the datablock parts are split into small sections with length 1, also the section length 1 has to be defined. The possible packet budget and loss probability pairs $(N_{Ai}, P_{Ai})$ and $(N_{Bi}, P_{Bi})$ have to be retrieved, as well as the type of datablock, for example, GOP or layered stream, as the type of the datablock defines also the priority of the datablock parts.

The path characteristics can, for example, be obtained based on messages received from the detranscoding node and be stored in the memory 144.

The packet size and section size may be determined, for example, based on the communication protocols used by the first transmitter 146 and second transmitter 147 depending on the packet payload sizes, these communication protocols support. These constraints together with the priority constraints defined by the type of datablock can also be stored in the memory 144, such that the optimizing unit 142 can select the optimum or at least feasible constraints for the optimization.

In step 1020, the optimizing unit 142 determines the packet budgets $N_A$, $N_B$ from the available packet budget and loss probability pairs for path A and for path B.

In step 1030 the optimizing unit 142 optimizes, based on the packet budgets $N_A$ and $N_B$ the allocation of the packets based on the described optimization algorithms, for example, the iterative Lagrange method, the Greedy algorithm or even the dynamic Greedy algorithm. In other words, the optimizing unit 142 optimizes based on the given packet length L and the other constraints, for example priority, the optimum number of packets $N_0$, $N_{P1}$,... $N_{B7}$ for each datablock part, which is also referred to as allocation. Thus, at the same time the size or contribution $R_i/N_i$ (without sections) or $K_i/N_i$ (with sections) is also determined.

In step 1040 the optimizing unit 142 selects for each datablock part i a datablock part specific forward error correction code based on the total packet budget $N = N_A + N_B$ and the datablock part specific minimum number $N_i$ for recovering the datablock part i. Therefore, a forward error correction code like the Reed Solomon code RS $(N_A + N_B; N_i)$ can easily be selected, as one of the major advantages of a Reed Solomon code RS (n;k) is the fact that the Reed Solomon code RS(n;k) encodes k data symbols or packets with additional n-k additional FEC code symbols or packets such that based on any k from the resulting n symbols or packets the original k data symbols or packets can be recovered. Other FEC codes with similar capabilities can also be used.

In step 1050 the optimizing unit 142 submits the multiple description transcoding parameters to the packet-generating unit. The multiple description transcoding parameters include, for example the packet budgets $N_A$, $N_B$ for path A and B, the datablock part specific FEC codes and, if not fixed, the packet length L and the section length 1.

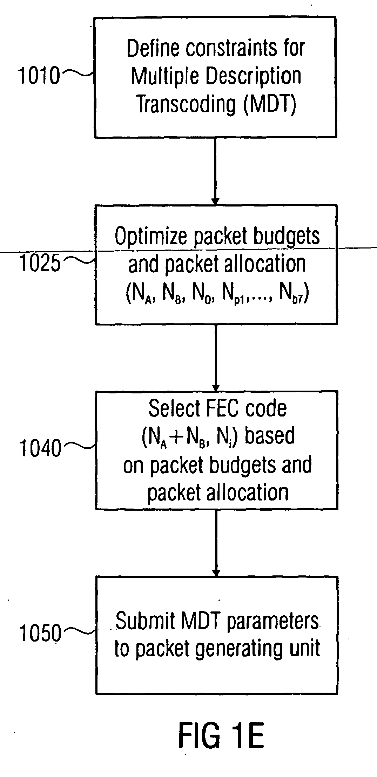

Fig. 1E comprises the steps 1010, 1025, 1040 and 1050 and only differs from Fig. 1D in that steps 1020 and 1030 of Fig. 1D have been merged into one step. Referring back to the objective function the optimization has to be performed for all promising possibilities of path characteristics, i.e. combinations of packet budgets and loss probabilities for both paths. In other words the selection of the packet budget is iteratively optimized together with the allocation parameters by optimizing the allocation for each of these path characteristic combinations for both paths, to obtain the overall optimum multiple description transcoding parameters.

In a third embodiment, the optimizing unit 142 is further operative to determine a truncating point, i.e. optimize the allocation by dropping datablock parts with lower priority. In this case, the factor by which the total packet budget N is extended, for example N' = 8 x N, is a further constraint to be defined in step 1010, and to be used for steps 1020, 1025 and 1030. Thus, furthermore, the information about the truncating point, i.e. the segment $Layer_j$ with the lowest priority still to be transmitted, has to be submitted to the packet generating unit 140. As only these datablock parts will be used for the packet generation (single-user embodiment).

In a fourth embodiment using the scaling factor or a relaxation factor $\mu_1$ and $\mu_2$, for example to handle handover, these constraints also have to be defined in step 1010 for the consecutive steps. In this case, only the aforementioned multiple description transcoding parameters are changed, but the packet-handling unit does not require any specific information here.

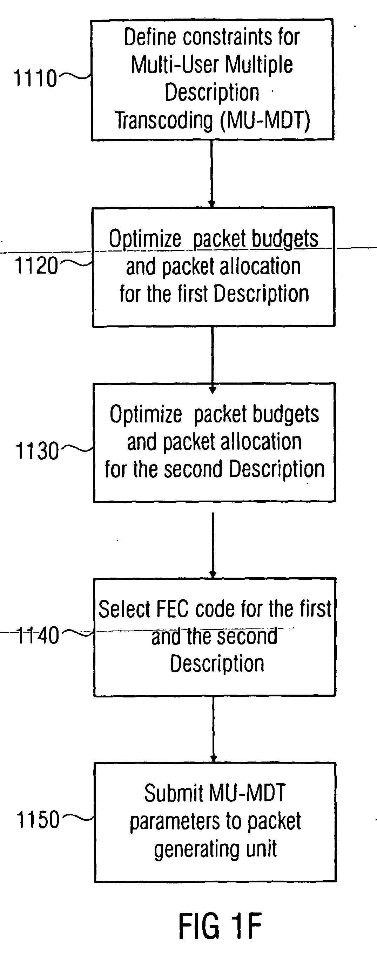

Fig. 1F shows an embodiment of the optimization method for a multi-user multiple description transcoding (MU-MDT) comprising the steps of 1110, 1120, 1130, 1140 and 1150.

Similar to the methods described in Figs. 1D to 1E, in step 1110 the constraints for multi-user multiple description transcoding are defined.

In step 1120, a packet budget $N_A$ and the packet allocation for the first description are optimized independently of the characteristics of the second path.

In step 1130, the packet budget $N_B$ and the packet allocation of the second description are optimized according to the expected distortion function for the multi-user scenario.

In Step 1140 the optimizing unit 142 selects the FEC codes for the first and the second description.

In step 1150, the optimizing unit 140' submits the multi-user multiple description transcoding parameters to the packet generating unit 140'. The multi-user multiple description transcoding parameters include information about the packet budget NA, NB for paths A and B, the datablock parts to be transmitted in the first description, the data block parts to be transmitted with the second description, the FEC codes for the datablock parts and the two descriptions as well as the minimum numbers $N_i$ for each datablock part and each description necessary for recovering the specific datablock part i.

The packet generating unit 140 is operative to use for each datablock part, a datablock part specific forward error correction code.

Fig. 1C shows an example of a detranscoding node 150, 150' comprising a first receiver 166, a second receiver 167 and a packet-merging unit 160, 160'.

The first receiving unit 166 operative to receive packets according to a first communication protocol 133, 133', to check, whether the packets have been received successfully, and to generate a first sequence 171 of packets from successfully received packets, and the second receiving unit 167 is operative to receive packets 135, 135' according to a second communication protocol, the second communication protocol being different to the first communication protocol, to check, whether the packets have been received successfully, and to generate a second sequence of packets 172 from these successfully received packets.

The packet merging unit 160, 160' is operative to receive the first sequence 171 of packets and the second sequence 172 of packets, wherein the packets of the first sequence and the second sequence 171, 172 contain data segments and/or code segments, wherein each of the data segments and/or code segments contained in each of the packets is associated with a different datablock part of a datablock, determine, whether the packets of the first or the second sequence belong to a same datablock, retrieve data segments and/or code segments which are associated to the same datablock part from packets belonging to the same datablock as datablock part specific segments, and decode the datablock part specific segments according to a datablock part specific error correction code, when a number of the datablock part specific segments is at least equal to the given datablock part specific number of datablock parts, and to generate a recovered datablock based on at least one of the decoded datablock part specific segments.

The checking, whether a packet has been received successfully can, for example, be performed based on the respective communication protocol (UMTS, WLAN, etc.) and the error detection capabilities supported therein.

Embodiments of the packet merging unit can be operative to check for a a datablock identifier in headers of packets of the first and the second sequence to determine based on the datablock identifiers, whether packets of the first or the second sequence belong to the same datablock.

Although the embodiments of the transcoding node and the detranscoding node have been described for two paths, for example two communication protocols with one description for each of both paths, alternative embodiments of the transcoding node and detranscoding node can also be operative to support three or more paths, for example communication protocols, like UMTS, WLAN and WIMAX, taking into consideration the path characteristics of the three or more paths, adapting the methods for optimizing the transcoding parameters, the packet generation and the packet merging accordingly.

Embodiments of the transcoding node can be operative to optimize the transcoding parameters for every datablock, for example in case rate adaptive video codecs with adaptive frame sizes are used, or can be operative to, for example in case the frames have a fixed length, to determine the optimized transcoding parameters and store them in the memory 144 for consecutive datablocks, such that the packet generating 140 which reads the transcoding parameters from the memory 144 instead of the optimizing unit 142. In the latter case, the optimizing unit 142 can be operative to determine a new set of optimized transcoding parameters, for example after every fixed number of datablocks, for example every five or ten datablocks or due to changing path parameters.

In the following, further implementation examples are described with regard to a scenario as shown in Fig. 1A. As described before, the role of each of the function elements shown in Fig. 1A can be summarized as follows: The H. 264 encoder generates in a single description video stream. The transcoding node 130 is a network node that is responsible for transcoding the single description video stream 112 into two descriptions 133, 135. The optimization packet and packet allocation carried out by this node on, for example, a Group of Pictures basis. The detranscoding node 150 is responsible for decoding and merging the two received descriptions. The H.264 decoder 120 is operative to decode the recovered video screen 152.

The optimization and packet allocation are executed at the transcoding node. As an example, the following video and network characteristics are considered. With regard to video stream: GOP size = 16, GOP structure = IBP..., frame rate = 30 frames/sec, size of the GOP in bit=121.68kbit, resulting bit-rate=228kbps, frame width = 176, frame height = 144 and Luminance-PSNR = 37.75 dB. With regard to the network characteristics it is considered that the transmission profiles of the two available paths are defined. In this example, the (bit rate, packet loss rate) profiles of paths A and B are considered to be equal to (128 kbps, 0.15) and (192 kbps, 0.1) respectively.

For a given packet length, the two paths can be represented by a packet budget and a packet loss rate. A fixed packet length (L) of 512 bytes is considered; a payload size of 512 bytes is considered and thus the packet header length is neglected. As a result, the profiles of paths A and B are defined by: ($N_A$ = 17, $P_A$ = 0.15) and ($N_B$ = 25, $P_B$ = 0.1)

By setting the section length $1$ to 1 byte and thus the resulting number of sections ($K_1, K_{P1},...,K_{B8}$) of frames $I, P_1...B_8$ is equal to their respective frame lengths($L_1,L_{P1},...,L_{B8}$).

Given the above parameters, the transcoder determines the distribution of the ($K_I,K_{P1},...,K_{B8}$) sections of the GOP frames across the transmitted packets as well as the distribution of the FEC-parts that will protect the video stream. This is done by determining the set of allocation parameters($N_0, N_1,...,M_8$).

The different frames of the GOP are sorted in decreasing order of priority during the optimization process. As an example, for a layered video stream where $Layer_1$ corresponds to the I frame, $Layer_2$ to $Layer_8$ to the P frames and $Layer_9$ to $Layer_{16}$ to the B frames, the following layers' priorities and layers' partitioning constraints are marked:

Priority ($Layer_1$) > Priority ($Layer_2$) > ... > Priority ($Layer_8$), which results in or can be expressed also as: $N_1 \leq N_1 \leq .... \leq N_8$.

Priority ($Layer_8$) > Priority ($Layer_9$) = Priority ($Layer_{10}$) = ... Priority ($Layer_{16}$), which results in or can be expressed also as $N_8 \leq N_j, j$ = 9...16.

To determine the set of allocation parameters($N_1,N_2,...,N_{16}$), the expected distortion at the receiver is minimized by optimizing jointly over both paths; i.e. for a packet budget of ($N_A+N_B$ =42) packets and for an average packet loss

$$\text{rate } P = \frac{N_A}{N_A + N_B} \times P_A + \frac{N_B}{N_A + N_B} \times P_B = 0.12 \ .$$

For the parameters given at the beginning of the section, the resulting allocation ($N_1,N_2,...,N_{16}$) is equal to (30,30,31,31,31,31,31,33,33,33,33,33,33,33,33,33)and the average PSNR is equal to 35.66 dB. $N_1$ = 30 means that 30 packets out of the 42 transmitted packets should be correctly received to recover $Layer_1$. This is implemented by partitioning $Layer_1$ into 30 equal parts of length $\left\lceil \dfrac{K_1}{N_1} \right\rceil$ · These parts are further protected with a RS (42, 30) resulting into 12 FEC parts. The data and FEC parts (total of 42 parts) are distributed over the 42 packets. The same procedure is applied for $Layer_2$ to $Layer_{16}$. As a constraint over the packet length during the optimization problem, the packet filling problem is solved as well; i.e. the summation of the data or FEC parts of $Layer_1$ to $Layer_{16}$ that are allocated to each packet will not exceed the packet length (The summation should be equal to the packet length, i.e. 512 bytes, for optimal allocation). The optimization and packet allocation procedures are further illustrated in the schematic description below.

For simplicity, a 3-layer video stream is considered, which is transcoded into two descriptions of $N_A$ =3 and $N_B$ =2 packets. The transcoder determines the optimal allocation set for ($N_1,N_2,N_3$). When optimized jointly over both paths, one set of ($N_1,N_2,N_3$) values is determined such that Layer$_i$ can be recovered from any $N_i$ received packets, i.e. irrespective of whether they come from path A or B.

In the example shown in Fig. 41A, the transcoder determines the allocation parameters ($N_1, N_2, N_3$) = (2, 3, 4). Accordingly, Layer$_1$ 410 (datablock 410) is divided into the $N_1$ = 2 equal sized datablock parts 412, 414, Layer$_2$ (datablock 420) into $N_2$ = 3 equal sized datablock parts 421, 424, 423, and Layer$_3$ into $N_3$ = 4 equal sized datablock parts 431, 432, 433, 434. Furthermore, based on the packet budgets ($N_A$, $N_B$) = (3,2), the transcoding node determines based on a generic definition for the selection of the Reed Solomon code RS($N_A$ + $N_B$, $N_i$), i = 1,2,3, the following specific Reed Solomon codes: RS (5,2) for Layer$_1$, RS (5,3) for Layer$_2$, and RS (5,4) for Layer$_3$.

Accordingly, the transcoding node, i.e. the packet generating unit, generates three SEC code segments 413, 414 and 415 for Layer$_1$, two SEC code segments 424, 425 for Layer$_2$ and one FEC code segment 435 for Layer$_3$ based on the respective RS code. The FEC code segments have the same length or size as the respective data segments of the same layer or data block.

Fig. 41A shows that the first packet 441, the second packet 442 and the third packet 443 of description1 133 have the same fixed length L as the first packet 434 and the second packet 435 of description 2 135. The fixed packet length L is not to be confused with the length $L_i$ , also referred to as $R_i$, of the layers or datablock parts 410, 420, and 430 before dividing them into the respective data segments.

Fig. 41B shows an embodiment using sections of fixed length 1. In this case, each of the layers, $Layer_1$ to $Layer_3$, or datablock parts 410 to 430, is divided into sections. Thus, $Layer_1$ is represented by $K_1$ sections of length 1, $Layer_2$ is represented by $K_2$ sections and $Layer_3$ is represented by $K_3$ sections. In contrast to the embodiment of Fig. 41A, the datablock parts are not directly divided into equal sized data segments, but the $K_i$ sections of each datablock part i are equally divided in number, as was explained before. Accordingly, a datablock part specific number $k_i$ of sections is allocated to each packet, as shown by the reference sign 417, for datablock part 1, reference sign 427 for datablock part 2 and 437 for datablock part 3, building "packet 1" 461.

Comparing both methods, the method according to Fig. 41B is advantageous in that it does not require zero padding, whereas on the other hand, the method using sections, as shown in Fig. 41B, is advantageous in that it is less computing intensive with regard to the optimization.

In other words, in Fig. 41A, the optimization result for the allocation set$(N_1,N_2,N_3)$ is equal to (2,3,4) . This means that a minimum of 2, 3, and 4 packets should be received to recover $Layer_1$, $Layer_2$, and $Layer_3$ respectively. To satisfy this condition, each $Layer_i$ is partitioned into $N_i$ equal parts, which are allocated to the first $N_i$ packets. A ($N_A$+$N_B,N_i$)-Reed-Solomon code is further applied to each layer to generate the corresponding FEC parts, which are allocated to the rest of the transmitted packets. The above procedure can be alternatively accomplished by first decomposing each layer into sections of length 1 and building an offline matrix of FEC codes as explained in the first report (Fig. 41B). In this case, the data sections, of length $1,$ are allocated to the first $N_i$ packets and the FEC sections, of length $1,$ are allocated to the remaining packets.

In a lossy transmission environment, some of the packets of each description may be lost. The detranscoding node, however, can still use the redundancy in the video stream to compensate for partial losses within each description. The detranscoding node executes the following steps to recover the single description stream:

Step 1: The detranscoding node buffers the received packets from both descriptions before play-out.
Step 2: Each correctly received packet is decoded and the data that corresponds to each layer is retrieved.
*Step* 3: $Layer_i$ could be recovered when $N_i$ packets are correctly decoded as the RS code can correct up to $N_A$+$N_B$-$N_i$ erasures out of $N_A$+$N_B$ packets.
Step 4: The correctly FEC-decoded layers are combined to recover the single description video stream. In case some layers of the stream are lost, the detranscoding node applies the appropriate error concealment technique. For instance, for an *IBP...* video sequence, a copy previous frame error concealment strategy is provided.
Step 5: The recovered video stream is fed to the H.264 decoder.

Summarizing the aforementioned, a novel approach for video communication over erasure channels is presented. In traditional joint source channel coding (JSCC) approaches, the source and channel codes are optimized for transmission over a direct path between a transmitter and a receiver. FEC-based multiple description coding falls into this category of JSCC as multiple independent descriptions are generated and optimized for a given channel profile. Meanwhile, it is shown that the error resilience of multiple description coding can be improved by transmitting over multiple channels. To benefit from this additional error robustness, an approach is proposed that exploits path diversity and by which the video stream is optimized for a two-path transmission. In practical situations, a direct two-path connection between a transmitter and a receiver may not exist. However, due to the diversity of multimedia applications and the heterogeneity among the end users, media gateways are often deployed between a transmitter and a receiver to transcode a video stream so that it matches the end users' bandwidth requirements. Relay nodes can be further used to forward the resulting video stream over multiple channels to the receiver. The general case where the two paths could become available at any point between the transmitter and the receiver is addressed. From this perspective, Multiple Description Video Transcoding as a novel scheme was introduced that benefits from the error robustness of multiple description coding at any operational point in the network.

In embodiments, a layered video stream as an input to the transcoding node was considered. The transcoder protects the input stream to transmit in two descriptions over separate paths to the receiver. To carry the above optimization, traditional FEC-based multiple description coding techniques, often applied at the transmitter and optimized for one path transmission, no further result in an optimal solution. To overcome the limitations of MDC-FEC approaches, a new method for carrying the optimization is proposed based on the channel profiles of the two available paths. A fast and dynamic greedy allocation algorithm is also introduced to solve the above optimization. This low complexity is a major requirement for real-time video transmission.

Several MDVT application scenarios were described. First, the performance of the approach for balanced and unbalanced paths Operation was demonstrated. It was revealed the gain that results from jointly optimizing over the two available paths compared to JSCC, where each path is optimized separately, for both balanced and unbalanced cases. The problem of path outages where one or both paths are unavailable for a short period of time is also considered.

A relaxation parameter that trades off between central and side distortion is introduced. It is shown that, in the presence of outages, a correct choice of the relaxation parameters by the transcoding node can lead to a significant gain in PSNR. Then, the case where a direct two-path connection exists between the transmitter and the receiver is considered. The flexibility that arises from applying MDVT directly at the source is shown. In accordance, the importance of rate adaptation between the transmitter and the transcoding node when MDVT is carried out in the network was concluded.

Then, the MDVT concept was extended to cover the multi-user MDVT case. In such a scenario, all users share a multicast channel with the transcoding node. High bandwidth users benefit from a second connection as well. A 2-user MDVT scenario with a low and a high bandwidth user was considered. The optimal solution requires sending one description to the low bandwidth user and two other descriptions to the high bandwidth user. In the 2-user MDVT method, however, a common base description is transmitted to both users and the high bandwidth user receives an enhancement description as well. It was shown that one can achieve the optimal quality for the low bandwidth user and it is less than 1 dB away from the optimal quality for the high bandwidth user for different rate and packet loss profiles. Meanwhile, the 2-user MDVT method provides significant bandwidth savings compared to the optimal solution as fewer descriptions are transmitted.

Several extensions to the described approach are possible, some examples will be shortly described in the following.

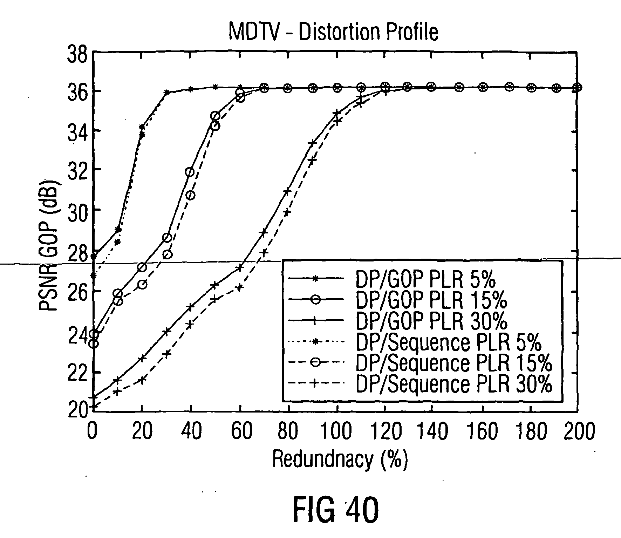

First, in the proposed MDVT approach, a distortion matrix is being transmitted as side information along the video stream to the transcoding node. Although this information is required by the transcoder to determine the optimal FEC allocation within each description, it results in an additional overhead. The lack of this information, however, will lead to a suboptimal solution. One alternative to be investigated is to use the correlation between the distortion profiles of different GOP to reduce the overhead. In Fig. 40 the average PSNR for a *Foreman* sequence of 20 GOP is plotted. In the optimal case, the distortion profile (DP) of each GOP is sent along the bit stream. Fig. 40 shows that if the distortion profile is transmitted for the first GOP only and used for optimizing the rest of the GOP in the sequence, then a solution close to the optimal one can be still obtained.

Second, in this scenario, a user will receive two descriptions from two paths with different characteristics. Typically, the receiver will buffer the descriptions before play-out. Meanwhile, if the delay difference on both paths is high then only one description will be displayed. Adding the path delay metric besides the packet loss rate and bit rate of a path would allow for path selection so that the delay difference on the two chosen paths is minimized.

An algorithmic implementation for a 2-user MDVT scenario was presented. Extending the algorithm to the multi-user MDVT case to optimize for multiple users with different packet loss rates within each multicast group is worth investigating as well.

From the implementation work perspective, the following alternatives are noted.

Firstly, the IBP structure case was given as an example of the proposed approach. An H.264-SVC stream can be used as another example. The distortion profiles of a scalable video stream should be calculated as well.

Secondly, the MDVT approach has been presented for video communication. Nevertheless, it can be applied to multimedia communications in general. Applying this approach for audio transmission, for instance, is another challenging task. Finally, it was noted that this was one way of presenting a way of performing multiple description transcoding. Other multiple description coding methods, e.g. temporal downsampling or spatial downsampling of the video stream into two descriptions, can be used as well. In particular, methods based on processing a GOP on a layer basis could decrease the delay for real-time communications .

In other words, the present invention describes a method and a system for the transcoding of media from a single description encoded media to a multiple description encoded media in order to support an error resilient transmission of the media to a user terminal via multiple transmission paths concurrently, e.g. UMTS, WLAN, WIMAX. Thus, the described embodiments of "multiple description media transcoding for multi-path transmission" and "in-network multiple description media transcoding for multi-path transmission" can be considered as a method for cross-layer optimization for multimedia communication towards distribution and multi-user mixed application scenarios.

Depending on certain implementation requirements of the inventive methods, the inventive methods can be implemented in hardware or in software. Implementation can be performed using a digital storage medium, in particular, a disc, a DVD or a CD having electronically readable control signals stored thereon, which cooperate with a programmable computer system, such that the inventive methods are performed. Generally, the present invention is, therefore, a computer program product with a program code stored on a machine-readable carrier, the program code being operative for performing the inventive methods when the computer program product runs on a computer. In other words, the inventive methods are, therefore, a computer program having a program code for performing at least one of the inventive methods when the computer runs on a computer.

**Claims**

1. A transcoding node (130,130') for multiple description transcoding, the transcoding node being a network node comprising:

   a receiver (148) operative to receive a datablock (112) as single description datablock, wherein said datablock (112) comprises a given number (M) of datablock parts (Layer$_1$ - Layer$_M$);
   an optimizing unit (142, 142') operative to determine transcoding parameters (145) for a first description (133, 133') and a second description (135, 135') of a datablock (112) based on transmission path characteristics (N$_{Ai}$, P$_{Ai}$) of a first transmission path (132) and on transmission path characteristics (N$_{Bi}$, P$_{Bi}$) of a second transmission path (134), wherein said transmission path characteristics of said first path comprise available packet number and packet loss probability pairs (N$_{Ai}$, P$_{Ai}$) of said first transmission path and said transmission path characteristics of said second path comprise available packet number and packet loss probability pairs (N$_{Bi}$, P$_{Bi}$) of said second transmission path, wherein said first description is to be transmitted as a first sequence of packets comprising a first number (N$_A$) of packets using a first transmission protocol and said second description is to be transmitted as a second sequence of packets comprising a second number (N$_B$) of packets using a second transmission protocol, wherein said packets of said first and said second sequence of packets have the same packet length (L), wherein said first and said second communication protocol are different, and wherein said optimizing unit (142) is further operative to determine said transcoding parameters based on an expected distortion when transmitted via said first and said second communication protocol, wherein said first transmission path and said second transmission path are considered as one composite transmission path during optimization, and wherein said expected distortion is determined based on a probability that one packet is lost on either transmission paths, and wherein said optimizing unit (142, 142') is operative to determine said first number of packets (N$_A$) from said available numbers of packets (N$_{Ai}$) of said first transmission path and said second number of packets (N$_B$) from said available numbers of packets (N$_{Bi}$) of said second transmission path during said optimization, said first number of packets (N$_A$) and said second number of packets (N$_B$) being transcoding parameters (145),
   wherein said optimizing unit is operative to determine as transcoding parameter for each datablock part of a plurality of datablock parts of the given number of datablock parts a datablock part specific number (N$_1$ to N$_M$) of packets that are necessary to recover the datablock part (Layer$_1$ to Layer$_M$),
   wherein said datablock parts of said plurality of datablock parts (Layer$_1$ to Layer$_M$) are each associated to a datablock part specific priority, wherein at least two datablock parts are associated to a different priority,
   wherein said optimizing unit (142, 142') is operative to determine said datablock part specific numbers (N$_1$ to N$_M$) of packets such that a datablock specific number (N$_1$) of packets associated to a datablock part associated to a first priority is smaller than or is at least equal to a datablock specific number (N$_2$) of packets associated to a second datablock part (Layer$_2$) associated to a second priority, when said first priority is higher than said second priority,
   wherein said optimizing unit is operative to determine as transcoding parameter a datablock part specific forward error correction code (FEC$_1$ to FEC$_M$; FEC$_1$ to FEC$_j$) associated to each data block part of said plurality of datablock parts (Layer$_1$ to Layer$_M$; Layer$_1$ to Layer$_j$), wherein said datablock specific FEC codes are determined such that a data block part (Layer$_1$ to Layer$_M$; Layer$_1$ to Layer$_j$) can be recovered based on any combination of said datablock part specific packet number (N$_1$ to N$_j$; N$_1$ to N$_M$) of packets comprising a data segment (411, 412) and/or a code segment (413,414,415) belonging to said respective data block part;
   a packet generating unit (140,140') operative to generate said first sequence of packets comprising said first number of packets (N$_A$) for said first description and said second sequence of packets comprising said second number of packets (N$_B$) for said second description based on said transcoding parameters (145),
   wherein said packet generating unit (140,140') is operative to divide each of said plurality of data block parts (Layer$_1$, to Layer$_M$; Layer$_1$ to Layer$_j$) into said datablock part specific packet number (N$_1$ to N$_M$; N$_1$ to N$_j$) of said respective data segments,
   wherein said packet generating unit (140,140') is operative to generate for each of said plurality of datablock parts a datablock part specific number of said code segments based on said respective datablock part specific FEC codes (FEC$_1$ to FEC$_M$; FEC$_1$ to FEC$_j$), wherein said data segments and said code segments belonging to a same datablock part have a same datablock part specific segment size, and each packet of the first sequence of packets and each packet of the second sequence of packets comprises a data segment of said data segments or a code segment of said code segments; and
   a transmitting unit (146) operative to transmit said first sequence of packets according to said first communication protocol over said first transmission path (132), and to transmit said second sequence of packets according to said second communication protocol over said second transmission path (134),

wherein said optimizing unit (142) is operative to determine said transcoding parameters according to the following objective function:

$$\{N_A, N_B, N_1, N_2, \ldots N_M\} = \arg\min ED(N_A, N_B, P_A, P_B, N_1, N_2, \ldots N_M),$$

and where constraints for said minimization are defined as follows:

$$\left\lceil \frac{R_1}{N_1} \right\rceil + \left\lceil \frac{R_2}{N_2} \right\rceil + \ldots + \left\lceil \frac{R_M}{N_M} \right\rceil \le L,$$

$$N_A \in \bar{N}_A, N_B \in \bar{N}_B,$$
$$N_1 \le N_2 \le \ldots \le N_M,$$
$$N_M \le N_A + N_B,$$

wherein $N_A$ refers to said first number of packets associated to said first description, $N_B$ refers to said second number of packets associated to said second description, M refers to said given number of datablock parts said datablock comprises, $N_1$ to $N_M$ refer to the datablock part specific numbers of data segments each of said plurality of datablock parts is divided into, ED refers to a expected distortion function, L refers to said equal packet length, $R_1$ to $R_M$ refer to datablock part specific lengths of said respective datablock parts, $\vec{N}_A$ refers to all possible first numbers ($N_{Ai}$) of packets of the first transmission oath and $\vec{N}_B$ refers to all possible second numbers ($N_{Bi}$) of the second transmission path.

2. The transcoding node according to claim 1, wherein said optimizing unit (142) is operative to determine said transcoding parameters such that said expected distortion of said datablock (112) is minimized.

3. The transcoding node according to claim 1 or 2, wherein said first description (133,133') and said first transmission path (132) are associated to a first communication protocol and said second description (135,135') and said second transmission path (134) are associated to a second communication protocol.

4. The transcoding node according to one of the claims 1 to 3, wherein said optimizing unit is operative to select said plurality of datablock parts (Layer$_1$ to Layer$_j$) such that a number of said plurality of datablock parts is smaller than said given number of datablock parts (Layer$_1$ to Layer$_M$), and to use only data segments and/or code segments of said plurality of datablock parts for generating said first sequence of packets.

5. The transcoding node according to one of the claims 1 to 4, wherein said-optimizing unit is operative to use as transcoding parameter a first number of packets ($N_A$) associated to said first description (133,133') and a second number of packets ($N_B$) associated to said second description (135,135'); and
wherein said a packet generating unit (140,140') is operative to generate a first sequence of packets of equal packet length associated to said first description (133,133'), such that each packet of said first sequence of packets contains from each of said plurality of datablock parts one of said data segments or code segments belonging to said respective datablock part, the number of packets forming said sequence being equal to said first number of packets ($N_A$), and a second sequence of packets of equal packet length (L) associated to said second description (135,135'), the number of packets forming said first sequence being equal to said second number of packets.

6. The transcoding node according to one of the claims 1 to 5, wherein said packet generating unit (140, 140') is further operative to generate said second sequence of packets of equal packet length (L) associated to said second description (135,135') such that each packet of said second sequence contains from each of said plurality of datablock parts one data segment or code segment belonging to said respective datablock part, the equal packet length being equal to the equal packet length of the first sequence of packets;

7. The transcoding node according to one of claims 1 to 6, wherein said optimizing unit (142) is operative to use the following definition for said expected distortion:

$$ED = \sum_{i=N_A+N_B-N_1+1}^{N_A+N_B} P_r\left(N_A+N_B,i\right) \times D(Layer_1) + \sum_{i=N_A+N_B-N_2+1}^{N_A+N_B-N_1} P_r\left(N_A+N_B,i\right) \times D(Layer_2)$$

$$+ \sum_{i=N_A+N_B-N_1+1}^{N_A+N_B-N_2} P_r\left(N_A+N_B,i\right) \times D(Layer_3) + ... + \sum_{i=N_A+N_B-N_M+1}^{N_A+N_B-N_M-1} P_r\left(N_A+N_B,i\right) \times D(Layer_M)$$

$$+ Source\_Distortion(Layer_1, Layer_2, Layer_3, ..., Layer_M),$$

where $Source\_Distortion\ (Layer_1, Layer_2, Layer_3, ..., Layer_M)$ is the source distortion of the datablock due to quantization errors, where $D(Layer_i)$ is the additional distortion when $Layer_i$ is lost, i = $1,2,...M$, where the probability that $i$ out of $N_A+N_B$ packets are lost is:

$$P_r(N_A+N_B,i) = \binom{N_A+N_B}{i} x P^i x (1-P)^{N_A+N_B-i}$$

where $P$ is the probability that one packet is lost on either paths and is defined by:

$$P = P_r = \frac{N_A}{N_A+N_B} \times P_A + \frac{N_B}{N_A+N_B} \times P_B,$$

and where $N_1,N_2,...,N_M$ are said datablock specific segment numbers.

8. The transcoding node according to claim 7, wherein said optimizing unit (142) is operative to determine said datablock specific segment number ($N_1$ to $N_M$) based on an iterative Lagrange method.

9. The transcoding node according to claim 7, where said optimizing unit (142) operative to determine said datablock part specific segment numbers ($N_1$ to $N_M$) based on a fast iterative Lagrange method, wherein said datablock part specific segment numbers are minimized independently starting with minimizing the datablock part specific segment number ($N_1$) of the datablock part having the highest priority.

10. The transcoding node according to claim 7, where said optimizing unit (142) is operative to determine said datablock part specific segment numbers ($N_1$ to $N_M$) based on a Greedy allocation method.

11. The transcoding node according to claim 10, wherein said optimizing unit (142) is operative to perform the following steps for said Greedy allocation method:

    a) determine a minimum datablock path specific number ($N_1$) for each of said datablock parts,
    b) determine a slope-value that results from every possible increment of a datablock part specific segment number ($N_i$) by incrementing by a variable integer step size, wherein said slope-value is defined as follows:

$$slope(i) = \frac{D(iteration(t)) - D(iteration(t-1))}{L(iteration(t-1)) - L(iteration(t))} \qquad , i = 1...M$$

wherein D is a total distortion, wherein L is a total rate respectively and t is the iteration number,
c) determine the datablock part specific segment number ($N_i$) that minimizes the slope value and increment the datablock part specific segment number ($N_i$) by its corresponding step size, and
d) repeat steps b) and c) until L(iteration) = L, wherein L is said packet length.

12. The transcoding node according to claim 11, wherein said optimizing unit (142) is operative to use a dynamic Greedy algorithm and to truncate the datablock at a truncating datablock part (Layer$_j$) and to perform the following steps for the dynamic Greedy algorithm:

a) setting the total number of packets to a given integer multiple of a possible total packet number ($N_j$),
b) determining the truncating datablock part by applying the basic algorithm according to claim 10, and defining a datablock part as truncating datablock part in case the datablock part specific number of a datablock part of lower priority is higher than said total packet number ($N_{j+1} > N$),
c) applying the basic algorithm according to claim 10, to determine the datablock part specific segment numbers ($N_1$ to $N_M$; $N_1$ to $N_j$);

and wherein said packet generating unit (144) is operative to not use data segments and/or code segments of datapacket parts ($N_{j+1}$ to $N_M$) having a lower priority for generating said first or second description.

13. The transcoding node according to one of the claims 1 to 12, wherein said optimizing unit (142) is operative to use an expected distortion which is defined by a central distortion and a side distortion, wherein said central distortion considers said first and said second description and wherein said side distortion considers only one of said descriptions.

14. The transcoding node according to claim 13, wherein said optimizing unit (142) is operative to determine said expected distortion based on the following equation:

$$\mathtt{Expected\ Distortion} = D_c + \mu * D_s,$$

where $D_c$ is the central distortion, and $D_s$ is said side distortion, and wherein $\mu$ is a scaling factor.

15. The transcoding node according to of the claims 1 to 12, wherein said optimizing unit (142) is operative to use an expected distortion which is defined by a central distortion and a first side distortion and a second distortion, wherein said central distortion considers said first description and said second description, wherein said first distortion considers only said first description and wherein said second distortion considers only said second description.

16. The transcoding node according to claim 13, wherein said optimizing unit (142) is operative to determine said expected distortion based on the following equation:

$$\mathtt{Expected}\ Distortion = D_c + \mu_1 * Ds_1 + \mu_2 * Ds_2,$$

where $D_c$ is the central distortion, and $D_{s1}$ is said first side distortion and $D_{s2}$ is said second side distortion, and wherein $\mu_1$ is a first scaling factor and $\mu_2$ is a second scaling factor.

17. The transcoding node according to claim 5, wherein said optimizing unit (142') is further operative to determine said transcoding parameters such that said first number of packets ($N_A$), said datablock part specific number of segments ($N_1$-$N_j$) and said datablock part specific forward error correction codes ($FEC_1$-$FEC_j$) for said plurality of datablock parts (Layer$_1$, Layer$_j$) is determined considering only said first transmission path characteristics ($N_A$, $P_A$), and to determine said second number of packets ($N_B$), at least one other datablock part specific number of segments ($N_{j+1}$,

$N_M$) and at least one other datablock part specific FEC code ($FEC_{j+1}$ to $FEC_M$) for at least one other datablock part ($Layer_{j+1}$ to $Layer_M$) considering said first and said second transmission path characteristics,
wherein said packet generating unit (144') is operative to
generate for said at least one other datablock part ($Layer_{j+1}$ to $Layer_M$) a datablock part specific number ($N_B$) of said code segments based on said respective datablock part specific FEC codes ($FEC_{j+1}$ to $FEC_M$), wherein said data segments and said code segments belonging to the same at least one other datablock part have a same datablock part specific segment size; and
generate a second sequence of packets of equal packet length associated to said second description, such that each packet of said second sequence contains from each of said plurality of datablock parts ($Layer_1$ to $Layer_M$) at least a part of one code segment belonging to said respective datablock part and/or contains from said at least one other datablock part ($Layer_{j+1}$ to $Layer_M$) one of said data segments or code segments belonging to said respective at least one other datablock part ($Layer_{j+1}$ to $Layer_M$).

18. In a transcoding node according to claim 17, wherein said optimising unit (142') is operative to determine the transcoding parameters based on the constraint that all packets have the same packet length (L) and that data segments or code segments belonging to said plurality of datablock parts ($Layer_1$ to $Layer_j$) are partitioned into equal sized subsegments, such that each packet of the second sequence of packets comprises one subsegment of each of said plurality of datablock parts ($Layer_1$ to $Layer_M$).

19. The transcoding node according to claim 18, wherein said optimising unit (142') is operative to determine said first description based on a first expected distortion function and said second description based on a second expected distortion function.

20. The transcoding node according to claim 19, wherein said first expected distortion is defined by:

$$ED(i,t) = \sum_{k=0}^{N_B} \left[ P_r(N_B,k) * \right] \sum_{a=N_A-N(Layer_i)+1}^{N_A-N(Layer_{i-1})} P_r N_A, a) * D(Layer_{i-1}) ,$$

with

$$N(Layer_i) = maximum(N_i - n\_segment(i,k,t,N(Layer_{i-1})),$$

wherein ED is the expected distortion, $N_A$ the first number of packets, $N_B$ the second number of packets, D is the additional distortion, $N_i$ the datablock part specific number of segments, i an index of the datablock parts, k a summing index, t the number of segments of said plurality of datablock parts added to said second description and n_segment the number of correctly received packets of said second description.

21. The transcoding node according to claim 19 or 20, wherein said optimizing unit (142') is operative to use the following expected distortion function for the second description;

$$ED(i,t) = \sum_{k=0}^{N_B} \left[ P_r(N_B,k) * ED(k) \right],$$

where ED (k) =0, n_segment (i,k,t) $\geq N_B$

$$ED(k) = \sum_{a=0}^{N_A-N(Layer_{i-1})} P_r(N_A,a) * D(Layer_i), \text{ otherwise}$$

otherwise

**22.** The transcoding node according to claim 21, wherein said optimizing unit (142') is operative to determine a number of datablock parts for each datablock part according to the following Greedy allocation algorithm performing the following steps:

a) setting the number of transmitted subsegments of said plurality of datablock parts and the number of segments of said at least one other datablock part (Layer$_{j+1}$ to Layer$_M$) to zero;
b) determine, for each datablock part a cost of adding said respective subsegment or segment to said second description, where said cost is defined by the following equation:

$$\text{cost (i)} \ = \frac{ED(i,t-1) - ED(i,t)}{L(i,t) - L(i,t-1)}$$

where i is an index of said datablock parts, t(i) is said number of segments of said plurality of datablock parts and said number of segments of said at least one other datablock part, ED(i,t) said expected distortion functions, and L(i,t) is a rate indicating a part of said packet occupied by said segments or subsegments with regard to the fixed packet length.
(c) at a subsegment or segment to the two said second description for the datablock part that maximizes said cost function,
(d) repeat steps (b) and (c) until the following condition is fulfilled:

$$\sum_{i=1}^{M} L(i,t(i)) = L \ ,$$

wherein L is the packet length.

**23.** The transcoding node according to one of the claims 1 to 22, wherein said datablock parts are split into data sections of common size (1), said section size being common to said datablock parts, such that each datablock part is represented by a datablock part specific number ($K_1$ to $K_M$) of sections, and wherein said optimizing unit (142, 142') and said packet generating unit (140, 140') are operative to use said sections for optimization and packet generation.

**24.** The transcoding node (130,130') according to one of the claims 1 to 23, wherein said packet generating unit (140, 140') is further operative to generate said second sequence of packets such that each packet of said second sequence is not contained in said first sequence of packets.

**25.** The transcoding node according to one of the claims 1 to 24, wherein said optimizing unit (142) is operative to determine said transcoding parameters for all or a plurality of possible combinations of said transmission path characteristics ($N_{Ai}$, $P_{Ai}$) of said first path and said transmission path characteristics ($N_{Bi}$, $P_{Bi}$) of said second path.

**26.** The transcoding node according to one of the claims 1 to 25, wherein said optimizing unit (142, 142') is operative to determine said packet length (L) based on a datablock type said datablock belongs to or based on said first or second transmission protocol.

**27.** The transcoding node according to one of the claims 1 to 26, further comprising:

a receiving unit (148) operative to receive said datablock (112) over a third communication protocol.

**28.** The transcoding node according to one of the claims 1 to 27, further comprising a memory (144) operative to store said transcoding parameters, and wherein said packet generating unit (140, 14') is operative to receive said transcoding parameters from said optimizing unit (142, 142') or said memory (144).

**29.** The transcoding node according to one of the claims 1 to 28, wherein said optimizing unit (142, 142') is operative to determine said transcoding parameters for each datablock individually.

**30.** The transcoding node according to one of the claims 1 to 29, wherein said optimizing unit (142, 142') is operative to check whether said transmission path characteristics of said first and second path have changed and to determine transcoding parameters, whenever said transmission path characteristics have changed.

**31.** The transcoding node according to one of the claims 1 to 30, wherein said packet generating unit (140, 140') is operative to add a header to a packet of said first or said second description, said header comprising a datablock identifier, which is associated to said datablock and different to datablock identifiers of other datablocks.

**32.** A method for multiple description transcoding, comprising the following steps:

receiving a datablock (112) as single description datablock, wherein said datablock (112) comprises a given number (M) of datablock parts ($Layer_1$ - $Layer_M$);

determining transcoding parameters (145) for a first description (133,133') and a second description (135, 135') of a datablock (112) based on transmission path characteristics ($N_{Ai}$, $P_{Ai}$) of a first transmission path (132) and on transmission path characteristics ($N_{Bi}$, $P_{Bi}$) of a second transmission path (134), wherein said transmission path characteristics of said first path comprise available packet number and packet loss probability pairs ($N_{Ai}$, $P_{Ai}$) of said first transmission path and said transmission path characteristics of said second path comprise available packet number and packet loss probability pairs ($N_{Bi}$, $P_{Bi}$) of said second transmission path, wherein said first description is to be transmitted as a first sequence of packets comprising a first number ($N_A$) of packets using a first transmission protocol and said second description is to be transmitted as a second sequence of packets comprising a second number ($N_B$) of packets using a second transmission protocol, wherein said packets of said first and said second sequence of packets have the same packet length (L), wherein said first and said second communication protocol are different, wherein said optimizing unit (142) is further operative to determine said transcoding parameters based on an expected distortion when transmitted via said first and said second communication protocol, wherein said first transmission path and said second transmission path are considered as one composite transmission path during optimization, and wherein said expected distortion is determined based on a probability that one packet is lost on either transmission paths, and wherein said optimizing unit (142, 142') is operative to determine said first number of packets ($N_A$) from said available packet numbers ($N_{Ai}$) of said first transmission path and said second number of packets ($N_B$) from said available numbers of packets ($N_{Bi}$) of said second transmission path during said optimization, said first number of packets ($N_A$) and said second number of packets ($N_B$) being transcoding parameters (145);

wherein said determining of said transcoding parameters comprises determining as transcoding parameter for each datablock part of a plurality of datablock parts of the given number of datablock parts a datablock part specific number ($N_1$ to $N_M$) of packets that are necessary to recover the datablock part ($Layer_1$ to $Layer_M$),

wherein said datablock parts of said plurality of datablock parts ($Layer_1$ to $Layer_M$; $Layer_1$ to $Layer_j$) are each associated to a datablock part specific priority, wherein at least two datablock parts are associated to a different priority,

wherein said determining of said transcoding parameters comprises determining said datablock part specific numbers ($N_1$ to $N_M$) of packets such that a datablock specific number ($N_1$) of packets associated to a datablock part associated to a first priority is smaller than or is at least equal to a datablock specific number ($N_2$) of packets associated to a second datablock part ($Layer_2$) associated to a second priority, when said first priority is higher than said second priority,

wherein said determining of said transcoding parameters comprises determining as transcoding parameter a datablock part specific forward error correction code ($FEC_1$ to $FEC_M$; $FEC_1$ to $FEC_j$) associated to each data block part of said plurality of datablock parts ($Layer_1$ to $Layer_M$; $Layer_1$ to $Layer_j$), wherein said datablock specific FEC codes are determined such that a data block part ($Layer_1$ to $Layer_M$; $Layer_1$ to $Layer_j$) can be recovered based on any combination of said datablock part specific packet number ($N_1$ to $N_j$; $N_1$ to $N_M$) of packets comprising a data segment (411, 412) and/or a code segment (413,414,415) belonging to said respective data block part;

generating a first sequence of packets comprising said first number of packets ($N_A$) for said first description and a second sequence of packets comprising said second number of packets ($N_B$) for said second description based on said transcoding parameters (145),

wherein said generating comprises dividing each of said plurality of data block parts ($Layer_1$ to $Layer_M$; $Layer_1$ to $Layer_j$) into said datablock part specific packet number ($N_1$ to $N_M$; $N_1$ to $N_j$) of said respective data segments,

wherein said generating comprises generating for each of said plurality of datablock parts a datablock part specific number of said code segments based on said respective datablock part specific FEC codes ($FEC_1$ to $FEC_M$; $FEC_1$ to $FEC_j$), wherein said data segments and said code segments belonging to a same datablock part have a same datablock part specific segment size, and each packet of the first sequence of packets and each packet of the second sequence of packets comprises a data segment of said data segments or a code segment of said code segments;

transmitting said first sequence of packets according to said first communication protocol over said first transmission path (132); and

transmitting said second sequence of packets according to said second communication protocol over said second transmission path (134);

wherein said transcoding parameters are determined according to the following objective function:

$$\{N_A, N_B, N_1, N_2, ... N_M\} = \arg\min ED(N_A, N_B, P_A, P_B, N_1, N_2, ... N_M),$$

and where constraints for said minimization are defined as follows:

$$\left\lceil \frac{R_1}{N_1} \right\rceil + \left\lceil \frac{R_2}{N_2} \right\rceil + ... + \left\lceil \frac{R_M}{N_M} \right\rceil \leq L,$$

$$N_A \in \vec{N}_A, N_B \in \vec{N}_B,$$

$$N_1 \leq N_2 \leq ... \leq N_M,$$

$$N_M \leq N_A + N_B,$$

wherein $N_A$ refers to said first number of packets associated to said first description, $N_B$ refers to said second number of packets associated to said second description, M refers to said given number of datablock parts said datablock comprises, $N_1$ to $N_M$ refer to the datablock part specific numbers of data segments each of said plurality of datablock parts is divided into, ED refers to a expected distortion function, L refers to said equal packet length, $R_1$ to $R_M$ refer to datablock part specific lengths of said respective datablock parts, $\vec{N}_A$ refers to all possible first numbers ($N_{Ai}$) of packets of the first transmission oath and $\vec{N}_B$ refers to all possible second numbers ($N_{Bi}$) of the second transmission path.

**33.** A computer program having a program code for performing the inventive method according to claim 32, when the program runs on a computer.


**Patentansprüche**

**1.** Ein Umcodierungsknoten (130, 130') für Mehrfachbeschreibungsumcodierung, wobei der Umcodierungsknoten ein Netzwerkknoten ist, der folgende Merkmale aufweist:

einen Empfänger (148), der wirksam ist, um einen Datenblock (112) als Einzelbeschreibungsdatenblock zu empfangen, wobei der Datenblock (112) eine gegebene Anzahl (M) von Datenblockteilen (Schicht$_1$ - Schicht$_M$) aufweist;

eine Optimierungseinheit (142, 142'), die wirksam ist, um Umcodierungsparameter (145) für eine erste Beschreibung (133,133') und eine zweite Beschreibung (135, 135') eines Datenblocks (112) basierend auf Übertragungswegcharakteristika ($N_{Ai}$,$P_{Ai}$) eines ersten Übertragungswegs (132) und auf Übertragungswegcharakteristika ($N_{Bi}$,$P_{Bi}$) eines zweiten Übertragungswegs (134) zu bestimmen, wobei die Übertragungswegcharakteristika des ersten Wegs verfügbare Paketanzahl- und Paketverlustwahrscheinlichkeitspaare ($N_{Ai}$,$P_{Ai}$) des ersten Übertragungswegs aufweisen, und die Übertragungswegcharakteristika des zweiten Wegs verfügbare Paketzahl- und Paketverlustwahrscheinlichkeitspaare ($N_{Bi}$,$P_{Bi}$) des zweiten Übertragungswegs aufweisen, wobei die erste Beschreibung als eine erste Sequenz von Paketen, die eine erste Anzahl ($N_A$) von Paketen aufweist, unter Verwendung eines ersten Übertragungsprotokolls zu übertragen ist, und die zweite Beschreibung als eine zweite Sequenz von Pakten, die eine zweite Anzahl ($N_B$) von Paketen aufweist, unter Verwendung eines zweiten Übertragungsprotokolls zu übertragen ist, wobei die Pakete der ersten und der zweiten Sequenz von Paketen die gleiche Paketlänge (L) aufweisen, wobei das erste und das zweite Kommunikationsprotokoll unterschiedlich sind, und wobei die Optimierungseinheit (142) ferner wirksam ist, um die Umcodierungsparameter basierend auf einer erwarteten Verzerrung zu bestimmen, wenn dieselben über das erste und das zweite Kommunikationsprotokoll übertragen werden, wobei der erste Übertragungsweg und der zweite Übertragungsweg während der Optimierung als ein zusammengesetzter Übertragungsweg angesehen werden, und wobei die erwartete Verzerrung basierend auf einer Wahrscheinlichkeit bestimmt wird, dass ein Paket auf einem der Übertragungswege verloren geht, und wobei die Optimierungseinheit (142, 142') wirksam ist, um während der Optimierung die erste Anzahl von Paketen ($N_A$) von der verfügbaren Anzahl von Paketen ($N_{Ai}$) des ersten Übertragungswegs und die zweite Anzahl von Paketen ($N_B$) von der verfügbaren Anzahl von Paketen ($N_{Bi}$) des zweiten Übertragungswegs zu bestimmen, wobei die erste Anzahl von Paketen ($N_A$) und die zweite Anzahl von Paketen ($N_B$) Umcodierungsparameter (145) sind,

wobei die Optimierungseinheit wirksam ist, um als Umcodierungsparameter für jeden Datenblockteil einer Mehrzahl von Datenblockteilen der gegebenen Anzahl von Datenblockteilen eine datenblockteilspezifische Anzahl ($N_1$ bis $N_M$) von Paketen zu bestimmen, die notwendig sind, um den Datenblockteil (Schicht$_1$ bis Schicht$_M$) wiederzugewinnen,

wobei die Datenblockteile der Mehrzahl von Datenblockteilen (Schicht$_1$ bis Schicht$_M$) jeweils einer datenblockteilspezifischen Priorität zugeordnet sind, wobei zumindest zwei Datenblockteile einer unterschiedlichen Priorität zugeordnet sind,

wobei die Optimierungseinheit (142, 142') wirksam ist, um die datenblockteilspezifischen Anzahlen ($N_1$ bis $N_M$) von Paketen zu bestimmen, so dass eine datenblockspezifische Anzahl ($N_1$) von Paketen, die einem Datenblockteil zugeordnet sind, der einer ersten Priorität zugeordnet ist, kleiner ist als oder zumindest gleich ist wie eine datenblockspezifische Anzahl ($N_2$) von Paketen, die einem zweiten Datenblockteil (Schicht$_2$) zugeordnet ist, der einer zweiten Priorität zugeordnet ist, wenn die erste Priorität höher ist als die zweite Priorität,

wobei die Optimierungseinheit wirksam ist, um als Umcodierungsparameter einen datenblockteilspezifischen Vorwärtsfehlerkorrekturcode (FEC$_1$ bis FEC$_M$; FEC$_1$ bis FEC$_j$) zu bestimmen, der jedem Datenblockteil der Mehrzahl von Datenblockteilen (Schicht$_1$ bis Schicht$_M$; Schicht$_1$ bis Schicht$_j$) zugeordnet ist, wobei die datenblockspezifischen FEC-Codes bestimmt sind, so dass ein Datenblockteil (Schicht bis Schicht$_M$; Schicht$_1$ bis Schicht$_j$) wiedergewonnen werden kann basierend auf jeder Kombination der datenblockteilspezifischen Paketanzahl ($N_1$ bis $N_j$; $N_1$ bis $N_M$) von Paketen, die ein Datensegment (411, 412) und/oder ein Codesegment (413, 414, 415) aufweisen, das zu dem jeweiligen Datenblockteil gehört;

eine Paketerzeugungseinheit (140,140'), die wirksam ist, um die erste Sequenz von Paketen zu erzeugen, die die erste Anzahl von Paketen ($N_A$) aufweist, für die erste Beschreibung, und die zweite Sequenz von Paketen, die die zweite Anzahl von Paketen ($N_B$) aufweist, für die zweite Beschreibung, basierend auf den Umcodierungsparametem (145),

wobei die Paketerzeugungseinheit (140,140') wirksam ist, um jeden der Mehrzahl von Datenblockteilen (Schicht$_1$ bis Schicht$_M$; Schicht$_1$ bis Schicht$_j$) in die datenblockteilspezifische Paketanzahl ($N_1$ bis $N_M$; $N_1$ bis $N_j$) der jeweiligen Datensegmente zu unterteilen,

wobei die Paketerzeugungseinheit (140,140') wirksam ist, um für jeden der Mehrzahl von Datenblockteilen eine datenblockteilspezifische Anzahl der Codesegmente zu erzeugen, basierend auf den jeweiligen datenblockteilspezifischen FEC-Codes (FEC$_1$ bis FEC$_M$; FEC$_1$ bis FEC$_j$), wobei die Datensegmente und die Codesegmente, die zu einem gleichen Datenblockteil gehören, eine gleiche datenblockteilspezifische Segmentgröße aufweisen, und jedes Paket der ersten Sequenz von Paketen und jedes Paket der zweiten Sequenz von Paketen ein Datensegment der Datensegmente oder ein Codesegment der Codesegmente aufweist; und

eine Sendeeinheit (146), die wirksam ist, um die erste Sequenz von Paketen gemäß dem ersten Kommunikationsprotokoll über den ersten Übertragungsweg (132) zu übertragen, und um die zweite Sequenz von Paketen gemäß dem zweiten Kommunikationsprotokoll über den zweiten Übertragungsweg (134) zu übertragen,

wobei die Optimierungseinheit (142) wirksam ist, um die Umcodierungsparameter gemäß der folgenden Zielfunktion zu bestimmen:

$$\{N_A, N_B, N_1, N_2, ... N_M\} = \arg\min ED\left(N_A, N_B, P_A, P_B, N_1, N_2, ... N_M\right),$$

und wobei Beschränkungen für die Minimierung wie folgt definiert sind:

$$\left\lceil \frac{R_1}{N_1} \right\rceil + \left\lceil \frac{R_2}{N_2} \right\rceil + \ldots + \left\lceil \frac{R_M}{N_M} \right\rceil \le L \,,$$

$$N_A \in \vec{N}_A, N_B \in \vec{N}_B \,,$$

$$N_1 \le N_2 \le \ldots \le N_M \,,$$

$$N_M \le N_A + N_B \,,$$

wobei $N_A$ sich auf die erste Anzahl von Paketen bezieht, die der ersten Beschreibung zugeordnet ist, $N_B$ sich auf die zweite Anzahl von Paketen bezieht, die der zweiten Beschreibung zugeordnet ist, M sich auf die gegebene Anzahl von Datenblockteilen bezieht, die der Datenblock aufweist, $N_1$ bis $N_M$ sich auf die datenblockteilspezifischen Anzahlen von Datensegmenten beziehen, in die jeder der Mehrzahl von Datenblockteile unterteilt ist, ED sich auf eine erwartete Verzerrungsfunktion bezieht, L sich auf die gleiche Paketlänge bezieht, $R_1$, bis $R_M$ sich auf datenblockteilspezifische Längen der jeweiligen Datenblockteile beziehen, $\vec{N}_A$ sich auf alle möglichen ersten Anzahlen ($N_{Ai}$) von Paketen des ersten Übertragungswegs bezieht und $\vec{N}_B$ sich auf alle möglichen zweiten Anzahlen ($N_{Bi}$) des zweiten Übertragungswegs bezieht.

2. Der Umcodierungsknoten gemäß Anspruch 1, bei dem die Optimierungseinheit (142) wirksam ist, um die Umcodierungsparameter zu bestimmten, so dass die erwartete Verzerrung des Datenblocks (112) minimiert ist.

3. Der Umcodierungsknoten gemäß Anspruch 1 oder 2, bei dem die erste Beschreibung (133, 133') und der erste Übertragungsweg (132) einem ersten Kommunikationsprotokoll zugeordnet sind, und die zweite Beschreibung (135, 135') und der zweite Übertragungsweg (134) einem zweiten Kommunikationsprotokoll zugeordnet sind.

4. Der Umcodierungsknoten gemäß einem der Ansprüche 1 bis 3, bei dem die Optimierungseinheit wirksam ist, um die Mehrzahl von Datenblockteilen (Schicht$_1$ bis Schicht$_1$) auszuwählen, so dass eine Anzahl der Mehrzahl von Datenblockteilen kleiner ist als die gegebene Anzahl von Datenblockteilen (Schicht$_1$ bis Schicht$_M$), und um nur Datensegmente und/oder Codesegmente der Mehrzahl von Datenblöcken zum Erzeugen der ersten Sequenz von Paketen zu verwenden.

5. Der Umcodierungsknoten gemäß einem der Ansprüche 1 bis 4, bei dem die Optimierungseinheit wirksam ist, um als Umcodierungsparameter eine erste Anzahl von Paketen ($N_A$) zu verwenden, die der ersten Beschreibung (133,133') zugeordnet ist, und eine zweite Anzahl von Pakten ($N_B$), die der zweiten Beschreibung (135,135') zugeordnet ist; und
wobei die Paketerzeugungseinheit (140, 140') wirksam ist, um eine erste Sequenz von Paketen gleicher Paketlänge zu erzeugen, die der ersten Beschreibung (133, 133') zugeordnet sind, so dass jedes Paket der ersten Sequenz von Paketen von jedem der Mehrzahl von Datenblockteilen eines der Datensegmente oder Codesegmente enthält, die zu dem jeweiligen Datenblockteil gehören, wobei die Anzahl von Paketen, die die Sequenz bilden, gleich ist der ersten Anzahl von Paketen ($N_A$), und eine zweite Sequenz von Paketen gleicher Paketlänge (L), die der zweiten Beschreibung (135, 135') zugeordnet ist, wobei die Anzahl von Paketen, die die erste Sequenz bilden, gleich der zweiten Anzahl von Paketen ist.

6. Der Umcodierungsknoten gemäß einem der Ansprüche 1 bis 5, bei dem die Paketerzeugungseinheit (140, 140') ferner wirksam ist, um die zweite Sequenz von Paketen gleicher Paketlänge (L) zu erzeugen, die der zweiten Beschreibung (135, 135') zugeordnet ist, so dass jedes Paket der zweiten Sequenz von jedem der Mehrzahl von Datenblockteilen ein Datensegment oder Codesegment enthält, das zu dem jeweiligen Datenblockteil gehört, wobei die gleiche Paketlänge gleich der gleichen Paketlänge der ersten Sequenz von Paketen ist.

**7.** Der Umcodierungsknoten gemäß einem der Ansprüche 1 bis 6, bei dem die Optimierungseinheit (142) wirksam ist, um die folgende Definition für die erwartete Verzerrung zu verwenden:

$$ED = \sum_{i=N_A+N_B-N_1+1}^{N_A+N_B} P_r(N_A + N_B, i) \times D(Layer_1) + \sum_{i=N_A+N_B-N_2+1}^{N_A+N_B-N_1} P_r(N_A + N_B, i) \times D(Layer_2)$$

$$+ \sum_{i=N_A+N_B-N_1+1}^{N_A+N_B-N_2} P_r(N_A + N_B, i) \times D(Layer_3) + ... + \sum_{i=N_A+N_B-N_M+1}^{N_A+N_B-N_M-1} P_r(N_A + N_B, i) \times D(Layer_M)$$

$$+ Quelle\_Verzerrung(Schicht_1, Schicht_2, Schicht_3, ..., Schicht_M) ,$$

wobei *(Schicht$_1$, Schicht$_2$, Schicht$_3$, ..., Schicht$_M$)* die Quellenverzerrung des Datenblocks aufgrund von Quantisierungsfehlem ist, wobei D (Schicht$_i$) die zusätzliche Verzerrung ist, wenn *Schicht$_i$* verloren ist, i = *1,2, ...M*, wobei die Wahrscheinlichkeit, dass *i* von $N_A+N_B$ Paketen verloren gehen wie folgt ist:

$$P_r(N_A + N_B, i) = \binom{N_A + N_B}{i} x P^i x (1 - P)^{N_A + N_B - i}$$

wobei P die Wahrscheinlichkeit ist, dass ein Paket auf einem der Wege verloren geht und definiert ist durch:

$$P = P_r = \frac{N_A}{N_A + N_B} \times P_A + \frac{N_B}{N_A + N_B} \times P_B ,$$

und wobei $N_1 N_2, ..., N_M$ die datenblockspezifischen Segmentanzahlen sind.

**8.** Der Umcodierungsknoten gemäß Anspruch 7, bei dem die Optimierungseinheit (142) wirksam ist, um die datenblockspezifische Segmentanzahl ($N_1$ bis $N_M$) basierend auf einem iterativen Lagrange-Verfahren zu bestimmen.

**9.** Der Umcodierungsknoten gemäß Anspruch 7, bei dem die Optimierungseinheit (142) wirksam ist, um die datenblockteilspezifischen Segmentanzahlen ($N_1$ bis $N_M$) basierend auf einem schnellen iterativen Lagrange-Verfahren zu bestimmen, wobei die datenblockteilspezifischen Segmentanzahlen unabhängig minimiert werden beginnend mit dem Minimieren der datenblockteilspezifischen Segmentanzahl ($N_1$) des Datenblockteils, der die höchste Priorität hat.

**10.** Der Umcodierungsknoten gemäß Anspruch 7, bei dem die Optimierungseinheit (142) wirksam ist, um die datenblockteilspezifischen Segmentanzahlen ($N_1$ bis $N_M$) basierend auf einem Greedy-Zuordnungsverfahren zu bestimmen.

**11.** Der Umcodierungsknoten gemäß Anspruch 10, bei dem die Optimierungseinheit (142) wirksam ist, um die folgenden Schritte für das Greedy-Zuordnungsverfahren durchzuführen:

a) Bestimmen einer minimalen datenblockwegspezifischen Anzahl ($N_1$) für jeden der Datenblockteile,
b) Bestimmen eines Steigungswerts, der sich von jedem möglichen Inkrement einer datenblockteilspezifischen Segmentanzahl ($N_i$) ergibt, durch Inkrementieren mit einer variablen Ganzzahlschrittgröße, wobei der Steigungswert definiert ist wie folgt:

$$\text{Steigung(i)} = \frac{D(\text{iteration}(t)) \quad D(\text{iteration}(t \quad 1))}{L(\text{iteration}(t \quad 1)) \quad L(\text{iteration}(t))} \quad , i = 1...M$$

wobei D eine Gesamtverzerrung ist, wobei L jeweils eine Gesamtrate ist und t die Iterationszahl ist,
c) Bestimmen der datenblockteilspezifischen Segmentanzahl ($N_i$), die den Steigungswert minimiert und Inkrementieren der datenblockteilspezifischen Segmentanzahl ($N_i$) durch ihre entsprechende Schrittgröße, und
d) Wiederholen der Schritte b) und c) bis L(Iteration) = L, wobei L die Paketlänge ist.

**12.** Der Umcodierungsknoten gemäß Anspruch 11, bei dem die Optimierungseinheit (142) wirksam ist, um einen dynamischen Greedy-Algorithmus zu verwenden, und um den Datenblock an einem Abschneide-Datenblockteil (Schicht$_j$) abzuschneiden, und die folgenden Schritte für den dynamischen Greedy-Algorithmus durchzuführen:

a) Setzen der Gesamtanzahl von Paketen auf ein gegebenes ganzzahliges Mehrfaches einer möglichen Gesamtpaketanzahl ($N_j$),
b) Bestimmen des Abschneide-Datenblockteils durch Anlegen des Grundalgorithmus gemäß Anspruch 10 und Definieren eines Datenblockteils als Abschneide-Datenblockteil, falls die datenblockteilspezifische Anzahl eines Datenblockteils geringerer Priorität höher ist als die Gesamtpaketanzahl ($N_{j+1} > N$),
c) Anlegen des Grundalgorithmus gemäß Anspruch 10, um die datenblockteilspezifischen Segmentanzahlen ($N_1$ bis $N_M$; $N_1$ bis $N_j$) zu bestimmen;

und wobei die Paketerzeugungseinheit (144) wirksam ist, um keine Datensegmente und/oder Codesegmente von Datenpaketteilen ($N_{j+1}$ bis $N_M$) mit einer geringeren Priorität zum Erzeugen der ersten oder zweiten Beschreibung zu verwenden.

**13.** Der Umcodierungsknoten gemäß einem der Ansprüche 1 bis 12, bei dem die Optimierungseinheit (142) wirksam ist, um eine erwartete Verzerrung zu verwenden, die definiert ist durch eine mittlere Verzerrung und eine Seitenverzerrung, wobei die mittlere Verzerrung die erste und die zweite Beschreibung berücksichtigt und wobei die Seitenverzerrung nur eine der Beschreibungen berücksichtigt.

**14.** Der Umcodierungsknoten gemäß Anspruch 13, bei dem die Optimierungseinheit (142) wirksam ist, um die erwartete Verzerrung basierend auf der folgenden Gleichung zu bestimmen:

$$\text{Erwartete Verzerrung} = D_c + \mu * D_s,$$

wobei $D_c$ die mittlere Verzerrung ist und $D_s$ die Seitenverzerrung ist, und wobei $\mu$ ein Skalierungsfaktor ist.

**15.** Der Umcodierungsknoten gemäß einem der Ansprüche 1 bis 12, bei dem die Optimierungseinheit (142) wirksam ist, um eine erwartete Verzerrung zu verwenden, die durch eine mittlere Verzerrung und eine erste Seitenerzerrung und eine zweite Verzerrung definiert ist, wobei die mittlere Verzerrung die erste Beschreibung und die zweite Beschreibung berücksichtigt, wobei die erste Verzerrung nur die erste Beschreibung berücksichtigt und wobei die zweite Verzerrung nur die zweite Beschreibung berücksichtigt.

**16.** Der Umcodierungsknoten gemäß Anspruch 13, bei dem die Optimierungseinheit (142) wirksam ist, um die erwartete Verzerrung basierend auf der folgenden Gleichung zu bestimmen:

$$\text{Erwartete Verzerrung} = D_c + \mu_1 * Ds_1 + \mu_2 * Ds_2,$$

wobei $D_c$ die mittlere Verzerrung ist und $D_{s1}$ die erste Seitenverzerrung ist und $D_{s2}$ die zweite Seitenverzerrung ist, und wobei $\mu_1$ ein erster Skalierungsfaktor ist und $\mu_2$ ein zweiter Skalierungsfaktor ist.

**17.** Der Umcodierungsknoten gemäß Anspruch 5, bei dem die Optimierungseinheit (142') ferner wirksam ist, um die Umcodierungsparameter zu bestimmen, so dass die erste Anzahl von Paketen ($N_A$), die datenblockteilspezifische Anzahl von Segmenten ($N_1$-$N_j$) und die datenblockteilspezifischen Vorwärtsfehlerkorrekturcodes ($FEC_1$-$FEC_j$) für die Mehrzahl von Datenblockteilen ($Schicht_1$, $Schicht_j$) nur unter Berücksichtigung der ersten Übertragungswegcharakteristika ($N_A$, $P_A$) bestimmt werden, und um die zweite Anzahl von Paketen ($N_B$), zumindest eine andere datenblockteilspezifische Anzahl von Segmenten ($N_{j+1}$, $N_M$) und zumindest einen anderen datenblockteilspezifi-schen FEC-Code ($FEC_{j+1}$ bis $FEC_M$) für zumindest einen Datenblockteil ($Schicht_{j+1}$ bis $Schicht_M$) unter Berücksichtigung der ersten und zweiten Übertragungswegcharakteristika zu bestimmen, wobei die Paketerzeugungseinheit (144') wirksam ist zum

Erzeugen, für den zumindest einen anderen Datenblockteil ($Schicht_{j+1}$ bis $Schicht_M$), einer datenblockteilspezifischen Anzahl ($N_B$) der Codesegmente basierend auf den jeweiligen datenblockteilspezifischen FEC-Codes ($FEC_{j+1}$ bis $FEC_M$), wobei die Datensegmente und die Codesegmente, die zu dem gleichen zumindest einen anderen Datenblockteil gehören, eine gleiche datenblockteilspezifische Segmentgröße haben; und

Erzeugen einer zweiten Sequenz von Paketen gleicher Paketlänge, die der zweiten Beschreibung zugeordnet ist, so dass jedes Paket der zweiten Sequenz von jedem der Mehrzahl von Datenblockteile ($Schicht_1$ bis $Schicht_M$) zumindest einen Teil eines Codesegments enthält, der zu dem jeweiligen Datenblockteil gehört und/oder von dem zumindest einen anderen Datenblockteil ($Schicht_{j+1}$ bis $Schicht_M$) eines der Datensegmente oder Codesegmente enthält, die zu dem jeweiligen zumindest einen anderen Datenblockteil ($Schicht_{j+1}$ bis $Schicht_M$) gehören.

18. Der Umcodierungsknoten gemäß Anspruch 17, bei dem die Optimierungseinheit (142') wirksam ist, um die Umcodierungsparameter zu bestimmen basierend auf der Beschränkung, dass alle Pakete die gleiche Paketlänge (L) haben, und dass Datensegmente oder Codesegmente, die zu der Mehrzahl von Datenblockteilen ($Schicht_1$ bis $Schicht_j$) gehören, in gleich große Untersegmente unterteilt sind, so dass jedes Paket der zweiten Sequenz von Paketen ein Teilsegment von jedem der Mehrzahl von Datenblockteilen ($Schicht_1$ bis $Schicht_M$) aufweist.

19. Der Umcodierungsknoten gemäß Anspruch 18, bei dem die Optimierungseinheit (142') wirksam ist, um die erste Beschreibung basierend auf einer ersten erwarteten Verzerrungsfunktion und die zweite Beschreibung basierend auf einer zweiten erwarteten Verzerrungsfunktion zu bestimmen.

20. Der Umcodierungsknoten gemäß Anspruch 19, bei dem die erste erwartete Verzerrung definiert ist durch:

$$ED(i,t) = \sum_{k=0}^{N_B} \left[ P_r(N_B,k) * \right] \sum_{a=N_A N(Schicht_i)+1}^{N_A N(Schicht_{i-1})} P_r N_A, a) * D(Schicht_{i-1}),$$

mit

$$N(Schicht_i) = maximum(N_i - n\_segment(i,k,t,N(Schicht_{i-1})),$$

wobei ED die erwartete Verzerrung ist, $N_A$ die erste Anzahl von Paketen, $N_B$ die zweite Anzahl von Paketen, D die zusätzliche Verzerrung, $N_i$ die datenblockteilspezifische Anzahl von Segmenten, i ein Index der Datenblockteile, k ein Summierindex, t die Anzahl von Segmenten der Mehrzahl von Datenblockteilen addiert zu der zweiten Beschreibung, und n_Segment die Anzahl von korrekt empfangenen Paketen der zweiten Beschreibung.

21. Umcodierungsknoten gemäß Anspruch 19 oder 20, bei dem die Optimierungseinheit (142') wirksam ist, um die folgende erwartete Verzerrungsfunktion für die zweite Beschreibung zu verwenden:

$$ED(i,t) = \sum_{k=0}^{N_B} \left[ P_r(N_B,k) * ED(k) \right],$$

wobei ED(k)=0, n_segment(i,k,t)$\geq N_B$

$$ED(k) = \sum_{a=o}^{N_A} P_r(N_A, a) * D(Schicht_i), \text{ sonst}$$

sonst

**22.** Umcodierungsknoten gemäß Anspruch 21, bei dem die Optimierungseinheit (142') wirksam ist, um eine Anzahl von Datenblockteilen für jeden Datenblockteil gemäß dem folgenden Greedy-Zuordnungsalgorithmus zu bestimmen, der die folgenden Schritte durchführt:

a) Setzen der Anzahl von übertragenen Teilsegmenten der Mehrzahl von Datenblockteilen und der Anzahl von Segmenten des zumindest einen anderen Datenblockteils (Schicht$_{j+1}$ bis Schicht$_M$) auf Null;
b) Bestimmen, für jeden Datenblockteil, Kosten des Addierens des jeweiligen Teilsegments oder Segments zu der zweiten Beschreibung, wobei die Kosten durch die folgende Gleichung definiert sind:

$$Kosten(i) = \frac{ED(i, t-1) - ED(i, t)}{L(i, t) - L(i, t-1)}$$

wobei i ein Index der Datenblockteile ist, t(i) die Anzahl von Segmenten der Mehrzahl von Datenblockteilen und die Anzahl von Segmenten des zumindest einen anderen Datenblockteils ist, ED(i,t) die erwarteten Verzerrungsfunktionen sind, und L(i,t) eine Rate ist, die einen Teil des Pakets anzeigt, der durch die Segmente oder Teilsegmente besetzt ist bezüglich der festen Paketlänge.
(c) an einem Teilsegment oder Segment für die zwei der zweiten Beschreibung für den Datenblock, der die Kostenfunktion maximiert,
(d) Wiederholen der Schritte (b) und (c) bis die folgende Bedingung erfüllt ist:

$$\sum_{i=1}^{M} L(i, t(i)) = L,$$

wobei L die Paketlänge ist.

**23.** Der Umcodierungsknoten gemäß einem der Ansprüche 1 bis 22, bei dem die Datenblockteile unterteilt werden in Datenabschnitte üblicher Größe (1), wobei die Abschnittsgröße üblich ist für die Datenblockteile, so dass jeder Datenblockteil dargestellt wird durch eine datenblockteilspezifische Anzahl (K$_1$ bis K$_M$) von Abschnitten, und wobei die Optimierungseinheit (142, 142') und die Paketerzeugungseinheit (140, 140') wirksam sind, um die Abschnitte für Optimierung und Paketerzeugung zu verwenden.

**24.** Der Umcodierungsknoten (130,130') gemäß einem der Ansprüche 1 bis 23, bei dem die Paketerzeugungseinheit (140, 140') ferner wirksam ist, um die zweite Sequenz von Paketen zu erzeugen, so dass jedes Paket der zweiten Sequenz nicht in der ersten Sequenz von Paketen enthalten ist.

**25.** Der Umcodierungsknoten gemäß einem der Ansprüche 1 bis 24, bei dem die Optimierungseinheit (142) wirksam ist, um die Umcodierungsparameter für alle oder eine Mehrzahl möglicher Kombinationen der Übertragungswegcharakteristika (N$_{Ai}$, P$_{Ai}$) des ersten Wegs und der Übertragungswegcharakteristika (N$_{Bi}$, P$_{Bi}$) des zweiten Wegs zu bestimmen.

**26.** Der Umcodierungsknoten gemäß einem der Ansprüche 1 bis 25, bei dem die Optimierungseinheit (142, 142') wirksam ist, um die Paketlänge (L) basierend auf einem Datenblocktyp zu bestimmen, zu dem der Datenblock gehört, oder basierend auf dem ersten oder zweiten Übertragungsprotokoll.

**27.** Der Umcodierungsknoten gemäß einem der Ansprüche 1 bis 26, der ferner folgendes Merkmal aufweist:

eine Empfangseinheit (148), die wirksam ist, um den Datenblock (112) über ein drittes Kommunikationsprotokoll zu empfangen.

**28.** Der Umcodierungsknoten gemäß einem der Ansprüche 1 bis 27, der ferner einen Speicher (144) aufweist, der wirksam ist, um die Umcodierungsparameter zu speichern, und wobei die Paketerzeugungseinheit (140, 14') wirksam ist, um die Umcodierungsparameter von der Optimierungseinheit (1420 142') oder dem Speicher (144) zu empfangen.

**29.** Der Umcodierungsknoten gemäß einem der Ansprüche 1 bis 28, bei dem die Optimierungseinheit (142, 142') wirksam ist, um die Umcodierungsparameter für jeden Datenblock einzeln zu bestimmen.

**30.** Der Umcodierungsknoten gemäß einem der Ansprüche 1 bis 29, bei dem die Optimierungseinheit (142, 142') wirksam ist, um zu prüfen, ob die Übertragungswegcharakteristika des ersten und des zweiten Wegs sich geändert haben, und um jedes Mal, wenn sich Übertragungswegcharakteristika geändert haben, Umcodierungsparameter zu bestimmen.

**31.** Der Umcodierungsknoten gemäß einem der Ansprüche 1 bis 30, bei dem die Paketerzeugungseinheit (140, 140') wirksam ist, um einen Anfangsblock zu einem Paket der ersten oder der zweiten Beschreibung hinzuzufügen, wobei der Anfangsblock einen Datenblockidentifizierer aufweist, der dem Datenblock zugeordnet ist, und anders ist als Datenblockidentifizierer von anderen Datenblöcken.

**32.** Ein Verfahren für Mehrfachbeschreibungsumcodierung, das die folgenden Schritte aufweist:

Empfangen eines Datenblocks (112) als Einzelbeschreibungsdatenblock, wobei der Datenblock (112) eine gegebene Anzahl (M) von Datenblockteilen (Schicht$_1$ - Schicht$_M$) aufweist;
Bestimmen von Umcodierungsparametern (145) für eine erste Beschreibung (133,133') und eine zweite Beschreibung (135, 135') des Datenblocks (112) basierend auf Übertragungswegcharakteristika ($N_{Ai}$,$P_{Ai}$) eines ersten Übertragungswegs (132) und auf Übertragungswegcharakteristika ($N_{Bi}$,$P_{Bi}$) eines zweiten Übertragungswegs (134), wobei die Übertragungswegcharakteristika des ersten Wegs verfügbare Paketanzahl- und Paketverlustwahrscheinlichkeitspaare ($N_{Ai}$,$P_{Ai}$) des ersten Übertragungswegs aufweisen, und die Übertragungswegcharakteristika des zweiten Wegs verfügbare Paketanzahl- und Paketverlustwahrscheinlichkeitspaare ($N_{Bi}$,$P_{Bi}$) des zweiten Übertragungswegs aufweisen, wobei die erste Beschreibung als eine erste Sequenz von Paketen, die eine erste Anzahl ($N_A$) von Paketen aufweist, unter Verwendung eines ersten Übertragungsprotokolls zu übertragen ist, und die zweite Beschreibung als eine zweite Sequenz von Paketen, die eine zweite Anzahl ($N_B$) von Paketen aufweist, unter Verwendung eines zweiten Übertragungsprotokolls zu übertragen ist, wobei die Pakete der ersten und der zweiten Sequenz von Paketen die gleiche Paketlänge (L) aufweisen, wobei das erste und das zweite Kommunikationsprotokoll unterschiedlich sind, wobei die Optimierungseinheit (142) ferner wirksam ist, um die Umcodierungsparameter basierend auf einer erwarteten Verzerrung zu bestimmen, wenn dieselben über das erste und das zweite Kommunikationsprotokoll übertragen werden, wobei der erste Übertragungsweg und der zweite Übertragungsweg während der Optimierung als ein zusammengesetzter Übertragungsweg angesehen werden, und wobei die erwartete Verzerrung basierend auf einer Wahrscheinlichkeit bestimmt wird, dass ein Paket auf einem der Übertragungswege verloren geht, und wobei die Optimierungseinheit (142, 142') wirksam ist, um während der Optimierung die erste Anzahl von Paketen ($N_A$) von den verfügbaren Paketanzahlen ($N_{Ai}$) des ersten Übertragungswegs und die zweite Anzahl von Paketen ($N_B$) von der verfügbaren Anzahl von Paketen ($N_{Bi}$) des zweiten Übertragungswegs zu bestimmen, wobei die erste Anzahl von Paketen ($N_A$) und die zweite Anzahl von Paketen ($N_B$) Umcodierungsparameter (145) sind;
wobei das Bestimmen der Umcodierungsparameter das Bestimmen, als Umcodierungsparameter für jeden Datenblockteil einer Mehrzahl von Datenblockteilen der gegebenen Anzahl von Datenblockteilen, einer datenblockteilspezifischen Anzahl ($N_1$ bis $N_M$) von Paketen aufweist, die notwendig sind, um den Datenblockteil (Schicht$_1$ bis Schicht$_M$) wiederzugewinnen,
wobei die Datenblockteile der Mehrzahl von Datenblockteilen (Schicht$_1$ bis Schicht$_M$) jeweils einer datenblockteilspezifischen Priorität zugeordnet sind, wobei zumindest zwei Datenblockteile einer unterschiedlichen Priorität zugeordnet sind,
wobei das Bestimmen der Umcodierungsparameter das Bestimmen der datenblockteilspezifischen Anzahlen (142, 142') von Paketen aufweist, so dass eine datenblockspezifische Anzahl ($N_1$) von Paketen, die einem Datenblockteil zugeordnet sind, der einer ersten Priorität zugeordnet ist, kleiner ist als oder zumindest gleich ist wie eine datenblockspezifische Anzahl ($N_2$) von Paketen, die einem zweiten Datenblockteil (Schicht$_2$) zugeordnet sind, der einer zweiten Priorität zugeordnet ist, wenn die erste Priorität höher ist als die zweite Priorität, wobei das Bestimmen der Umcodierungsparameter das Bestimmen, als Umcodierungsparameter, eines da-

tenblockteilspezifischen Vorwärtsfehlerkorrekturcodes ($FEC_1$ bis $FEC_M$; $FEC_1$ bis $FEC_j$) aufweist, der jedem Datenblockteil der Mehrzahl von Datenblockteilen ($Schicht_1$ bis $Schicht_M$; $Schicht_1$ bis $Schicht_j$) zugeordnet ist, wobei die datenblockspezifischen FEC-Codes bestimmt sind, so dass ein Datenblockteil ($Schicht_1$ bis $Schicht_M$; $Schicht_1$ bis $Schicht_j$) wiedergewonnen werden kann basierend auf jeder Kombination der datenblockteilspezifischen Paketanzahl ($N_1$ bis $N_j$; $N_1$ bis $N_M$) von Paketen, die ein Datensegment (411, 412) und/oder ein Codesegment (413, 414, 415) aufweisen, das zu dem jeweiligen Datenblockteil gehört;

Erzeugen einer ersten Sequenz von Paketen, die die erste Anzahl von Paketen ($N_A$) aufweist, für die erste Beschreibung, und einer zweiten Sequenz von Paketen, die die zweite Anzahl von Paketen ($N_B$) aufweist, für die zweite Beschreibung, basierend auf den Umcodierungsparametern (145),

wobei das Erzeugen das Unterteilen von jedem der Mehrzahl von Datenblockteilen ($Schicht_1$ bis $Schicht_M$; $Schicht_1$ bis $Schicht_j$) in die datenblockteilspezifische Paketanzahl ($N_1$) bis $N_M$; $N_i$ bis $N_j$) der jeweiligen Datensegmente aufweist,

wobei das Erzeugen das Erzeugen, für jeden der Mehrzahl von Datenblockteilen, einer datenblockteilspezifischen Anzahl der Codesegmente aufweist, basierend auf den jeweiligen datenblockteilspezifischen FEC-Codes ($FEC_1$ bis $FEC_M$; $FEC_1$ bis $FEC_j$), wobei die Datensegmente und die Codesegmente, die zu einem gleichen Datenblockteil gehören, eine gleiche datenblockteilspezifische Segmentgröße aufweisen, und jedes Paket der ersten Sequenz von Paketen und jedes Paket der zweiten Sequenz von Paketen ein Datensegment der Datensegmente oder ein Codesegment der Codesegmente aufweist;

Übertragen der ersten Sequenz von Paketen gemäß dem ersten Kommunikationsprotokoll über den ersten Übertragungsweg (132); und

Übertragen der zweiten Sequenz von Paketen gemäß dem zweiten Kommunikationsprotokoll über den zweiten Übertragungsweg (134);

wobei die Umcodierungsparameter gemäß der folgenden Zielfunktion bestimmt werden:

$$\{N_A, N_B, N_1, N_2, ... N_M\} = \arg\min ED(N_A, N_B, P_A, P_B, N_1, N_2, ... N_M),$$

und wobei Beschränkungen für die Minimierung wie folgt definiert sind:

$$\left\lceil \frac{R_1}{N_1} \right\rceil + \left\lceil \frac{R_2}{N_2} \right\rceil + ... + \left\lceil \frac{R_M}{N_M} \right\rceil \le L,$$

$$N_A \in \vec{N}_A, N_B \in \vec{N}_B,$$

$$N_1 \le N_2 \le ... \le N_M,$$

$$N_M \le N_A + N_B,$$

wobei $N_A$ sich auf die erste Anzahl von Paketen bezieht, die der ersten Beschreibung zugeordnet ist, $N_B$ sich auf die zweite Anzahl von Paketen bezieht, die der zweiten Beschreibung zugeordnet ist, M sich auf die gegebene Anzahl von Datenblockteilen bezieht, die der Datenblock aufweist, $N_1$ bis $N_M$ sich auf datenblockteilspezifische Anzahlen von Datensegmenten beziehen, in die jeder der Mehrzahl von Datenblockteile unterteilt ist, ED sich auf eine erwartete Verzerrungsfunktion bezieht, L sich auf die gleiche Paketlänge bezieht, $R_1$ bis $R_M$ sich auf datenblockteilspezifische Längen der jeweiligen Datenblockteile beziehen, $\vec{N}_A$ sich auf alle möglichen ersten Anzahlen ($N_{Ai}$) von Paketen des ersten Übertragungswegs bezieht und $\vec{N}_B$ sich auf alle möglichen zweiten Anzahlen ($N_{Bi}$) des zweiten Übertragungswegs bezieht.

**33.** Ein Computerprogramm mit einem Programmcode zum Durchführen des erfindungsgemäßen Verfahrens gemäß Anspruch 32, wenn das Programm auf einem Computer läuft.

**Revendications**

1. Noeud de transcodage (130,130') pour transcodage par description multiple, le noeud de transcodage étant un noeud de réseau comprenant:

un récepteur (148) opérationnel pour recevoir un bloc de données (112) comme bloc de données par description simple, où ledit bloc de données (112) comprend un nombre donné (M) de parties de bloc de données ($Layer_1$ - $Layer_M$);

une unité d'optimisation (142, 142') opérationnelle pour déterminer les paramètres de transcodage (145) pour une première description (133, 133') et une deuxième description (135, 135') d'un bloc de données (112) sur base de caractéristiques de trajet de transmission ($N_{Ai}$, $P_{Ai}$) d'un premier trajet de transmission (132) et de caractéristiques de trajet de transmission ($N_{Bi}$, $P_{Bi}$) d'un deuxième trajet de transmission (134), où lesdites caractéristiques de trajet de transmission dudit premier trajet comprennent des paires de numéro de paquet disponible et de probabilité de perte de paquet ($N_{Ai}$, $P_{Ai}$) dudit premier trajet de transmission et lesdites caractéristiques de trajet de transmission dudit deuxième trajet comprennent des paires de numéro de paquet disponible et de probabilité de perte de paquet ($N_{Bi}$, $P_{Bi}$) dudit deuxième trajet de transmission, où ladite première description doit être transmise comme première séquence de paquets comprenant un premier nombre ($N_A$) de paquets à l'aide d'un premier protocole de transmission et ladite deuxième description doit être transmise comme deuxième séquence de paquets comprenant un deuxième nombre ($N_B$) de paquets à l'aide d'un deuxième protocole de transmission, où lesdits paquets de ladite première et de ladite deuxième séquence de paquets ont la même longueur de paquet (L), où ledit premier et ledit deuxième protocole de communication sont différents, et où ladite unité d'optimisation (142) est par ailleurs opérationnelle pour déterminer lesdits paramètres de transcodage sur base d'une distorsion attendue lorsqu'ils sont transmis via ledit premier et ledit deuxième protocole communication, où ledit premier trajet de transmission et ledit deuxième trajet de transmission sont considérés comme étant un seul trajet de transmission composite pendant l'optimisation, et où ladite distorsion attendue est déterminée sur base d'une probabilité qu'un paquet soit perdu sur l'un ou l'autre trajet de transmission, et où ladite unité d'optimisation (142, 142') est opérationnelle pour déterminer ledit premier nombre de paquets ($N_A$) parmi lesdits nombres de paquets ($N_{Ai}$) disponibles dudit premier trajet de transmission et ledit deuxième nombre de paquets ($N_B$) parmi lesdits nombres de paquets ($N_{Bi}$) disponibles dudit deuxième trajet de transmission pendant ladite optimisation, ledit premier nombre de paquets ($N_A$) et ledit deuxième nombre de paquets ($N_B$) étant des paramètres de transcodage (145),

dans lequel ladite unité d'optimisation est opérationnelle pour déterminer, comme paramètre de transcodage pour chaque partie de bloc de données d'une pluralité de parties de bloc de données du nombre donné de parties de bloc de données, un nombre $N_1$ à $N_M$) de paquets spécifique à la partie de bloc de données qui sont nécessaires pour récupérer la partie de bloc de données ($Layer_1$ à $Layer_M$),

dans lequel lesdites parties de bloc de données de ladite pluralité de parties de bloc de données ($Layer_1$ à $Layer_M$) sont associées, chacune, à une priorité spécifique à la partie de bloc de données, où au moins deux parties de bloc de données sont associées à une priorité différente,

dans lequel ladite unité d'optimisation (142, 142') est opérationnelle pour déterminer lesdits nombres ($N_1$ à $N_M$) de paquets spécifiques à la partie de bloc de données de sorte qu'un nombre (Ni) de paquets spécifique au bloc de données associé à une partie de bloc de données associée à une première priorité est inférieur ou est au moins égal à un nombre ($N_2$) de paquets spécifique à un bloc de données associé à une deuxième partie de bloc de données ($Layer_2$) associée à une deuxième priorité lorsque ladite première priorité est supérieure à ladite deuxième priorité,

dans lequel ladite unité d'optimisation est opérationnelle pour déterminer, comme paramètre de transcodage, un code de correction d'erreur en avant spécifique à la partie de bloc de données ($FEC_1$ à $FEC_M$; $FEC_1$ à $FEC_j$) associé à chaque partie de bloc de données de ladite pluralité de parties de bloc de données ($Layer_1$ à $Layer_M$; $Layer_1$ à $Layer_j$), où lesdits codes FEC spécifiques au bloc de données sont déterminés de sorte qu'une partie de bloc de données ($Layer_1$ à $Layer_M$; $Layer_1$ à $Layer_j$) puisse être récupérée sur base de toute combinaison dudit nombre ($N_1$ à $N_J$; $N_1$ à $N_M$) de paquets spécifique à ladite partie de bloc de données comprenant un segment de données (411, 412) et/ou un segment de code (413, 414, 415) appartenant à ladite partie de bloc de données respective;

une unité de génération de paquets (140, 140') opérationnelle pour générer ladite première séquence de paquets comprenant ledit premier nombre de paquets ($N_A$) pour ladite première description et ladite deuxième séquence de paquets comprenant ledit deuxième nombre de paquets ($N_B$) pour ladite deuxième description sur base desdits paramètres de transcodage (145),

dans lequel ladite unité de génération de paquets (140, 140') est opérationnelle pour diviser chacune de ladite pluralité de parties de bloc de données (Layer$_1$ à Layer$_M$; Layer$_1$ à Layer$_j$) en ledit nombre de paquets (N$_1$ à N$_M$; N$_1$ à N$_j$) spécifique à la partie de bloc de données desdits segments de données respectifs,

dans lequel ladite unité de génération de paquets (140, 140') est opérationnelle pour générer, pour chacune de ladite pluralité de parties de bloc de données, un nombre spécifique à la partie de bloc de données de dits segments de code sur base desdits codes FEC (FEC$_1$ à FEC$_M$; FEC$_1$ à FEC$_j$) spécifiques à la partie de bloc de données respectifs, où lesdits segments de données et lesdits segments de code appartenant à une même partie de bloc de données ont une même grandeur de segment spécifique à la partie de bloc de données, et chaque paquet de la première séquence de paquets et chaque paquet de la deuxième séquence de paquets comprend un segment de données parmi lesdits segments de données ou un segment de code parmi lesdits segments de code; et

une unité de transmission (146) opérationnelle pour transmettre ladite première séquence de paquets selon ledit premier protocole de communication via ledit premier trajet de transmission (132), et pour transmettre ladite deuxième séquence de paquets selon ledit deuxième protocole de communication via ledit deuxième trajet de transmission (134),

dans lequel ladite unité d'optimisation (142) est opérationnelle pour déterminer lesdits paramètres de transcodage selon la fonction objective suivante:

$$\{N_A, N_B, N_1, N_2, ... N_M\} = \arg\min ED(N_A, N_B, P_A, P_B, N_1, N_2, ... N_M),$$

et où les contraintes pour ladite minimisation sont définies comme suit:

$$\left\lceil \frac{R_1}{N_1} \right\rceil + \left\lceil \frac{R_2}{N_2} \right\rceil + ... + \left\lceil \frac{R_M}{N_M} \right\rceil \leq L,$$

$$N_A \in \vec{N}_A, N_B \in \vec{N}_B,$$

$$N_1 \leq N_2 \leq ... \leq N_M,$$

$$N_M \leq N_A + N_B,$$

où N$_A$ se réfère audit premier nombre de paquets associé à ladite première description, N$_B$ se réfère audit deuxième nombre de paquets associé à ladite deuxième description, M se réfère audit nombre donné de parties de bloc de données que comprend ledit bloc de données, N$_1$ à N$_M$ se réfèrent aux nombres de segments de données spécifiques à la partie de bloc de données dans lesquels est divisée chacune de ladite pluralité de parties de bloc de données, ED se réfère à une fonction de distorsion attendue, L se réfère à ladite longueur de paquet égale, R$_1$ à R$_M$ se réfèrent aux longueurs spécifiques à la partie de bloc de données desdites parties de bloc de données respectives, $\vec{N}_A$ se réfère à tous les premiers nombres possibles (N$_{Ai}$) de paquets du premier trajet de transmission et $\vec{N}_B$ se réfère à tous les deuxièmes nombres possibles (N$_{Bi}$) du deuxième trajet de transmission.

2. Noeud de transcodage selon la revendication 1, dans lequel ladite unité d'optimisation (142) est opérationnelle pour déterminer lesdits paramètres de transcodage de sorte que soit minimisée ladite distorsion attendue dudit bloc de données (112).

3. Noeud de transcodage selon la revendication 1 ou 2, dans lequel ladite première description (133, 133') et ledit premier trajet de transmission (132) sont associés à un premier protocole de communication et ladite deuxième description (135, 135') et ledit deuxième trajet de transmission (134) sont associés à un deuxième protocole de communication.

4. Noeud de transcodage selon l'une des revendications 1 à 3, dans lequel ladite unité d'optimisation est opérationnelle pour sélectionner ladite pluralité de parties de bloc de données (Layer$_1$ à Layer$_j$) de sorte qu'un nombre de ladite pluralité de parties de bloc de données soit inférieur audit nombre donné de parties de bloc de données (Layer$_1$ à Layer$_M$), et pour utiliser uniquement les segments de données et/ou les segments de code de ladite pluralité de parties de bloc de données pour générer ladite première séquence de paquets.

5. Noeud de transcodage selon l'une des revendications 1 à 4, dans lequel ladite unité d'optimisation est opérationnelle pour utiliser, comme paramètre de transcodage, un premier nombre de paquets ($N_A$) associé à ladite première description (133, 133') et un deuxième nombre de paquets ($N_B$) associé à ladite deuxième description (135, 135'); et dans lequel ladite unité de génération de paquets (140, 140') est opérationnelle pour générer une première séquence de paquets de longueur de paquet égale associée à ladite première description (133, 133'), de sorte que chaque paquet de ladite première séquence de paquets contienne, de chacune de ladite pluralité de parties de bloc de données, l'un desdits segments de données ou segments de code appartenant à ladite partie de bloc de données respective, le nombre de paquets formant ladite séquence étant égal audit premier nombre de paquets ($N_A$), et une deuxième séquence de paquets de longueur de paquet égale (L) associée à ladite deuxième description (135, 135'), le nombre de paquets formant ladite première séquence étant égal audit deuxième nombre de paquets.

6. Noeud de transcodage selon l'une des revendications 1 à 5, dans lequel ladite unité de génération de paquets (140, 140') est par ailleurs opérationnelle pour générer ladite deuxième séquence de paquets de longueur de paquet égale (L) associée à ladite deuxième description (135, 135') de sorte que chaque paquet de ladite deuxième séquence contienne, de chacune de ladite pluralité de parties de bloc de données, un segment de données ou segment de code appartenant à ladite partie de bloc de données respective, la longueur de paquet égale étant égale à la longueur de paquet égale de la première séquence de paquets.

7. Noeud de transcodage selon l'une des revendications 1 à 6, dans lequel ladite unité d'optimisation (142) est opérationnelle pour utiliser la définition suivante pour ladite distorsion attendue:

$$ED = \sum_{i=N_A+N_B-N_1+1}^{N_A+N_B} P_r(N_A+N_B,i) \times D(Layer_1) + \sum_{i=N_A+N_B-N_2+1}^{N_A+N_B-N_1} P_r(N_A+N_B,i) \times D(Layer_2)$$

$$+ \sum_{i=N_A+N_B-N_1+1}^{N_A+N_B-N_2} P_r(N_A+N_B,i) \times D(Layer_3) + ... + \sum_{i=N_A+N_B-N_M+1}^{N_A+N_B-N_M-1} P_r(N_A+N_B,i) \times D(Layer_M)$$

$$+ Source\_Distortion(Layer_1, Layer_2, Layer_3, ..., Layer_M)$$

où *Source_Distortion (Layeri$_1$, Layer$_2$, Layer$_3$, ..., Layer$_M$)* est la distorsion de source du bloc de données due à des erreurs de

quantification, où D(Layer$_1$) est la distorsion additionnelle lorsque *Layer$_i$* est perdu, i = 1, 2, ..., *M*, où la probabilité que i des $N_A$+$N_B$ paquets soient perdus est:

$$P_r(N_A+N_B,i) = \binom{N_A+N_B}{} x P^i x (1-P)^{N_A+N_B,i}$$

où P est la probabilité qu'un paquet soit perdu sur l'un ou l'autre trajet et est défini par:

$$P = P_r = \frac{N_A}{N_A+N_B} \times P_A + \frac{N_B}{N_A+N_B} P_B$$

et où $N_1$, $N_2$, ..., $N_M$ sont lesdits nombres de segments spécifiques au bloc de données.

8. Noeud de transcodage selon la revendication 7, dans lequel ladite unité d'optimisation (142) est opérationnelle pour déterminer ledit nombre de bloc de segments ($N_1$ à $N_M$) spécifiques aux données sur base d'une méthode de Lagrange itérative.

9. Noeud de transcodage selon la revendication 7, dans lequel ladite unité d'optimisation (142) est opérationnelle pour déterminer ledit nombre de segments ($N_1$ à $N_M$) spécifique à ladite partie de bloc de données sur base d'une méthode de Lagrange itérative rapide, où lesdits nombres de segments spécifiques à la partie de bloc de données sont minimisés indépendamment en commençant par la minimisation du nombre de segments ($N_1$) spécifique à la partie de bloc de données de la partie de bloc de données ayant la priorité la plus élevée.

10. Noeud de transcodage selon la revendication 7, dans lequel ladite unité d'optimisation (142) est opérationnelle pour déterminer lesdits nombres de segments ($N_1$ à $N_M$) spécifiques à la partie de bloc de données sur base d'une méthode d'attribution de Greedy.

11. Noeud de transcodage selon la revendication 10, dans lequel ladite unité d'optimisation (142) est opérationnelle pour effectuer les étapes suivantes pour ladite méthode d'attribution de Greedy:

   a) déterminer un nombre minimum ($N_1$) spécifique au trajet de bloc de données pour chacune desdites parties de bloc de données,
   b) déterminer une valeur de pente qui résulte de chaque incrément possible d'un nombre de segments ($N_i$) spécifique à la partie de bloc de données en incrémentant par une grandeur d'étape de nombre entier variable, où ladite valeur de pente est définie comme suit:

$$slope(i) = \frac{D(\text{iteration}(t)) - D(\text{iteration}(t-1))}{L(\text{iteration}(t-1)) - L(\text{iteration}(t))} \qquad , i = 1...M$$

   où D est une distorsion totale, où L est une vitesse totale respectivement et t est le nombre d'itérations,
   c) déterminer le nombre de segments ($N_i$) spécifique à la partie de bloc de données qui minimise la valeur de pente et incrémenter le nombre de segments ($N_i$) spécifique à la partie de bloc de données par sa grandeur d'étape correspondante, et
   d) répéter les étapes b) et c) jusqu'à ce que L(iteration) = L, où L est ladite longueur de paquet.

12. Noeud de transcodage selon la revendication 11, dans lequel ladite unité d'optimisation (142) est opérationnelle pour utiliser un algorithme de Greedy dynamique et pour tronquer le bloc de données à une partie de bloc de données de troncature (Layerj) et pour effectuer les étapes suivantes pour l'algorithme de Greedy dynamique:

   a) régler le nombre total de paquets à un multiple entier donné d'un nombre total de paquets possible (Nj),
   b) determiner la partie de bloc de données de troncature en appliquant l'algorithme de base selon la revendication 10, et définir une partie de bloc de données comme partie de bloc de données de troncature au cas où le nombre spécifique à la partie de bloc de données d'une partie de bloc de données de priorité inférieure est supérieur audit nombre total de paquets ($N_{j+1} > N$),
   c) appliquer l'algorithme de base selon la revendication 10, pour déterminer les nombres de segments ($N_1$ à $N_M$; $N_1$ à $N_j$) spécifiques à la partie de bloc de données;

   et dans lequel ladite unité de génération de paquets (144) est opérationnelle pour ne pas utiliser les segments de données et/ou les segments de code des parties de paquet de données ($N_{j+1}$ à $N_M$) ayant une priorité inférieure pour générer ladite première ou deuxième description.

13. Noeud de transcodage selon l'une des revendications 1 à 12, dans lequel ladite unité d'optimisation (142) est opérationnelle pour utiliser une distorsion attendue qui est définie par une distorsion centrale et une distorsion latérale, où ladite distorsion centrale considère ladite première et ladite deuxième description et où ladite distorsion latérale considère uniquement l'une desdites descriptions.

**14.** Noeud de transcodage selon la revendication 13, dans lequel ladite unité d'optimisation (142) est opérationnelle pour déterminer ladite distorsion attendue sur base de l'équation suivante:

$$Distorsion\ Attendue = D_c + \mu * D_{s.}$$

où $D_c$ est la distorsion centrale, et $D_s$ est ladite distorsion latérale, et où $\mu$ est un facteur d'échelonnement.

**15.** Noeud de transcodage selon l'une des revendications 1 à 12, dans lequel ladite unité d'optimisation (142) est opérationnelle pour utiliser une distorsion attendue qui est définie par une distorsion centrale et une première distorsion latérale et une deuxième distorsion, où ladite distorsion centrale considère ladite première description et ladite deuxième description, où ladite première distorsion considère uniquement ladite première description et où ladite deuxième distorsion considère uniquement ladite deuxième description.

**16.** Noeud de transcodage selon la revendication 13, dans lequel ladite unité d'optimisation (142) est opérationnelle pour déterminer ladite distorsion attendue sur base de l'équation suivante:

$$Distorsion\ Attendue = D_c + \mu_1 * Ds_1 + \mu_2 * Ds_2 \,,$$

où $D_c$ est la distorsion centrale, et $D_{s1}$ est ladite première distorsion latérale et $D_{s2}$ est ladite deuxième distorsion latérale, et où $\mu_1$ est un premier facteur d'échelonnement et $\mu_2$ est un deuxième facteur d'échelonnement.

**17.** Noeud de transcodage selon la revendication 5, dans lequel ladite unité d'optimisation (142') est par ailleurs opérationnelle pour déterminer lesdits paramètres de transcodage de sorte que ledit premier nombre de paquets ($N_A$), ledit nombre de segments ($N_1$ - $N_j$) spécifique à la partie de bloc de données et lesdits codes de correction d'erreur en avant spécifiques à la partie de bloc de données ($FEC_1$ - $FEC_j$) pour ladite pluralité de parties de bloc de données ($Layer_1$, $Layer_j$) soient déterminés en ne considérant que lesdites premières caractéristiques de trajet de transmission ($N_A$, $P_A$), et pour déterminer ledit deuxième nombre de paquets ($N_B$), au moins un autre nombre de segments ($N_{j+1}$, $N_M$) spécifique à la partie de bloc de données et au moins un autre code FEC ($FEC_{j+1}$ à $FEC_M$) spécifique à la partie de bloc de données pour au moins une autre partie de bloc de données ($Layer_{j+1}$ à $Layer_M$) en considérant les caractéristiques dudit premier et dudit deuxième trajet de transmission,
dans lequel ladite unité de génération de paquets (144') est opérationnelle pour
générer pour ladite au moins une autre partie de bloc de données ($Layer_{j+1}$ à $Layer_M$) un nombre ($N_B$) de dits segments de code spécifique à la partie de bloc de données sur base desdits codes FEC ($FEC_{j+1}$ à $FEC_M$) spécifiques à la partie de bloc de données respectifs, où lesdits segments de données et lesdits segments de code appartenant à la même au moins une autre partie de bloc de données ont une même grandeur de segment spécifique à la partie de bloc de données; et
générer une deuxième séquence de paquets de longueur de paquet égale associée à ladite deuxième description, de sorte que chaque paquet de ladite deuxième séquence contienne, de chacune de ladite pluralité de parties de bloc de données ($Layer_1$ à $Layer_M$), au moins une partie d'un segment de code appartenant à ladite partie de bloc de données respective et/ou contienne, de ladite au moins une autre partie de bloc de données ($Layer_{j+1}$ à $Layer_M$), l'un desdits segments de données ou segments de code appartenant à ladite au moins une autre partie de bloc de données respective ($Layer_{j+1}$ à $Layer_M$).

**18.** Noeud de transcodage selon la revendication 17, dans lequel ladite unité d'optimisation (142') est opérationnelle pour déterminer les paramètres de transcodage sur base de la contrainte que tous les paquets aient la même longueur de paquet (L) et que les segments de données ou segments de code appartenant à ladite pluralité de parties de bloc de données ($Layer_1$ à $Layer_j$) soient divisés en sous-segments de même grandeur, de sorte que chaque paquet de la deuxième séquence de paquets comprenne un sous-segment de chacune de ladite pluralité de parties de bloc de données ($Layer_1$, à $Layer_M$).

**19.** Noeud de transcodage selon la revendication 18, dans lequel ladite unité d'optimisation (142') est opérationnelle pour déterminer ladite première description sur base d'une première fonction de distorsion attendue et ladite deuxième description sur base d'une deuxième fonction de distorsion attendue.

**20.** Noeud de transcodage selon la revendication 19, dans lequel ladite première distorsion attendue est définie par:

$$ED(i,t) = \sum_{k=0}^{N_B} \left[ P_r(N_B, k) * \right] \sum_{a=N_A-N(Layer_i)+1}^{N_A-N(Layer_{i-1})} P_r N_A, a) * D(Layer_{i-1}),$$

avec

$$N\ (Layer_i) = maximum(N_i - n\_segment\ (i, k, t, N\ (Layer_{i-1})),$$

où ED est la distorsion attendue, $N_A$ est le premier nombre de paquets, $N_B$ est le deuxième nombre de paquets, D est la distorsion additionnelle, $N_i$ est le nombre de segments spécifique à la partie de bloc de données, i est un indice de parties de bloc de données, k est un indice d'addition, t est le nombre de segments de ladite pluralité de parties de bloc de données ajoutés à ladite deuxième description et n_segment est le nombre de paquets reçus correctement de ladite deuxième description.

**21.** Noeud de transcodage selon la revendication 19 ou 20, dans lequel ladite unité d'optimisation (142') est opérationnelle pour utiliser la fonction de distorsion attendue suivante pour la deuxième description:

$$ED(i,t) = \sum_{k=0}^{N_B} \left[ P_r(N_B, k) * ED(k) \right]$$

où *ED(k) = 0, n_segment(i, k, t)* ≥ $N_B$

$$ED(k) = \sum_{a=0}^{N_A-N(Layer_{i-1})} P_r(N_A, a) * D(Layer_i) \quad autrement$$

*autrement*

**22.** Noeud de transcodage selon la revendication 21, dans lequel ladite unité d'optimisation (142') est opérationnelle pour déterminer un nombre de parties de bloc de données pour chaque partie de bloc de selon l'algorithme d'attribution de Greedy suivante en réalisant les étapes suivantes:

  a) régler à zéro le nombre de sous-segments de ladite pluralité de parties de bloc de données et le nombre de segments de ladite au moins une autre partie de bloc de données (Layer$_{j+1}$ à Layer$_M$) transmis;
  b) déterminer, pour chaque partie de bloc de données, un coût de l'addition dudit sous-segment ou segment respectif à ladite deuxième description, où ledit coût est défini par l'équation suivante:

$$cost(i) = \frac{ED(i,t-1) - ED(i,t)}{L(i,t) - L(i,t-1)}$$

  où i est un indice desdites parties de bloc de données, t(i) est ledit nombre de segments de ladite pluralité de parties de bloc de données et ledit nombre de segments de ladite au moins une autre partie de bloc de données, ED(i,t) sont lesdites fonctions de distorsion attendue, et L(i,t) est un taux indiquant une partie dudit paquet occupée par lesdits segments ou sous-segments par rapport à la longueur de paquet fixe,
  c) ajouter un sous-segment ou segment à ladite deuxième description pour la partie de bloc de données qui maximise ladite fonction de coût,
  d) répéter les étapes (b) et (c) jusqu'à ce que soit remplie la condition suivante:

$$\sum_{i=1}^{M} L(i,t(i)) = L$$

où L est la longueur de paquet.

23. Noeud de transcodage selon l'une des revendications 1 à 22, dans lequel lesdites parties de bloc de données sont divisées en segments de données de grandeur commune (1), ladite grandeur de segment étant commune auxdites parties de bloc de données, de sorte que chaque partie de bloc de données soit représentée par un nombre ($K_1$ à $K_M$) de segments spécifique à la partie de bloc de données, et dans lequel ladite unité d'optimisation (142, 142') et ladite unité de génération de paquets (140, 140') sont opérationnelles pour utiliser lesdits segments pour optimisation et génération de paquets.

24. Noeud de transcodage (130, 130') selon l'une des revendications 1 à 23, dans lequel ladite unité de génération de paquets (140, 140') est par ailleurs opérationnelle pour générer ladite deuxième séquence de paquets de sorte que chaque paquet de ladite deuxième séquence ne soit pas contenu dans ladite première séquence de paquets.

25. Noeud de transcodage selon l'une des revendications 1 à 24, dans lequel ladite unité d'optimisation (142) est par ailleurs opérationnelle pour déterminer lesdits paramètres de transcodage pour toutes ou une pluralité de combinaisons possibles desdites caractéristiques de trajet de transmission ($N_{Ai}$, $P_{Ai}$) dudit premier trajet et desdites caractéristiques de trajet de transmission ($N_{Bi}$, $P_{Bi}$) dudit deuxième trajet.

26. Noeud de transcodage selon l'une des revendications 1 à 25, dans lequel ladite unité d'optimisation (142, 142') est opérationnelle pour déterminer ladite longueur de paquet (L) sur base d'un type de bloc de données auquel appartient ledit bloc de données ou sur base dudit premier ou deuxième protocole de transmission.

27. Noeud de transcodage selon l'une des revendications 1 à 26, comprenant par ailleurs:

une unité de réception (148) opérationnelle pour recevoir ledit bloc de données (112) via un troisième protocole de communication.

28. Noeud de transcodage selon l'une des revendications 1 à 27, comprenant par ailleurs une mémoire (144) opérationnelle pour mémoriser lesdits paramètres de transcodage, et dans lequel ladite unité de génération de paquets (140, 14') est opérationnelle pour recevoir lesdits paramètres de transcodage de ladite unité d'optimisation (142, 142') ou de ladite mémoire (144).

29. Noeud de transcodage selon l'une des revendications 1 à 28, dans lequel ladite unité d'optimisation (142, 142') est opérationnelle pour déterminer lesdits paramètres de transcodage pour chaque bloc de données individuellement.

30. Noeud de transcodage selon l'une des revendications 1 à 29, dans lequel ladite unité d'optimisation (142, 142') est opérationnelle pour vérifier si lesdites caractéristiques de trajet de transmission dudit premier et dudit deuxième trajet ont changé et pour déterminer les paramètres de transcodage chaque fois que lesdites caractéristiques de trajet de transmission ont changé.

31. Noeud de transcodage selon l'une des revendications 1 à 30, dans lequel ladite unité de génération de paquets (140, 140') est opérationnelle pour ajouter un en-tête à un paquet de ladite première ou de ladite deuxième description, ledit en-tête comprenant un identificateur de bloc de données qui est associé audit bloc de données et différent d'identificateurs d'autres blocs de données.

32. Procédé de transcodage par description multiple, comprenant les étapes suivantes:

recevoir un bloc de données (112) comme bloc de données par description simple, où ledit bloc de données (112) comprend un nombre donné (M) de parties de bloc de données (Layer$_1$- Layer$_M$);
déterminer les paramètres de transcodage (145) pour une première description (133, 133') et une deuxième description (135, 135') d'un bloc de données (112) sur base de caractéristiques de trajet de transmission ($N_{Ai}$, $P_{Ai}$) d'un premier trajet de transmission (132) et de caractéristiques de trajet de transmission ($N_{Bi}$, $P_{Bi}$) d'un deuxième trajet de transmission (134), où lesdites caractéristiques de trajet de transmission dudit premier trajet comprennent des paires de numéro de paquet disponible et de probabilité de perte de paquet ($N_{Ai}$, $P_{Ai}$) dudit premier trajet de transmission et lesdites caractéristiques de trajet de transmission dudit deuxième trajet comprennent des paires de numéro de paquet disponible et de probabilité de perte de paquet ($N_{Bi}$, $P_{Bi}$) dudit deuxième trajet de transmission, où ladite première description doit être transmise comme première séquence de paquets comprenant un premier nombre ($N_A$) de paquets à l'aide d'un premier protocole de transmission et ladite deuxième description doit être transmise comme deuxième séquence de paquets comprenant un deuxième nombre ($N_B$) de paquets à l'aide d'un deuxième protocole de transmission, où lesdits paquets de ladite première et de ladite deuxième séquence de paquets ont la même longueur de paquet (L), où ledit premier et ledit deuxième protocole de communication sont différents, et où ladite unité d'optimisation (142) est par ailleurs opérationnelle pour déterminer lesdits paramètres de transcodage sur base d'une distorsion attendue lorsqu'ils sont transmis via ledit premier et ledit deuxième protocole communication, où ledit premier trajet de transmission et ledit deuxième trajet de transmission sont considérés comme étant un seul trajet de transmission composite pendant l'optimisation, et où ladite distorsion attendue est déterminée sur base d'une probabilité qu'un paquet soit perdu sur l'un ou l'autre trajet de transmission, et où ladite unité d'optimisation (142, 142') est opérationnelle pour déterminer ledit premier nombre de paquets ($N_A$) parmi lesdits nombres de paquets ($N_{Ai}$) disponibles dudit premier trajet de transmission et ledit deuxième nombre de paquets ($N_B$) parmi lesdits nombres de paquets ($N_{Bi}$) disponibles dudit deuxième trajet de transmission pendant ladite optimisation, ledit premier nombre de paquets ($N_A$) et ledit deuxième nombre de paquets ($N_B$) étant des paramètres de transcodage (145),

dans lequel ladite détermination desdits paramètres de transcodage comprend le fait de déterminer, comme paramètre de transcodage pour chaque partie de bloc de données d'une pluralité de parties de bloc de données du nombre donné de parties de bloc de données, un nombre ($N_1$ à $N_M$) de paquets spécifique à la partie de bloc de données qui sont nécessaires pour récupérer la partie de bloc de données (Layer$_1$ à Layer$_M$),

dans lequel lesdites parties de bloc de données de ladite pluralité de parties de bloc de données (Layer$_1$ à Layer$_M$ ; Layer$_1$ à Layer$_j$) sont associées, chacune, à une priorité spécifique à la partie de bloc de données, où au moins deux parties de bloc de données sont associées à une priorité différente,

dans lequel ladite détermination desdits paramètres de transcodage comprend le fait de déterminer lesdits nombres ($N_1$ à $N_M$) de paquets spécifiques à la partie de bloc de données de sorte qu'un nombre ($N_i$) de paquets spécifique au bloc de données associé à une partie de bloc de données associée à une première priorité est inférieur ou est au moins égal à un nombre ($N_2$) de paquets spécifique à un bloc de données associé à une deuxième partie de bloc de données (Layer$_2$) associée à une deuxième priorité lorsque ladite première priorité est supérieure à ladite deuxième priorité,

dans lequel ladite détermination desdits paramètres de transcodage comprend le fait de déterminer, comme paramètre de transcodage, un code de correction d'erreur en avant spécifique à la partie de bloc de données (FEC$_1$ à FEC$_M$; FEC$_1$ à FEC$_j$) associé à chaque partie de bloc de données de ladite pluralité de parties de bloc de données (Layer$_1$ à Layer$_M$; Layer$_1$ à Layer$_j$), où lesdits codes FEC spécifiques au bloc de données sont déterminés de sorte qu'une partie de bloc de données (Layer$_1$ à Layer$_M$; Layer$_1$ à Layer$j$) puisse être récupérée sur base de toute combinaison dudit nombre ($N_1$ à $N_J$; $N_1$ à $N_M$) de paquets spécifique à ladite partie de bloc de données comprenant un segment de données (411, 412) et/ou un segment de code (413, 414, 415) appartenant à ladite partie de bloc de données respective;

générer une première séquence de paquets comprenant ledit premier nombre de paquets ($N_A$) pour ladite première description et une deuxième séquence de paquets comprenant ledit deuxième nombre de paquets ($N_B$) pour ladite deuxième description sur base desdits paramètres de transcodage (145),

dans lequel ladite génération comprend le fait de diviser chacune de ladite pluralité de parties de bloc de données (Layer$_1$ à Layer$_M$; Layer$_1$ à Layer$_j$) en ledit nombre de paquets ($N_1$ à $N_M$; $N_1$ à $N_j$) spécifique à la partie de bloc de données desdits segments de données respectifs,

dans lequel ladite génération comprend le fait de générer, pour chacune de ladite pluralité de parties de bloc de données, un nombre spécifique à la partie de bloc de données de dits segments de code sur base desdits codes FEC (FEC$_1$ à FEC$_M$; FEC$_1$ à FEC$_j$) spécifiques à la partie de bloc de données respectifs, où lesdits segments de données et lesdits segments de code appartenant à une même partie de bloc de données ont une même grandeur de segment spécifique à la partie de bloc de données, et chaque paquet de la première séquence de paquets et chaque paquet de la deuxième séquence de paquets comprend un segment de données parmi lesdits segments de données ou un segment de code parmi lesdits segments de code;

transmettre ladite première séquence de paquets selon ledit premier protocole de communication via ledit premier trajet de transmission (132), et

transmettre ladite deuxième séquence de paquets selon ledit deuxième protocole de communication via ledit deuxième trajet de transmission (134);

dans lequel lesdits paramètres de transcodage sont déterminés selon la fonction objective suivante:

$$\{N_A, N_B, N_1, N_2, ... N_M\} = \arg\min ED(N_A, N_B, P_A, P_B, N_1, N_2, ... N_M),$$

et où les contraintes pour ladite minimisation sont définies comme suit:

$$\left\lceil \frac{R_1}{N_1} \right\rceil + \left\lceil \frac{R_2}{N_2} \right\rceil + ... + \left\lceil \frac{R_M}{N_M} \right\rceil \le L,$$

$$N_A \in \vec{N}_A, N_B \in \vec{N}_B$$

$$N_1 \le N_2 \le ... \le N_M,$$

$$N_M \le N_A + N_B,$$

où $N_A$ se réfère audit premier nombre de paquets associé à ladite première description, $N_B$ se réfère audit deuxième nombre de paquets associé à ladite deuxième description, M se réfère audit nombre donné de parties de bloc de données que comprend ledit bloc de données, $N_1$ à $N_M$ se réfèrent aux nombres de segments de données spécifiques à la partie de bloc de données dans lesquels est divisée chacune de ladite pluralité de parties de bloc de données, ED se réfère à une fonction de distorsion attendue, L se réfère à ladite longueur de paquet égale, $R_1$ à $R_M$ se réfèrent aux longueurs spécifiques à la partie de bloc de données desdites parties de bloc de données respectives, $\vec{N}_A$ se réfère à tous les premiers nombres possibles ($N_{Ai}$) de paquets du premier trajet de transmission et $\vec{N}_B$ se réfère à tous les deuxièmes nombres possibles ($N_{Bi}$) du deuxième trajet de transmission.

**33.** Programme d'ordinateur ayant un code de programme pour réaliser le procédé de l'invention selon la revendication 32 lorsque le programme est exécuté sur un ordinateur.

FIG 1A

EP 1 931 148 B1

130, 130´

**FIG 1B**

150, 150´

**FIG 1C**

1010 — Define constraints for Multiple Description Transcoding (MDT)

1020 — Determine packet budgets ($N_A$, $N_B$) for transmission paths (A, B)

1030 — Optimize Allocation of packets ($N_0$, $N_{p1}$,..., $N_{B7}$)

1040 — Select FEC code based on packet budgets and allocation ($N_A + N_B$, $N_i$)

1050 — Submit Multiple Description Transcoding parameters to packet generating unit

FIG 1D

1010 ⌇ ┌─────────────────────────┐
       │   Define constraints for    │
       │   Multiple Description       │
       │   Transcoding (MDT)          │
       └─────────────────────────┘

1025 ⌇ ┌─────────────────────────┐
       │  Optimize packet budgets     │
       │  and packet allocation       │
       │  $(N_A, N_B, N_0, N_{p1}, ..., N_{b7})$ │
       └─────────────────────────┘

1040 ⌇ ┌─────────────────────────┐
       │     Select FEC code          │
       │   $(N_A + N_B, N_i)$ based    │
       │   on packet budgets and      │
       │     packet allocation        │
       └─────────────────────────┘

1050 ⌇ ┌─────────────────────────┐
       │   Submit MDT parameters      │
       │   to packet generating unit  │
       └─────────────────────────┘

## FIG 1E

1110 — Define constraints for
Multi-User Multiple
Description
Transcoding (MU-MDT)

1120 — Optimize packet budgets
and packet allocation
for the first Description

1130 — Optimize packet budgets
and packet allocation
for the second Description

1140 — Select FEC code for the first
and the second
Description

1150 — Submit MU-MDT
parameters to packet
generating unit

FIG 1F

FIG 2

FIG 3

## MDVT-Iterative Lagrange

**FIG 4**

## MDVT-Iterative Lagrange

R-D curve, P frame

**FIG 6**

**FIG 7**

FIG 8

FIG 9

MDVT

Legend:
- Greedy 5%
- Greedy 15%
- Greedy 30%
- Lagrange 5%
- Lagrange 15%
- Lagrange 30%

X-axis: Redundancy (%)
Y-axis: PSNR GOP (dB)

FIG 10

Dynamic Greedy Algorithm

Legend:
- N 5%
- N 15%
- N 30%
- 2N 5%
- 2N 15%
- 2N 30%
- 4N 5%
- 4N 10%
- 4N 30%
- 8N 5%
- 8N 15%
- 8N 30%

X-axis: Redundancy (%)
Y-axis: PSNR GOP (dB)

FIG 11A

FIG 11B

FIG 12A

FIG 13

FIG 12B

FIG 12C

FIG 14C

FIG 14D

Site Distortion

FIG 15A

Central Distortion

FIG 15B

## FIG 16A

**Site Distortion**

## FIG 15B

**Central  Distortion**

## FIG 17

## FIG 18

FIG 19

FIG 20

FIG 21

FIG 22

FIG 23A

FIG 23B

FIG 23C

## FIG 24

## FIG 25

FIG 26

FIG 27

MDTV – Temporary path outage

FIG 28

MDTV – Temporary path outage

FIG 29

FIG 30

FIG 31

FIG 32

FIG 33A

FIG 33B

## User 1

**FIG 34**

## User 2

**FIG 35**

User 1

FIG 36

User 2

FIG 37

User 1

FIG 38

User 2

FIG 39

FIG 40

# FIG 41A

$L_1$     $L_2$     $L_3$

Layer 1     Layer 2     Layer 3

410    420

411   421   431

430

412   422   432

441

Description 1

133

413   423   433

442

FEC

443

FEC   FEC

Description 2

135

444

414   424   434

FEC   FEC   FEC

445

415   425   435

# FIG 41B

$L_1$     $L_2$     $L_3$

Layer1     Layer2     Layer3

410    l    420    l    l    430

417    427    437

Packet 1
461

$K_2/3$    $K_3/4$

$K_1/2$

$K_2$

FEC

$K_1$

FEC

$K_3$

FEC

FEC    FEC    FEC

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20050210356 A1

### Non-patent literature cited in the description

- **YUN XIN et al.** Digital Video Transcoding. *Proceedings of the IEEE,* January 2005, vol. 93 (1
- **J.G APOSTOLOPOULOS.** Reliable Video Communication over Lossy Packet Networks using Multiple State Encoding and Path diversity. *Proc. Visual Communications and Image Processing,* January 2001, 392-409
- **G. WANG et al.** FEC-based Scalable Multiple Description Coding for Overlay Network Streaming. *CCNC,* 2005
- **W. TU ; W. KELLERER ; E. STEINBACH.** Rate-Distortion Optimized Video Frame Dropping on Active Network Nodes. *Packet Video Workshop 2004,* December 2004
- **Y. SHOHAM ; A. GERSHO.** Efficient bit allocation for an arbitrary set of quantizers. *IEEE Trans. Acoust., Speech, Signal Processing,* September 1988, vol. 36, 1445-1453
- **A. V. TRUSHKIN.** Bit number distribution upon quantization of a multivariate random variable. *Problems of Information Transmission,* 1980, vol. 16, 76-79
- **P. CHOU ; H. WANG ; V. PADMANABHAN.** Layered Multiple Description Coding. *Proc. Packet Video Workshop,* April 2003
- **V. STANKOVIC ; R. HAMZAOUI ; Z. XIONG.** Robust Layered Multiple Description Coding of Scalable Media Data for Multicast. *IEEE Signal Processing Letters,* February 2005, vol. 12, 154-157